(19) Europäisches Patentamt
European Patent Office
Office européen des brevets

(11) **EP 0 969 421 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
***G07B 17/00*** *(2006.01)*

(21) Anmeldenummer: **99250339.1**

(22) Anmeldetag: **09.09.1994**

(54) **Verfahren zur Verbesserung der Sicherheit von Frankiermaschinen**

Method for improving the security of franking machines

Procédé pour l'amélioration de la sécurité des machines à affranchir

(84) Benannte Vertragsstaaten:
**CH DE FR GB IT LI**

(30) Priorität: **21.12.1993 DE 4344476**

(43) Veröffentlichungstag der Anmeldung:
**05.01.2000 Patentblatt 2000/01**

(62) Dokumentnummer(n) der früheren Anmeldung(en) nach Art. 76 EPÜ:
**94250223.8 / 0 660 269**

(73) Patentinhaber: **Francotyp-Postalia GmbH**
**16547 Birkenwerder (DE)**

(72) Erfinder:
• **Bischoff, Enno**
**13189 Berlin (DE)**
• **Günther, Stefan**
**13465 Berlin (DE)**
• **Kubatzki, Ralf**
**10405 Berlin (DE)**
• **Kruschinski, Marcus**
**10405 Berlin (DE)**
• **Reisinger, Frank**
**16515 Oranienburg (DE)**
• **Rieckhoff, Peter, Dr.**
**10555 Berlin (DE)**
• **Freytag, Claus**
**10587 Berlin (DE)**
• **Wagner, Andreas**
**13503 Berlin (DE)**
• **Windel, Harald**
**14197 Berlin (DE)**

(56) Entgegenhaltungen:
EP-A- 0 194 660       GB-A- 2 233 937
US-A- 4 347 506       US-A- 4 549 281
US-A- 4 812 965       US-A- 5 142 577

**Beschreibung**

Die Erfindung betrifft ein Verfahren zur Verbesserung der Sicherheit von Frankiermaschinen, in der im Oberbegriff des Anspruchs 1 angegebenen Art.

Eine Frankiermaschine erzeugt in der Regel einen Aufdruck in einer mit der Post vereinbarten Form rechtsbündig, parallel zur oberen Kante des Postgutes beginnend mit dem Inhalt Postwert im Poststempel, Datum im Tagesstempel und Stempelabdrucke für Werbeklischee und ggf. Sendungsart im Wahldruckstempel. Der Postwert, das Datum und die Sendungsart bilden hierbei die entsprechend dem Poststück einzugebenden variablen Informationen.

Beim Postwert handelt es sich meist um die vom Absender vorausbezahlte Beförderungsgebühr (Franko), die einen wiederauffüllbaren Guthabenregister entnommen und zum Freimachen der Postsendung verwendet wird. Im Gegensatz dazu wird beim Kontokorrentverfahren ein Register in Abhängigkeit von den mit dem Postwert vorgenommenen Frankierungen lediglich hochgezählt und in regelmäßigen Abständen, von einem Postinspektor abgelesen. Grundsätzlich ist jede vorgenommene Frankierung abzurechnen und jede Manipulation, welche zu einer nichtabgerechneten Frankierung führt, muß verhindert werden.

Eine bekannte Frankiermaschine ist mit mindestens einem Eingabemittel, einem Ausgabemittel, einem Ein/ Ausgabe-Steuermodul, einer Programm-, Daten- und insbesondere die Abrechnungsregister tragenden Speichereinrichtung, einer Steuereinrichtung und einem Druckermodul ausgerüstet. Bei einem Druckermodul mit Druckmechanik müssen auch Maßnahmen ergriffen werden, damit im ausgeschalteten Zustand die Druckmechanik nicht für unabgerechnete Abdrucke mißbraucht werden kann.

Die Erfindung betrifft insbesondere Frankiermaschinen, die einen vollelektronischen erzeugten Abdruck zum Frankieren von Postgut einschließlich Abdruck eines Werbeklischees liefern. Das hat zur Folge, daß nur noch im eingeschalteten Zustand ein nicht abgerechnetes gültiges Frankieren verhindert werden muß.

Bei einer aus der US 4 746 234 bekannten Frankiermaschine werden feste und variable Informationen in Speichermitteln (ROM, RAM) gespeichert, um diese dann, wenn ein Brief auf dem Transportpfad vor der Druckposition einen Mikroschalter betätigt, mittels eines Mikroprozessors auszulesen und um ein Drucksteuersignal zu bilden. Beide sind elektronisch zu einem Druckbild zusammengesetzt und werden durch Thermotransferdruckmittel auf einen zu frankierenden Briefumschlag ausgedruckt.

Es wurde auch bereits ein Verfahren zum Steuern des spaltenweisen Druckens eines Postwertzeichenbildes in einer Frankiermaschine vorgeschlagen EP 578 042 A2, welches getrennt voneinander in graphische Pixelbilddaten umgesetzte feste und variable Daten während des spaltenweisen Druckens zusammensetzt. Es wäre daher schwierig, ohne großen und teuren Aufwand eine Manipulation am Drucksteuersignal vorzunehmen, wenn das Drucken mit einer hohen Geschwindigkeit erfolgt.

Andererseits umfaßt die Speichereinrichtung mindestens einen nichtflüchtigen Speicherbaustein, der das aktuell verbliebene Restguthaben enthält, welches daraus resultiert, daß von einem früher in die Frankiermaschine geladenen Guthaben der jeweilige zu druckenden Portowert abgezogen wird. Die Frankiermaschine blockiert, wenn das Restguthaben Null ist.

Bekannte Frankiermaschinen enthalten in mindestens einem Speicher drei relevante Postregister für verbrauchten Summenwert (steigendes Register), noch verfügbares Restguthaben (fallendes Register) und Register für eine Kontrollsumme. Die Kontrollsumme wird mit der Summe aus verbrauchten Summenwert und aus verfügbaren Guthaben verglichen. Bereits damit ist eine Überprüfung auf richtige Abrechnung möglich.

In der US 4 251 874 wird ein mechanisches Druckwerk, das zum Drucken voreingestellt werden muß, mit einer Detektoreinrichtung verwendet, um die Voreinstellung zu überwachen. Ferner sind im elektronischen Abrechnungssystem Mittel zum Feststellen von Fehlern in Daten- und Steuersignalen vorgesehen. Erreicht diese Fehlerzahl einen vorgegebenen Wert, wird der weitere Betrieb der Frankiermaschine unterbrochen. Der plötzliche Ausfall der Frankier-maschine ist aber für den Frankiermaschinenbenutzer nachteilig. Bei einem nichtmechanischen Druckprinzip sind andererseits kaum solche internen Fehler zu erwarten und bei einem schweren Fehler ist die Frankiermaschine ohnehin sowieso sofort abzuschalten. Außerdem wird die Sicherheit gegenüber einer Manipulation der Frankiermaschine dadurch kaum größer, indem die Frankiermaschine nach einer vorbestimmten Fehleranzahl abgeschaltet wird.

Aus der US 4 785 417 ist eine Frankiermaschine mit einer Programmsequenzüberwachung bekannt. Der korrekte Ablauf eines größeren Programmstücks wird mittels eines jedem Programmteil zugeordneten speziellen Codes kontrolliert, der bei Aufruf des Programmstücks in einer bestimmten Speicherzelle im RAM abgelegt wird. Es wird nun überprüft, ob der in der vorgenannten Speicherzelle abgelegte Code im gerade ablaufenden Programmteil immer noch vorhanden ist. Würde bei einer Manipulation der Lauf eines Programmteils unterbrochen und ein anderer Programmteil läuft ab, kann durch eine solche Kontrollfrage ein Fehler festgestellt werden.

Der Vergleich kann aber nur im Hauptablauf durchgeführt werden. Nebenabläufe, beispielsweise sicherheitsrelevante Berechnungen, welche von mehreren Hauptabläufen benutzt werden, können durch eine solche Überwachung auf Ausführung des Programmteils jedoch nicht kontrolliert werden, weil die Programmkontrolle unabhängig vom Programmablauf erfolgt. Wird auf der Basis von erlaubten Programmteilen und Nebenabläufen so manipuliert, daß Nebenabläufe zusätzlich in Hauptabläufe eingebunden oder aus lezteren weggelassen werden oder auf Nebenabläufe verzweigt wird, dann würde kein Fehler festgestellt werden, da weder die Länge des Programmteils festgestellt, noch festgestellt werden kann, welcher Programmzweig wie oft durchlaufen wurde.

Bei bekannten Frankiermaschinen sind bereits weitere Sicherheitsmaßnahmen, wie Wegbrechschrauben und gekapselte abgeschirmte Sicherheitsgehäuse, zum Schutz vor der unbefugten Öffnung des Sicherheitsgehäuses üblich.

Ein Sicherheitsgehäuse für Frankiermaschinen, welches innere Sensoren aufweist, ist aus der DE 41 29 302 A1 bekannt. Die Sensoren sind hierbei mit einer Batterie verbundene Schalter, welche beim Öffnen des Sicherheitsgehäuses aktiv werden, um einen das Restwertguthaben speichernden Speicher (fallendes Postregister) durch Unterbrechen der Energiezufuhr zu löschen. Es ist bekanntlich aber nicht vorhersagbar, welchen Zustand ein spannungsloser Speicherbaustein beim Wiederkehr der Spannung einnimmt. Somit könnte auch ein nicht bezahltes höheres Restguthaben entstehen. Andererseits kann nicht ausgeschlossen werden, daß sich auf oben genannte Weise, das Restwertguthaben zumindest teilweise entlädt. Das wäre aber bei einer Inspektion nachteilig, da das Restwertguthaben, welches vom Frankiermaschinennutzer bezahlt worden war, auch wieder geladen werden muß, die Höhe dieses Restguthabens jedoch durch o.g. Einflüsse verfälscht sein kann. Schließlich ist der Beschreibung nicht entnehmbar, wie verhindert werden kann, daß ein Manipulator ein nicht bezahltes Restguthaben wiederherstellt.

Es ist bereits in der US 4 812 965 ein Ferninspektionssystem für Frankiermaschinen vorgeschlagen worden, welches auf speziellen Mitteilungen im Abdruck von Poststücken, die der Zentrale zugesandt werden müssen, oder auf einer Fernabfrage über MODEM basiert. Sensoren innerhalb der Frankiermaschine sollen jede vorgenommene Verfälschungshandlung detektieren, damit in zugehörigen Speichern ein Flag gesetzt werden kann, falls in die Frankiermaschine zu Manipulationszwecken eingegriffen wurde. Ein solcher Eingriff könnte erfolgen, um ein nicht bezahltes Guthaben in die Register zu laden.

Bei Feststellung einer Manipulation wird die Frankiermaschine während der Ferninspektion über Modem durch ein von der Datenzentrale ausgehendes Signal gesperrt.

Eine geschickte Manipulation könnte aber andererseits darin bestehen, nach der Herstellung von nicht abgerechneten Frankieraufdrucken, das Flag und die Register in den ursprünglichen Zustand zurückzuversetzen. Eine solche Manipulation wäre über Ferninspektion durch die Datenzentrale nicht erkennbar, wenn diese rückgängig gemachte Manipulation vor der Ferninspektion lag. Auch der Empfang der Postkarte von der Datenzentrale, auf welche eine zu Inspektionszwecken vorzunehmende Frankierung erfolgen soll, gestattet dem Manipulator die Frankiermaschine in ausreichender Zeit in den ursprünglichen Zustand zurückzuversetzen. Damit ist also noch keine höhere Sicherheit erreichbar.

Der Nachteil eines solchen Systems besteht darin, daß nicht verhindert werden kann, daß ein genügend qualifizierter Manipulator, welcher in die Frankiermaschine einbricht, seine hinterlassenen Spuren nachträglich beseitigt, indem die Flags gelöscht werden. Bei einer späteren Ferninspektion kann dann kein Fehler bzw. Manipulationsversuch festgestellt werden.

Weiterhin ist es in Verbindung mit der Fernabfrage von Registerständen bekannt, von einer Datenzentrale über eine Fernwertvorgabe eine Wiederaufladeinformation zur Frankiermaschine zu übertragen, um in das Register für das Restguthaben (Restwert) ein Guthaben nachzuladen. Es versteht sich von selbst, daß hierfür geeignete Sicherheitsmaßnahmen getroffen werden müssen, damit das in der Frankiermaschine gespeicherte Guthaben nicht in unbefugter Art und Weise aufgestockt werden kann. Die vorgenannten Lösungen gegen Mißbrauch und Fälschungsversuche zu schützen, erfordert einen zusätzlichen materiellen und zeitlichen Aufwand.

Üblich sind auch Schlüssel und ein Zahlenschloß um den Zugriff auf die Frankiermaschine zu erschweren.

Eine entsprechende Sicherheitsmaßnahme ist auch aus dem US 4 549 281 bekannt. Hier erfolgt ein Vergleich einer internen in einem nichtflüchtigen Register gespeicherten festen Kombination mit einer eingegebenen externen Kombination, wobei nach einer Anzahl an Fehlversuchen, d.h. Nichtidentität der Kombinationen, die Frankiermaschine mittels einer Hemmungselektronik gesperrt wird.

Nach US 4 835 697 kann zur Verhinderung eines unautorisierten Zugriffs auf die Frankiermaschine eine Kombination grundsätzlich gewechselt werden.

In der US 4 812 994 soll ein unautorisierter Zugriff einer Benutzung der Frankiermaschine darüber hinaus durch Sperrung der Frankiermaschine bei Falscheingabe eines vorbestimmten Paßwortes verhindert werden. Außerdem kann die Frankiermaschine mittels Paßwort und entsprechender Eingabe über Tastatur so eingestellt werden, daß ein Frankieren nur während eines vorbestimmten Zeitintervalls bzw. Tageszeiten möglich ist.

Das Paßwort kann durch einen Personalcomputer über MODEM, durch eine Chipkarte oder manuell in die Frankiermaschine eingegeben werden. Nach positivem Vergleich mit einem in der Frankiermaschine gespeicherten Paßwort wird die Frankiermaschine freigegeben. Im Steuermodul der Abrechnungseinheit ist ein Sicherheitsmodul (EPROM) integriert. Als weitere Sicherheitsmaßnahme ist ein Verschlüsselungsmodul (separater Mikroprozessor oder Programm für FM-CPU basierend auf DES-oder RSA-Code) vorgesehen, der eine den Portowert, die Teilnehmernummer, eine Transaktionsnummer und ähnliches umfassende Erkennungsnummer im Frankierstempel erzeugt. Bei genügend krimineller Energie könnte aber auch ein Paßwort ausgeforscht und samt Frankiermaschine in den Besitz eines Manipulators gebracht werden.

Aus der US 4 864 506 ist bekannt, daß wenn der Wert des Guthabens im fallenden Register unter einem Schwellwert liegt und eine vorbestimmte Zeit erreicht ist, eine Kommunikation zur entfernten Datenzentrale von der Frankiermaschine aufgenommen wird. Es ist vorgesehen, daß die Datenzentrale zum Empfang von Registerdaten und zur Kontrolle, ob die Frankiermaschine noch an eine bestimmte Telefonnummer angeschlossen ist, die Verbindung mit der Frankiermaschine nach einer definierten Zeitdauer aufnimmt und die Frankiermaschine nur zu vorbestimmten Zeiten antwortet. Außerdem ist vorgesehen, vor einer Guthabennachladung in die Frankiermaschine, zur Autorisierung durch die Datenzentrale die Identitätsnummer der Frankiermaschine und die Werte im fallenden und steigenden Register abzufragen.

Weiterhin ist aus o.g. Patent bekannt, daß die Kommunikation der Datenzentrale mit der Frankiermaschine nicht auf bloße Guthabenübertragung in die Frankiermaschine beschränkt zu bleiben braucht. Vielmehr wird im Falle einer Abmeldung der Frankiermaschine die Kommunikation der Datenzentrale mit der Frankiermaschine zur Übertragung des Restguthabens der Frankiermaschine in die Datenzentrale genutzt. Der Wert im fallenden Postregister der Frankiermaschine ist dann Null, was die Frankiermaschine wirksam außer Betrieb setzt.

Darüber hinaus ist aus der EP 388 840 A2 eine vergleichbare Sicherheitstechnik für ein Setzen einer Frankiermaschine bekannt, um diese von Daten zu säubern, ohne daß die Frankiermaschine zur Herstellerfirma transportiert werden muß. Auch hier ist die Sicherheit allein von der Verschlüsselung der übertragenen Code abhängig.

Aus der US 5 077 660 ist außerdem eine Methode zum Wechsel der Konfiguration der Frankiermaschine bekannt, wobei die Frankiermaschine mittels geeigneter Eingabe über eine Tastatur vom Betriebsmode in einen Konfigurationsmode umgeschaltet und eine neue Metertypnummer eingegeben werden kann, welche der gewünschten Anzahl an Merkmalen entspricht. Die Frankiermaschine generiert einen Code für die Kommunikation mit dem Computer der Datenzentrale und die Eingabe der Identifikationsdaten und der neuen Metertypnummer in vorgenannten Computer, der ebenfalls einen entsprechenden Code zur Übermittlung und Eingabe in die Frankiermaschine generiert, in der beide Code verglichen werden. Bei Übereinstimmung beider Code wird die Frankiermaschine konfiguriert und in den Betriebsmode umgeschaltet. Die Datenzentrale hat dadurch vom jeweils eingestellten Metertyp für die entsprechende Frankiermaschine immer genaue Aufzeichnungen. Jedoch ist die Sicherheit allein von der Verschlüsselung der übertragenen Code abhängig.

Aus der EP 516 403 A2 ist bekannt, die in der Vergangenheit protokollierten und in einem Speicher gespeicherten Fehler der Frankiermaschine regelmäßig zu einem entfernten Fehleranalysecomputer zur Auswertung zu übertragen. Eine solche Ferninspektion erlaubt eine frühe Warnung vor einem auftretenden Fehler und ermöglicht weitere Maßnahmen (Service) zu ergreifen.

Allein dies bietet noch kein ausreichendes Kriterium für eine Manipulation. Selbst wenn im Datenzentrum eine zusätzliche Ermittlung hinsichtlich eines Nutzers einer Frankiermaschine erfolgen würde, die vom Nutzer über das Inspektionsdatum hinaus weiterbetrieben wurde, könnte aus diesen Informationen noch nicht auf eine in Fälschungsabsicht vorgenommene Manipulation geschlußfolgert werden, wenn sich die Frankiermaschine nicht regelmäßig meldet. Eine Ursache für ein unregelmäßiges Melden bei der Datenzentrale kann auch ein schwankendes Postaufkommen sein.

Aus der US 4 811 234 ist bekannt, die Transaktionen verschlüsselt durchzuführen und dabei die Register der Frankiermaschine abzufragen und die Registerdaten der Datenzentrale zu übermitteln, um einen zeitlichen Bezug der Verringerung des im Register gespeicherten verfügungsberechtigten Betrages anzuzeigen. Einerseits identifiziert sich die Frankiermaschine bei der Datenzentrale, wenn ein voreinstellbarer Schwellwert erreicht ist, mittels ihres verschlüsselten Registerinhaltes.

Andererseits modifiziert die Datenzentale durch entsprechende Berechtigungssignale den gewünschten Frankierbetrag, bis zu dem frankiert werden darf. Die Verschlüsselung ist somit die einzige Sicherheit gegen eine Manipulation der Registerstände. Wenn also ein Manipulator zwar ordnungsgemäß immer den gleichen Betrag in gleichen zeitlichen Intervallen lädt, aber zwischenzeitlich mit der manipulierten Frankiermaschine einen viel höheren Betrag frankiert, als er bezahlt hat, kann die Datenzentrale keine Manipulation feststellen.

Die gesicherte Nachladung einer Frankiermaschine mit einem Guthaben wurde in US 3 255 439 einerseits bereits mit einer automatischen Signalübertragung von der Frankiermaschine zur Datenzentrale verbunden, wenn immer eine vorbestimmte Geldmittelsumme, welche frankiert wurde, oder Stückzahl an bearbeiteten Poststücken oder eine vorbestimmte Zeitperiode erreicht wurde.

Alternativ kann ein der Geldmittelsumme, Stückzahl oder Zeitperiode entsprechendes Signal übermittelt werden. Dabei erfolgt die Kommunikation mittels binärer Signale über miteinander über eine Telefonleitung verbundene Konverter. Die Maschine erhält eine ebenso gesicherte Nachladung entsprechend der Kreditbalance und blockiert in dem Fall, wenn kein Kredit nachgeliefert wird. Für die Übermittlung der Daten ist eine entsprechende Verschlüsselung erforderlich. Einem erhöhten Sicherheitsbedürfnis gegenüber einer Manipulation der Frankiermaschine kann mit dieser Lösung allein aber noch nicht entsprochen werden.

Gemäß der GB 22 33 937 A und US 5 181 245 kommuniziert die Frankiermaschine periodisch mit der Datenzentrale. Ein Blockiermittel gestattet der Frankiermaschine nach Ablauf einer vorbestimmten Zeit bzw. nach einer vorbestimmten Anzahl an Operationszyklen, zu blockieren und liefert eine Warnung an den Benutzer. Zum Freischalten muß von außen ein verschlüsselter Code eingegeben werden, welcher mit einem intern erzeugten verschlüsselten Code verglichen wird. Um zu verhindern, daß falsche Abrechnungsdaten an die Datenzentrale geliefert werden, werden in die Verschüsselung des vorgenannten Codes die Abrechnungsdaten mit einbezogen. Nachteilig ist, daß die Warnung zugleich mit dem Blockieren der Frankiermaschine erfolgt, ohne daß der Benutzer eine Möglichkeit hat, sein Verhalten rechtzeitig entsprechend zu ändern und die Datenzentrale vorher anruft.

Aus der US 5 243 654 ist eine Frankiermaschine bekannt, wo die laufenden von Uhr/Datumsbaustein gelieferten Zeitdaten mit gespeicherten Stillegungszeitdaten verglichen werden. Ist die gespeicherte Stillegungszeit durch die laufende Zeit erreicht, wird die Frankiermaschine deaktiviert, das heißt ein Drucken verhindert.

Bei Verbindungsaufnahme mit einer Datenzentrale, welche die Abrechnungsdaten aus dem steigenden Register ausliest, wird der Frankiermaschine ein verschlüsselter Kombinationswert übermittelt und eine neue Frist gesetzt, wodurch die Frankiermaschine wieder betriebsfähig gemacht wird. Dabei ist der Verbrauchssummenbetrag, der das verbrauchte Porto summiert enthält und von der Datenzentrale gelesen wird, ebenfalls Bestandteil des verschlüsselt übermittelten Kombinationswertes. Nach der Entschlüsselung des Kombinationswertes wird der Verbrauchssummenbetrag abgetrennt und mit dem in der Frankiermaschine gespeicherten Verbrauchssummenbetrag verglichen. Ist der Vergleich positiv, wird die Sperre der Frankiermaschine automatisch aufgehoben.

Durch diese Lösung wird erreicht, daß sich die Frankiermaschine bei der Datenzentrale periodisch meldet, um Abrechnungsdaten zu übermitteln. Es sind jedoch Benutzungsfälle durchaus denkbar, wo das zu frankierende Postaufkommen schwankt (Saisonbetrieb) . In diesen Fällen würde in nachteiliger Weise die Frankiermaschine unnötig oft blockiert werden.

Es war die Aufgabe zu lösen, die Nachteile des Standes der Technik zu überwinden und einen signifikanten Zuwachs an Sicherheit ohne eine außerordentliche Inspektion vor Ort zu erreichen. Dabei soll zwischen autorisiertem Öffnen (Service, Inspektion) und unautorisiertem Öffnen (Manipulationsabsicht) unterschieden und die Manipulationssicherheit erhöht werden. Eine weitere Aufgabe ist es, die Sicherheit bei einer Kommunikation mit dem Datenzentrum zu verbessern, wenn Daten in beiden Richtungen übermittelt werden.

Die Aufgabe wird mit den kennzeichnenden Merkmalen des Anspruchs 1 gelöst.

Die erfindungsgemäße Lösung beruht einerseits auf der Erkenntnis, daß nur zentral in einer Datenzentrale gespeicherte Daten vor einer Manipulation hinreichend geschützt werden können. Ein signifikanter Zuwachs an Sicherheit wird durch ein Melden vor jeder Öffnung der Frankiermaschine erreicht. Ebenfalls erhöht das in mehr oder weniger großen Zeitabständen erfolgende Melden, insbesondere zum Nachladen eines Guthabens in Verbindung mit der o.g. Protokollierung die Sicherheit gegen Mißbrauch. Die zentral zu speichernden Daten umfassen mindestens das Datum, Uhrzeit, Frankiermaschinenseriennummer (bzw. ID-Nr.) und die Art der Daten (Registerwerte, Parameter), wenn die Frankiermaschine eine Kommunikation mit der Datenzentrale aufnimmt.

Zur Lösung der Aufgabe weist andererseits die Frankiermaschine zwei spezielle Modi auf. Einen ersten Mode, um ggf. die Frankiermaschine für den weiteren Gebrauch zu sperren (Kill-Mode). Diese Sperrung kann anläßlich der nächsten Inspektion vor Ort von einer dazu berechtigten Person aufgehoben werden. Sie weist einen zweiten Mode auf, um bei Erfüllung ausgewählter Kriterien die Frankiermaschine zur Kommunikation mit der Datenzentrale zu veranlassen (Sleeping Mode).

Die Steuereinheit der Frankiermaschine kann erfindungsgemäß in Verbindung mit den von der Datenzentrale übermittelten Daten und einem über einen Sensor detektierten Signal zwischen autorisierten Öffnen (Service, Inspektion) und unautorisierten Öffnen (Manipulationsabsicht) unterscheiden.

Das Verfahren zur Verbesserung der Sicherheit von Frankiermaschinen umfaßt die Schritte: Überführen der Frankiermaschine in den ersten Modus, um sie damit wirksam außer Betrieb zu setzen, wenn das richtige Codewort fehlt, weil die Frankier-maschine unautorisiert geöffnet wurde, und im Falle einer autorisierten öffnung folgende Schritte durchgeführt werden :

a) Anmelden einer autorisierten Öffnung der Frankiermaschine zum Zwecke einer Inspektion, wobei nach Eintritt in den Kommunikationsmodus bei einer entfernten Datenzentrale ein Öffnungsgesuch gestellt wird und
b) Übermitteln eines neuen Codewortes Y' zur Frankiermaschine von der Datenzentrale, in Erwiderung auf das gestellte Öffnungsgesuch wobei das neue codewort Y' das alte Codework Y ersetzt, da
die Frankier maschine autorisiert geöffnet wurde.

Die erfindungsgemäße Lösung geht weiterhin davon aus, daß die in der Frankiermaschine gespeicherten Geldmittel vor unautorisiertem Zugriff geschützt werden müssen. Die Verfälschung von in der Frankiermaschine gespeicherten Daten wird so weit erschwert, daß sich der Aufwand für einen Manipulator nicht mehr lohnt.

Handelsübliche OTP-Prozessoren (ONE TIME PROGRAMMABLE) können alle sicherheitsrelevanten Programmteile im Inneren des Prozessorgehäuses enthalten, außerdem den Code zur Bildung des Message Authentification Code (MAC). Letzterer ist eine verschlüsselte Checksumme, die an eine Information angehängt wird. Als Kryptoalgorithmus ist beispielsweise Data Encryption Standard (DES) geeignet. Damit lassen sich MAC- Informationen an die sicherheitsrelevanten Registerdaten anhängen und somit die Schwierigkeit der Manipulation an den Postregistern maximal erhöhen.

Diese sicherheitsrelevanten Programmteile umfassen auch Programmteile für eine Flußkontrolle, die die Anzahl der abgelaufenen Programmteile überwacht. Damit können Fehlfunktionen des Mikroprozessors oder in Fälschungsabsicht vorgenommene Manipulationen aufgedeckt werden. Spezifische Rechenoperationen erlauben die Überprüfung, welche Programmteile wie oft benutzt wurden.

Eine andere Sicherheitsmaßnahme, die im ersten Modus neben oder anstatt des Unterscheidens zwischen unautorisierter und autorisierter Öffnung der Frankiermaschine mittels Öffnungsbefugnis(Kill Mode 0) ablaufen kann, ist das Überwachen der Programmlaufzeit ausgewählter sicherheitsrelevanter Programme oder Programmteile in einem Time Supervisions Mode (Kill Mode 1). Bei Abweichung der Laufzeit von Programmen bzw. Programmteilen von einer vorbestimmten Laufzeit, wie sie bei Manipulation bzw. Überwachung des Programmablaufes mittels Emulator auftreten, wird die Maschine gehemmt. Bei einer Ausführungsvariante wird durch den Mikroprozessor bzw. OTP das in einem nichtflüchtigen Speicher gespeichert vorliegende Codewort Y gelöscht.

Basierend auf der Tatsache, daß der Druckkopf ohne Transportvorrichtung nicht benutzt werden kann, um einen unabgerechneten Frankierstempel zu erzeugen, wird die Transportgeschwindigkeit bzw. die Druckgeschwindigkeit überwacht. Beim Thermotransferdrucker ist die Transportgeschwindigkeit des Poststückes proportional der Bandgeschwindigkeit des Farbbandes, welche über einen Encoder gemessen wird. Die Druckgeschwindigkeit wird durch die erforderliche Systemroutine bzw. Zeitdauer zur Sicherung der Frankiermaschine im Betriebsmodus kaum herabgesetzt. Das gelingt durch Erschließung einer Zeitreserve während des Druckes, durch den Mikroprozessor der Steuereinrichtung, der die spaltenweise Einbettung von Fensterdaten durchführt. Das erfindungsgemäße Verfahren ist jedoch nicht auf derartige schnelle Frankiermaschinen beschränkt. Entscheidend ist die Überwachung der Druckgeschwindigkeit auf eventuell durch Manipulationen hervorgerufene Abweichungen im Zeitablauf, um neben den anderen bereits getroffenen Sicherheitsmaßnahmen außerdem eine Manipulation des Drucksteuersignals zu verhindern.

Die Frankiermaschine kann von der Systemroutine mittels eines Entscheidungskriteriums in den zweiten Modus eintreten, um an den Benutzer der Frankiermaschine eine Warnung und Aufforderung zur Kommunikation mit der Datenzentrale abzugeben. Gleichzeitig wird auch von der Datenzentrale das Verhalten des Frankiermaschinenbenutzers auf der Basis von bisherigen während einer Kommunikation übermittelten Daten überwacht.

In der Frankiermaschine ist vorgesehen, daß ein spezieller Sleepingmodezähler bei jeder Kommunikation mit der Datenzentrale auf eine spezifische Stückzahl gesetzt wird und bei jeder Frankierung, d.h. im Verlauf einer Abrechnungs- und Druckroutine, zur Weiterzählung veranlaßt wird, bis eine bestimmte Zahl erreicht wird. Die spezifische Stückzahl kann sowohl in der Frankiermaschine errechnet, als auch in der Datenzentrale errechnet und an die Frankiermaschine über eine Kommunikationsverbindung übermittelt werden.

Ausgehend von der Überlegung mit nur einem Mikroprozessor und einem geeigneten Programm einer Frankiermaschine ein Verfahren zur Verbesserung der Sicherheit von Frankiermaschinen zu schaffen, bildet eine gleichzeitig in der Datenzentrale identisch vorliegende nutzerspezifische Information über den Guthabenverbrauch eine erste Berechnungsbasis, um in der Datenzentrale gespeichert vorliegenden Guthabenverbrauchs- und Guthabennachladedatumsdaten auf ihre Plausibilität zu überprüfen. Eine weitere erfinderische Berechnungsbasis aufgrund weiterer Daten, insbesondere in Verbindung mit der Stückzahl seit der letzten Kommunikation, gestattet eine außerordentliche Inspektion derjenigen Frankiermaschine vor Ort vorzunehmen, welche bei der Datenzentrale als suspekt gilt.

Die Frankiermaschine, welche eine regelmäßige Guthabennachladung erhält und dabei inspiziert wird, kann dabei als unverdächtig eingestuft werden. Die über ein vorgegebenes Inspektionsdatum ohne Inspektion weiter betriebene Frankiermaschine, muß jedoch nicht zwangsläufig manipuliert sein. Vielmehr kann sich auch das von der Frankiermaschine zu bearbeitende Postaufkommen überdurchschnittlich verringert haben. Wenn in der Frankiermaschine noch genügend Restwertguthaben verfügbar ist, kann damit natürlich weiterfrankiert werden. Erst eine außerordentliche Inspektion vor Ort, kann in diesem Falle klären, ob eine Manipulation vorliegt.

Für die Überprüfung suspekter Frankiermaschinen wird von der Datenzentrale der Postbehörde bzw. dem mit der Prüfung beauftragten Institut die zugehörige Frankiermaschinenseriennummer übermittelt. Mit dieser Information kann das Vorkommen an Poststücken (Briefen) bestimmter Absender überwacht werden, indem deren Anzahl im Zeitintervall beispielsweise von 90 Tagen gezählt wird.

Bei einer Inspektion werden das Siegel der Frankiermaschine auf Unversehrtheit und dann die Maschine selbst überprüft. Bei einer Reparatur bzw. durch den Service vor Ort muß eventuell in die Frankiermaschine eingegriffen werden. Zur Vorbereitung des Eingriffs werden die Register der Frankiermaschine abgefragt, um die Art des erforderlichen Eingriffs zu ermitteln. Die Art des Eingriffs und die Registerdaten werden dann der Datenzentrale mitgeteilt und es erfolgt ein Übermitteln von Daten von einer Datenzentrale zur Frankiermaschine entsprechend einem beantragten autorisierten Eingriff in die Frankiermaschine, welcher als erlaubter Eingriff protokolliert wird. Die Frankiermaschine ist fähig, zu Unterscheiden zwischen beantragten autorisierten und unautorisierten Eingriff in die Frankiermaschine mittels der Steuereinheit der Frankiermaschine in Verbindung mit den von der Datenzentrale übermittelten Daten, wobei bei unautorisiertem Eingriff in die Frankiermaschine dieser Eingriff als Fehlerfall protokolliert wird, aber nach einem erfolgten autorisierten Eingriff in die Frankiermaschine der ursprüngliche Betriebszustand mittels den vorgenannten übermittelten Daten wiederhergestellt wird.

Wenn in die Frankiermaschine unautorisiert eingegriffen wurde, führt das zum Verlust vorbestimmter Daten. Nimmt also ein Manipulator einen unautorisierten Eingriff vor, wird die Frankiermaschine durch das Überführen der Frankiermaschine in den ersten Modus wirksam außer Betrieb gesetzt.

Eine andere Sicherheitsmaßnahme, die im zweiten Modus neben oder anstatt einer Sleeping-Mode-Variante durchgeführt werden kann, ist der Error Overflow Mode. Dieser verlängert die Reaktionszeitdauer der Frankiermaschine bei Überschreiten einer vorbestimmten Anzahl an Fehlern und meldet über die Anzeige diesen Zustand an den Bediener der Frankiermaschine. Wird der Zustand der Überschreitung der Fehleranzahl nicht beseitigt, beispielsweise im Rahmen einer Inspektion durch einen Servicedienst oder durch Rücksetzen während einer Kommunikation mit der Datenzentrale, kann die Reaktionszeitdauer weiter erhöht werden, um eventuelle Manipulationen zu erschweren.

Das Verfahren zur Verbesserung der Sicherheit einer Frankiermaschine, welche zur Kommunikation mit einer entfernten Datenzentrale fähig ist und einen Mikroprozessor in einer Steuereinrichtung der Frankiermaschine aufweist, umfaßt außerdem ein Bilden einer Checksumme im OTP-Prozessor über den Inhalt des externen Programmspeichers und Vergleich des Ergebnisses mit einem im OTP-Prozessor gespeicherten vorbestimmten Wert vor und/oder nach Ablauf des Frankiermodus bzw. Betriebsmodus, insbesondere während der Initialisierung (d.h. wenn die Frankiermaschine gestartet wird), oder in Zeiten, in welchen nicht gedruckt wird (d.h. wenn die Frankiermaschine im Standby-Modus betrieben wird). Im Fehlerfall erfolgt dann eine Protokollierung und anschließende Blockierung der Frankiermaschine.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a und 1b,      Blockschaltbild einer Frankiermaschine mit erhöhter Sicherheit,

Figur 1c,      Schaltbild einer Detektoreinrichtung zur Ermittlung einer Öffnung des Gehäuses,

Figur 2a,      Ablaufplan nach einer ersten Lösungsvariante,

Figur 2b,      Ablaufplan nach einer zweiten Lösungsvariante,

Figur 3a und 3b,      Darstellung der Sicherheitsabläufe der im Kommunikationsmodus befindlichen Frankiermaschine und Datenzentrum

Figur 4a,      Ablaufplan für den Frankiermodus nach einer ersten Variante

Figur 4b,      Ablaufplan für den Frankiermodus nach einer zweiten Variante

Figur 5,      Ablaufplan für eine erste Sleeping-Mode-Variante

Figur 6,      Ablaufplan für eine zweite Sleeping-Mode-Variante

Figur 7,      Ablaufplan zur Codeworteinbringung

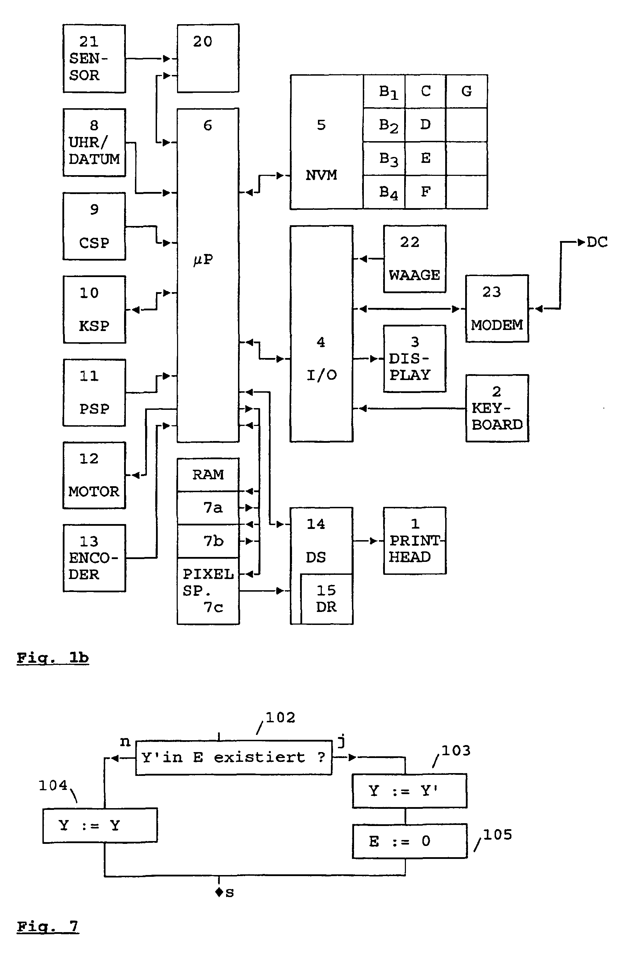

Die Figuren 1a und 1b zeigen je ein Blockschaltbild der erfindungsgemäßen Frankiermaschine mit einem Druckermodul 1 für ein vollelektronisch erzeugtes Frankierbild, mit mindestens einem mehrere Betätigungselemente aufweisenden Eingabemittel 2, einer Anzeigeeinheit 3, einem Öffnungsversuche detektierenden Sensor 21 und einem die Kommunikation mit einer Datenzentrale herstellenden MODEM 23, welche über einen Ein/Ausgabe-Steuermodul 4 mit einer Steuereinrichtung 6 gekoppelt sind und mit einem nichtflüchtigen Speicher 5 bzw. 11 für die variablen bzw. die konstanten Teile des Frankierbildes.

Ein Charakterspeicher 9 liefert die nötigen Druckdaten für einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit dem nichtflüchtigen Arbeitspeicher 5, mit einem Kostenstellenspeicher 10, mit einem Programmspeicher 11, mit dem Motor einer Transport- bzw. Vorschubvorrichtung ggf. mit Streifenauslösung 12, einem Encoder (Codierscheibe) 13 sowie mit einem Uhren/Datums-Baustein 8 in Verbindung steht. Die einzelnen Speicher können in mehreren physikalisch getrennten oder in nicht gezeigter Weise in wenigen Bausteinen zusammengefaßt verwirklicht sein, welche durch mindestens eine zusätzliche Maßnahme, beispielsweise Aufkleben auf der Leiterplatte, Versiegeln oder Vergießen mit Epoxidharz, gegen Entnahme gesichert sind.

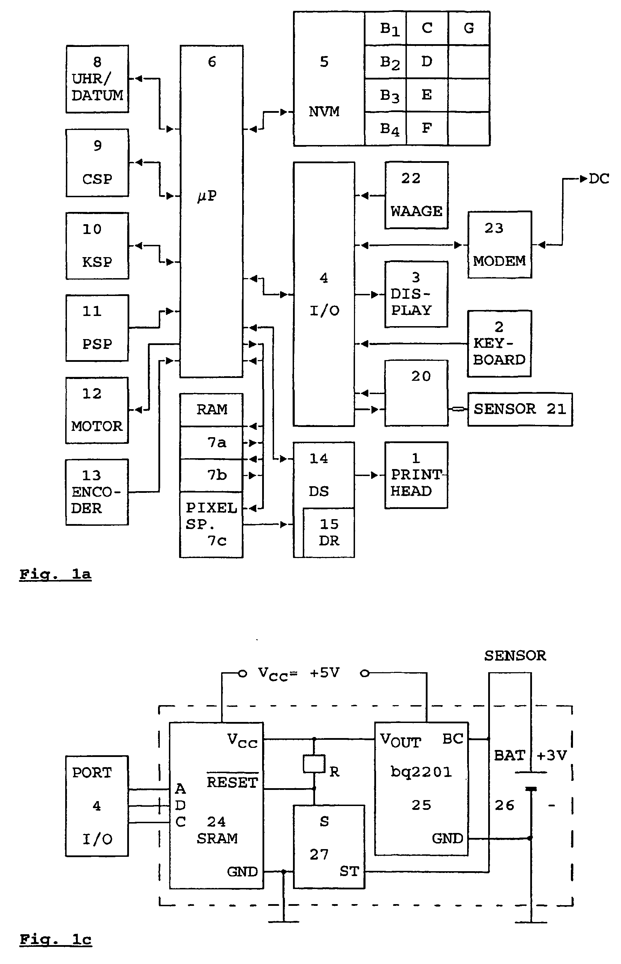

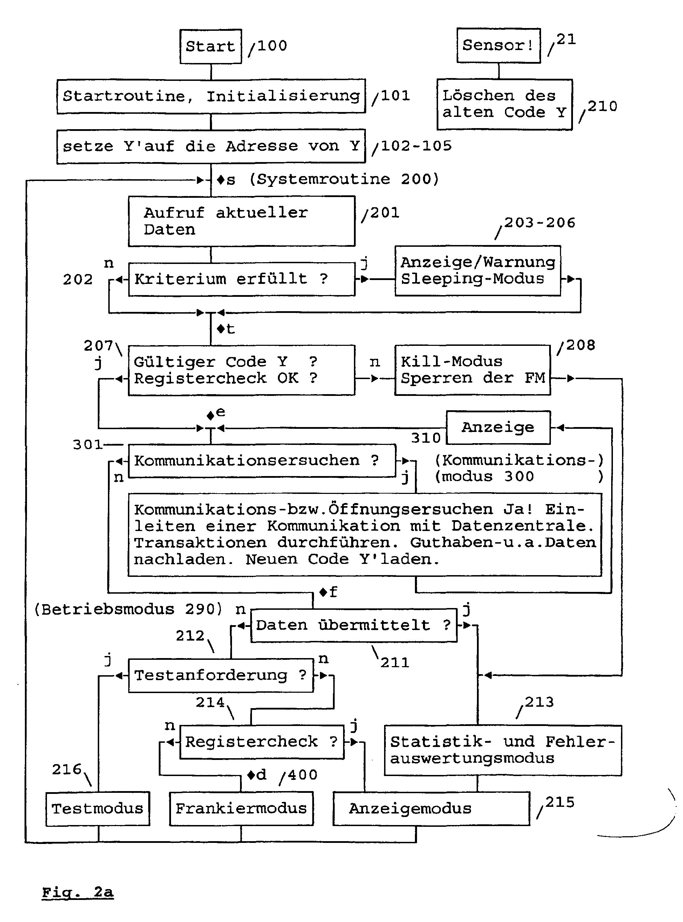

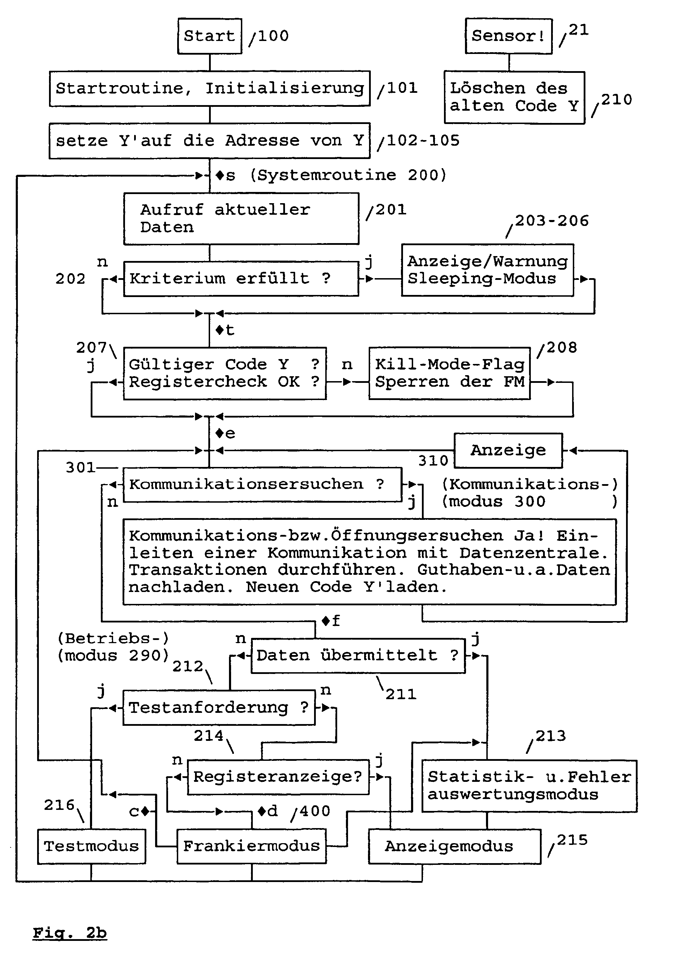

In der Figur la wirkt der Sensor 21 auf eine Detektoreinrichtung 20, welche über den Ein/Ausgabe-Steuermodul 4, nach dem Einschalten der Frankiermaschine mit einem Codewort Y unter vorbestimmten Bedingungen geladen wird, welches während des Betriebes der Frankiermaschine ausgelesen und auf Gültigkeit überprüft wird. Wie die Detektoreinrichtung 20 mit einem Codewort Y geladen wird, wird nachfolgend anhand der Figur 1c in Verbindung mit den Darlegungen zur Figur 2 erläutert.

Die Figur 1c zeigt ein Schaltbild einer Detektoreinrichtung 20 zur Ermittlung einer Öffnung des Gehäuses. Diese Detektoreinrichtung 20 umfaßt mindestens einen statischen Speicherbaustein 24 (SRAM) für das Codewort Y, einen Umschalter 25 und eine Primärbatterie 26, insbesondere eine Lithium-Zelle.

Der Umschalter 25 verbindet eine Netzteilausgangsspannung $V_{CC}$= +5V mit dem SRAM 24, wenn die Frankiermaschine eingeschaltet betrieben wird. Ist die Frankiermaschine ausgeschaltet bzw. die Stromversorgung unterbrochen, wird das SRAM 24 aus der Primärbatterie 26, vorzugsweise mit einer Spannung von +3V versorgt. Damit bleibt der Speicherinhalt im SRAM solange erhalten, bis über den Sensor 21 oder durch die Primärbatterie 26 die Versorgung eingestellt wird.

In einer Vorzugsvariante ist ein solcher Sensor ein elektrisch leitender Streifen, der den Kontakt zwischen der Langzeitbatterie (Lithium-Batterie) und den zu versorgenden Einrichtungen 25 bzw. 24, die als Speicherbaustein (CMOS-SRAM) für das Codewort Y ausgeführt ist, herstellt. Ein Schalter 27 ist mit der von der Umschalteinrichtung 25 gelieferten Versorgungsspannung über einen Widerstand R und mit Masse-Potential verbunden.

Der Abgriff zwischen dem Widerstand R und dem Schalter 27 führt auf den Rücksetzeingang des Speicherbausteins 24 für das Codewort Y. Der Schalter 27 kann beispielsweise ein npn-Transistor sein, der mit seinem Kollektor am Rücksetzeingang angeschlossen ist und mit seinem Emitter auf Masse-Potential liegt. Seine Basis ist über einen Impedanzwandler mit dem BC-Eingang der Umschalteinrichtung 25 verbunden, welcher über den Sensor 21 mit dem + Pol der Batterie 26 verbunden ist. Der Impedanzwandler ist ein Negator in CMOS-3V-Technik. Die Umschalteinrichtung 25, wofür vorzugsweise der Baustein bq 2201 eingesetzt wird, liefert während des Betriebes der Frankiermaschine eine Netzteilspannung $V_{CC}$ = +5 V und während des Nichtbetriebes eine Batteriespannung von +3 V, um den Speicherinhalt zu erhalten. Wird der Sensor 21 während des Nichtbetriebes aktiviert, fehlt die Speicherinhalterhaltungsspannung. Wird der Sensor 21 aber während des Betriebes aktiviert, wird der Speicherinhalt über den Rücksetzeingang gelöscht.

In einer - in der Figur 1c nicht gezeigten - modifizierten Variante kann mittels des Sensors 21 auch eine andere Verbindung unterbrochen werden, worauf die Detektoreinrichtung 20 reagiert. Solch ein elektrisch leitender Streifen kann manuell für jede Maschine individuell anders verlegt sein. Wesentlich ist hierbei, daß jegliches Öffnen des Gehäuses den Streifen bewegt und somit den vorgenannten Kontakt unterbricht.

Der Streifen wird beispielsweise beim Zusammenbau zunächst locker verlegt und erst nach dem Zusammenbau bzw. kurz vor dem endgültigen Schließen der Gehäuseschalen straff gezogen, d.h. der vorgenannte Kontakt wird hergestellt.

Eine vorteilhafte weitere Sensor-Variante besteht in der Ausbildung der Gehäuseschalen als Sicherheitskapsel.

Die Sicherheitskapsel ist mit mäanderförmigen Leiterbahnen ausgebildet, durch welche ein geringer Überwachungsstrom bzw. Ladungserhaltungsstrom für ein CMOS-RAM fließt. Jede Öffnung führt zu einer Stromunterbrechung. Damit geht eine Information verloren, die der Manipulator nicht ersetzen kann. Nach dem Schließen des Gehäuses verhindert die Systemroutine, daß die Maschine in den Frankiermodus gelangt.

In der Figur 1b ist eine zweite Variante mit direkt an den Mikroprozessor der Steuereinrichtung angekoppelter Einrichtung 20 dargestellt, welche ebenfalls durch einen Sensor 21 beeinflußbar ist. Der Sensor 21 und die Detektoreinrichtung können auf unterschiedliche Weise realisiert werden.

So verwendet eine weitere Variante der Detektoreinrichtung 20 ein programmierbares Logikarray, welche durch den Sensor 21 beeinflußbar ist. Der Sensor bewirkt über die Einrichtung eine andere Programmverzweigung während des Ablaufes der Systemroutine. Nach dem Schließen des Gehäuses verhindert dann die Systemroutine abermals, daß die Maschine in den Frankiermodus gelangt.

In der Figur 2a ist ein Ablaufplan für eine Frankiermaschine mit einem Sicherheitssystem nach einer ersten Variante der erfindungsgemäßen Lösung dargestellt. Erfindungsgemäß ist ständig bei Betrieb und Nichtbetrieb der Frankiermaschine ein Schritt 210 vorgesehen, wenn durch einen Sensor 21 ein Öffnen der Frankiermaschine festgestellt wird.

Nach dem Einschalten der Frankiermaschine im Schritt Start 100 wird anschließend innerhalb einer Startroutine 101 eine Funktionsprüfung mit anschließender Initialisierung vorgenommen.

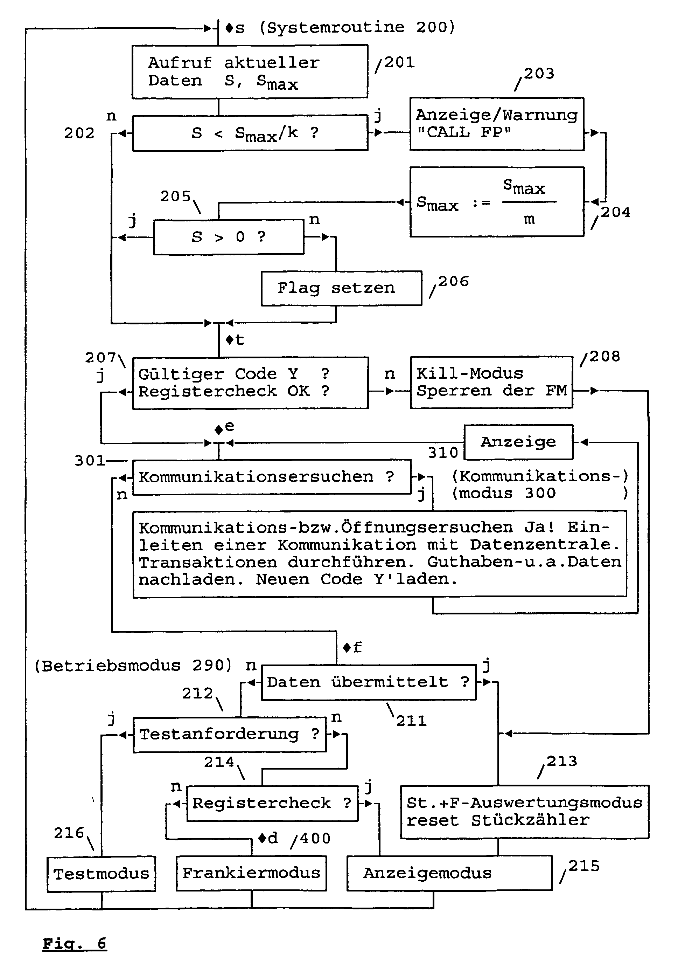

Im nachfolgenden - mehrere, in der Figur 7 näher dargestellte, Subschritte 102 bis 105 umfassenden - Schritt wird ein neues Codewort Y'- jedoch nur, wenn gemäß Schritt 102 ein solches in einem anderen vorbestimmten Speicherplatz E des nichtflüchtigen Speichers 5 existiert - in den Speicherplatz des alten Codewortes Y kopiert (Schritt 103), falls dort kein gültiges Codewort Y mehr gespeichert vorliegt. Letzteres betrifft gleichermaßen den Fall einer autorisierten als auch unautorisierten Öffnung, weil bei jeder Öffnung des Gehäuses das alte Codewort Y gelöscht wird. Bei Nichtöffnung wird nicht kopiert und nach Schritt 104 bleibt das alte Codewort im Speicher 20 erhalten. Nun wird am Punkt s die Systemroutine 200 erreicht. Diese umfaßt mehrere Schritte 201 bis 215 des Sicherheitssystems. Im Schritt 201 erfolgt der Aufruf aktueller Daten, was weiter unten in Verbindung mit der Erläuterung zu den Figuren 5 und 6 näher für den Sleeping-Mode ausgeführt wird.

Nachfolgend wird - wie in der Figur 2a dargestellt - im Schritt 202 überprüft, ob die Kriterien für den Eintritt in den Sleeping-Mode erfüllt sind. Ist das der Fall wird zum Schritt 203 verzweigt, um mindestens eine Warnung mittels der Anzeigeeinheit 3 anzuzeigen. Dabei können weitere Schritte 204 bis 206 durchlaufen werden, bevor zum Schritt 207 verzweigt wird. Ist das aber nicht der Fall wird ebenfalls zum Schritt 207 verzweigt. Nach den o.g. Schritten wird im jeden Fall der Punkt t erreicht.

Im Schritt 207 wird - wie das in der europäischen Anmeldung EP 615 211 näher erläutert wird - mindestens eine Registerprüfung der Datenstruktur der Postregister durchgeführt, um die Fehler zu protokollieren. Im Schritt 208 werden darüber hinaus Maßnahmen ergriffen, um die Frankiermaschine bei Registerdatenstrukturfehlern zu sperren.

Natürlich könnte ein Betrüger, der in die Frankiermaschine einbricht, eine solche Manipulation ausführen, um die Postregister stimmig zu verändern. Diese Manipulation könnte erst in Verbindung mit den Daten der Datenzentrale bei der nächsten Fernabfrage der Register aufgedeckt werden, falls sie nicht vorher rückgängig gemacht wird, denn ein Manipulator ist bestrebt, seine Spuren zu verwischen. Deshalb ist erfindungsgemäß vorgesehen, daß mindestens noch eine Überprüfung erfolgt, ob ein gültiger Code Y im vorbestimmten Speicherplatz der Einheit 20 vorliegt. Ist das nicht der Fall, wird zum Schritt 208 verzweigt.

Die Überprüfung auf gültigen Code Y wird beispielsweise mittels einem ausgewählten Prüfsummenverfahren innerhalb eines OTP-Prozessors (ONE TIME PROGRAMMABLE) durchgeführt, der intern die entsprechenden Programmteile und außerdem den Code zur Bildung eines MAC (MESSAGE AUTHENTIFICATION CODE) gespeichert enthält, weshalb der Manipulator die Art des Prüfsummenverfahrens nicht nachvollziehen kann. Auch weitere sicherheitsrelevante Schlüsseldaten und Abläufe sind ausschließlich im Inneren des OTP-Prozessors gespeichert, um eine MAC-Absicherung über die Postregister zu legen.

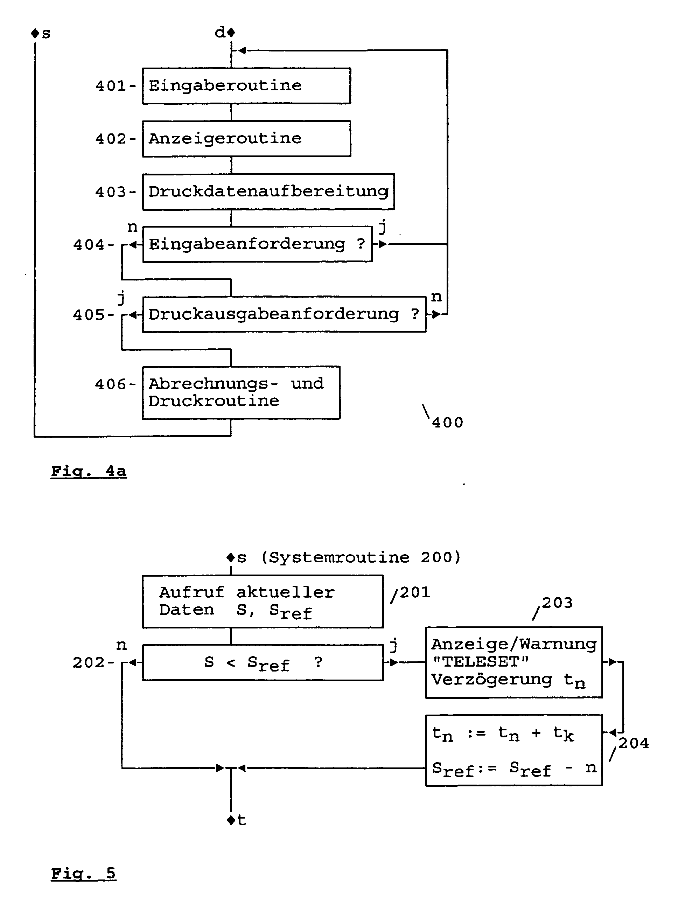

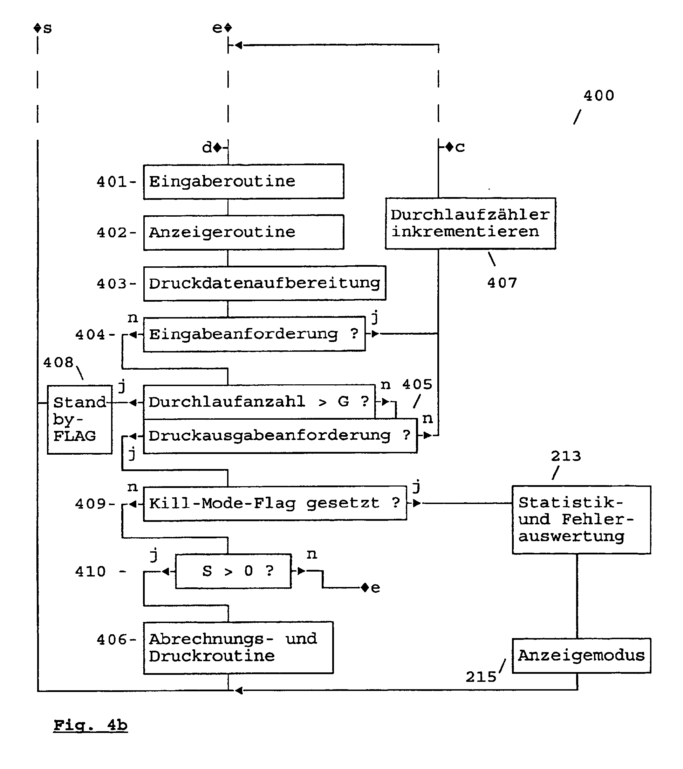

Eine weitere Sicherungsvariante, welche ohne OTP-Prozessor auskommt, besteht im Erschweren des Auffindens der Schlüssel durch dessen Kodierung und partielle Ablage in unterschiedlichen Speicherbereichen. Wieder werden MACS an jede Information in den sicherheitsrelevanten Registern angehängt. Eine Manipulation der Registerdaten kann durch Kontrolle über den MAC erkannt werden. Diese Routine erfolgt im Schritt 406 im Frankiermodus, der in den Figuren 4a, b dargestellt ist. Damit läßt sich die Schwierigkeit der Manipulation an den Postregistern maximal erhöhen.

Mit dem Schritt 208 ist der Killmode erreicht und die Frankiermaschine ist gesperrt. Im Schritt 208 werden vorzugsweise die Postregister in vorbestimmter Weise teilweise gelöscht. Über den Schritt 213 wird der Anzeigemodus 215 erreicht und dann zur Systemroutine zurückverzweigt. Das Sperren kann vorteilhaft erfolgen, indem die Verzweigung auf den Frankiermodus 400 nicht mehr ausgeführt wird.

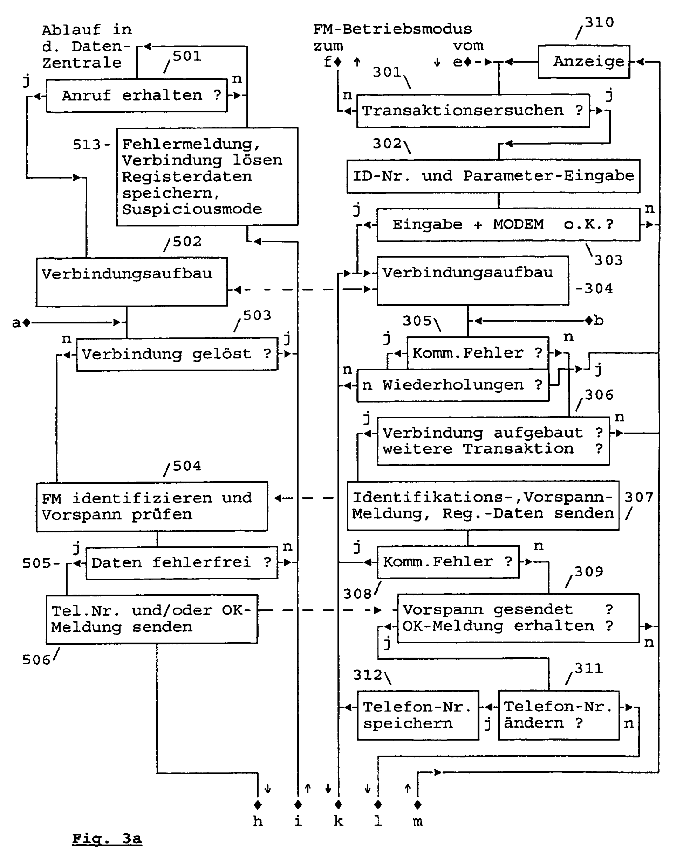

Bei erfolgter Prüfung im Schritt 207, ohne daß relevante Mängel festgestellt wurden, wird der Punkt e, d.h. der Beginn eines Kommunikationsmodus 300 erreicht und in einem - in den Figuren 2a, b und 3a dargestellten - Schritt 301 abgefragt, ob ein Transaktionsersuchen vorliegt. Ist das nicht der Fall, wird der Kommunikationsmodus 300 verlassen und der Punkt f, d.h. der Betriebsmodus 290 erreicht. Wurden relevante Daten im Kommunikationsmodus übermittelt, dann ist zur Datenauswertung auf den Schritt 213 zu verzweigen. Oder anderenfalls, wenn im Schritt 211 die Nichtübermittlung festgestellt wird, ist auf den Schritt 212 zu verzweigen. Nun wird überprüft, ob entsprechende Eingaben getätigt worden sind, um bei Testanforderung 212 in den Testmodus 216, anderenfalls um bei beabsichtigter Registerstandüberprüfung 214 in einen Anzeigemodus 215 zu gelangen. Ist das nicht der Fall, wird automatisch der Punkt d, d.h. der Frankiermodus 400 erreicht.

Erfindungsgemäß ist weiterhin vorgesehen, daß im Schritt 213 eine Statistik- und Fehlerauswertung durchgeführt wird, um weitere aktuelle Daten zu gewinnen, welche nach Verzweigung zur Systemroutine 200 in Schritt 201 ebenfalls aufrufbar sind.

Im Falle einer Öffnung des Frankiermaschinengehäuses durch dazu befugte Personen ist eine schriftliche ggf. fernmündliche Anmeldung im Datenzentrum zur autorisierte Öffnung erforderlich, welche das Öffnungsdatum und die Uhrzeit für den ungefähren Öffnungsbeginn mitteilt. Bevor dann die Frankiermaschine tatsächlich geöffnet werden kann, muß über MODEM eine Kommunikation mit dem Datenzentrum aufgenommen werden, um die Öffnungsbefugnis zu ersuchen und einen neuen zukünftigen Code Y' zu laden, der den alten ersetzen kann.

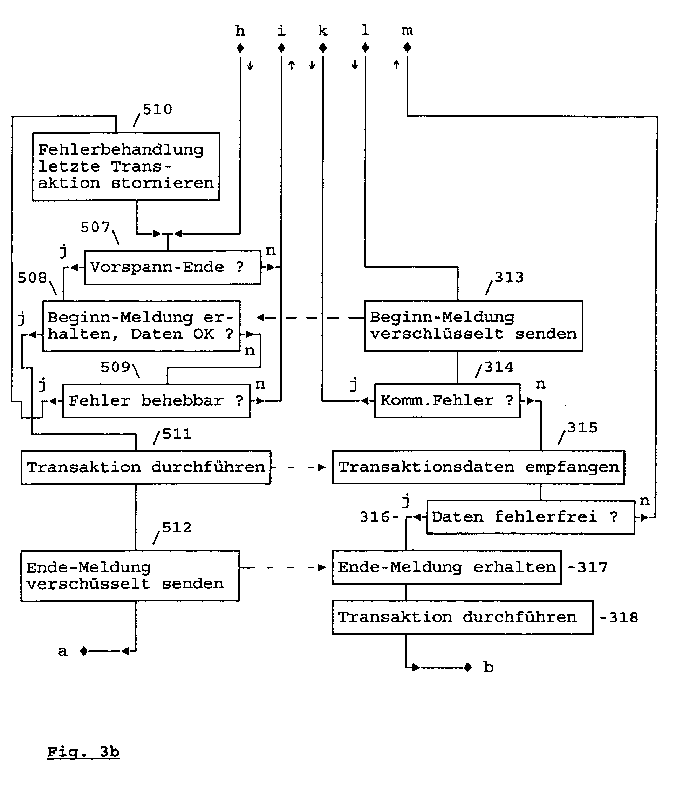

In den Figuren 3a und 3b erfolgt eine Darstellung der Sicherheitsabläufe der im Kommunikationsmodus befindlichen Frankiermaschine einerseits und der Sicherheitsabläufe der im Kommunikationsmodus befindlichen Datenzentrale andererseits.

Wird der Punkt e, d.h. der Beginn des nachfolgend erläuterten Kommunikationsmodus 300 erreicht, wird in einem - in den Figuren 2 und 3a dargestellten - Schritt 301 abgefragt, ob ein Transaktionsersuchen vorliegt. Ein solches kann beispielsweise zur Guthabennachladung, Telefonnummernänderung u.a. gestellt werden.

Der Benutzer wählt den Kommunikations- bzw. Fernwertvorgabemodus der Frankiermaschine über die Eingabe der Identifikationsnummer (achtstelligen Portoabrufnummer) an. Es wird nun beispielsweise angenommen, es soll die Kommunikation erfolgen, um einen neuen zukünftigen Code Y' zu laden, der den alten ersetzen kann. Wird nur ein solches Transaktionsersuchen gestellt, muß der Vorgabebetrag auf Null geändert werden, denn in diesem Fall muß das Guthaben in der Frankiermaschine natürlich nicht aufgestockt werden.

Im Schritt 302 kann eine Eingabe der IdentifikationsNummer (ID-Nr.) und der beabsichtigten Eingabeparameter auf folgende Weise erfolgen. Bei der ID-Nr. kann es sich um die Serien-Nummer der Frankiermaschine, um eine PIN bzw. PAN (Portoabrufnummer) handeln, die durch Betätigung mittels vorbestimmter T-Taste des Eingabemittels 2 quittiert wird. In der Anzeigeeinheit 3 erscheint der bei der letzten Fernwertvorgabe(Nachladung) benutzte Eingabeparameter (Vorgabewert), der nun durch die Eingabe des gewünschten Eingabeparameters überschrieben oder beibehalten wird. Beim Eingabeparameter handelt es sich um eine Zahlenkombination, welche in der Datenzentrale als Aufforderung verstanden wird, ein neues Codewort Y' zu übermitteln, wenn zuvor eine Öffnungsbefugnis eingeholt worden ist. Bei Falscheingabe des vorgenannten Eingabeparameters kann die Anzeige durch Drücken einer C-Taste gelöscht werden.

Beispielsweise wird eine Änderung eingegeben, um bei einer Transaktion ein Guthaben mit dem Wert Null zu laden, aber es wird keine Öffnungsbefugnis zuvor eingeholt. Somit dient der Eingabeparameter nur als neuer Vorgabewert. Dabei wird aber weder das Guthaben für Frankierungen wertmäßig erhöht, wenn der Eingabeparameter den Wert Null hat, noch ein neues Codewort geladen. Jedoch kann bei jeder Kommunikation eine Stückzahl S'übermittelt werden.

Nur durch das vorhergehende Anmelden, beispielsweise mittels eines separaten Anrufes bei der Datenzentrale oder einer anderen Kommunikationsform, wird der Datenzentrale mitgeteilt, daß ein neues Codewort Y' zur Frankiermaschine übermittelt werden soll, wenn anschließend innerhalb einer vorbestimmten Zeitdauer seitens der Frankiermaschine eine Transaktion für den Wert Null gestartet wird. Das Öffnungsgesuch gilt nur dann als gestellt, wenn nach dem Anmelden einer autorisierten Öffnung die Frankiermaschine in den so vereinbarten Kommunikationsmodus eintritt.

Wird aber zuvor ein beliebig anderer Eingabeparameter mit der Datenzentrale vereinbart, erfolgt bei Eingabe dieses Eingabeparameters außer der Nachladung des Guthabens entsprechend des durch den Eingabeparameter eingegebenen Vorgabewertes auch noch - während einer zusätzlichen Transaktion - das Nachladen eines neuen zukünftigen Code Y'.

Wird ein anderer Eingabeparameter als der vereinbarte eingegeben, führt dies im Ergebnis lediglich zur Nachladung in Höhe des gewählten neuen Vorgabebetrages.

Ist der gewünschte Eingabeparameter richtig angezeigt, wird dies durch erneutes Betätigen der vorbestimmten T-Taste des Eingabemittels 2 bestätigt. In der Anzeigeeinheit 3 erscheint dann eine Darstellung entsprechend einer Eingabeparameteränderung oder entsprechend der Nichtänderung (alter Vorgabewert).

Durch Betätigung der vorbestimmten T-Taste wird die Veränderung des Eingabeparameters über MODEM-Verbindung gestartet. Die Eingabe überprüft (Schritt 303) und der weitere Vorgang läuft automatisch ab, wobei der Ablauf durch eine entsprechende Anzeige begleitet wird.

Dazu prüft die Frankiermaschine, ob ein MODEM angeschlossen und betriebsbereit ist. Ist das nicht der Fall, wird auf den Schritt 310 verzweigt, um anzuzeigen, daß das Transaktionsersuchen wiederholt werden muß. Anderenfalls liest die Frankiermaschine die Wahlparameter, bestehend aus den Herauswahlparametern (Haupt-/Nebenstelle, usw.) und der Telefonnummer aus dem NVRAM-Speicherbereich F und sendet diese mit einem Wahlaufforderungskommando an das Modem 23. Anschließend erfolgt der für die Kommunikation erforderliche Verbindungsaufbau über das MODEM 23 mit der Datenzentrale in einem Schritt 304.

In der Figur 3a ist auf der linken Hälfte ebenfalls der parallel erfolgende Ablauf in der Datenzentrale dargestellt, welcher für die Kommunikation notwendig ist. Im Schritt 501 wird ständig geprüft, ob ein Anruf in der Datenzentrale erfolgt ist. Ist das der Fall, und das MODEM 23 hat die Gegenseite angewählt, erfolgt im Schritt 502 parallel der Verbindungsaufbau auch in der Datenzentrale. Und im Schritt 503 wird ständig überwacht, ob die Verbindung zur Datenzentrale gelöst wurde. Ist das der Fall, erfolgt nach einer Fehlermeldung im Schritt 513 eine Rückverzweigung zum Schritt 501.

Parallel dazu wird in der Frankiermaschine im Schritt 305 überwacht, ob Kommunikationsfehler aufgetreten sind und gegebenenfalls zum Schritt 304 zurückverzweigt, um seitens der Frankiermaschine die Verbindung erneut aufzubauen. Nach einer vorbestimmten Anzahl n ergebnisloser Wahlwiederholungen zwecks Verbindungsaufbau wird über einen Anzeigeschritt 310 auf den Punkt e zurückverzweigt. Lag kein im Schritt 305 ermittelbarer Fehler vor, wird im Schritt 306 seitens der Frankiermaschine festgestellt, daß die Verbindung aufgebaut ist und eine Transaktion erst noch erfolgen soll, wird auf den Schritt 307 verzweigt, um eine Eröffnungsnachricht bzw. um Identifikations-, Vorspann-bzw. Registerdaten zu senden. Im nachfolgenden Schritt 308 wird die gleiche Überprüfung, wie im Schritt 305 durchgeführt, d.h. bei einem aufgetretenen Kommunikationsfehler wird zum Schritt 304 zurückverzweigt. Anderenfalls wurde eine Eröffnungsnachricht von der Frankiermaschine an die Datenzentrale geschickt. Darin ist u.a. die Portoabrufnummer zur Bekanntmachung des Anrufenden, d.h. der Frankiermaschine, bei der Datenzentrale enthalten.

Diese Eröffnungsnachricht wird in der Datenzentrale im Schritt 504 auf Plausibilität überprüft und weiter ausgewertet, indem anschließend im Schritt 505 wieder überprüft wird, ob die Daten fehlerfrei übermittelt worden sind. Ist dies nicht der Fall, erfolgt eine Rückverzweigung zur Fehlermeldung auf den Schritt 513. Sind andererseits die Daten fehlerfrei und in der Datenzentrale wird erkannt, daß die Frankiermaschine ein Öffnungsersuchen gestellt hat und ein neues Codewort Y' abfordert, so wird im Schritt 506 eine Erwiderungsnachricht zur Frankiermaschine als Vorspann gesendet. Im Schritt 507 wird überprüft, ob im Schritt 506 die Vorspannmeldung einschließlich Vorspann-Ende gesendet worden ist. Ist das aber nicht der Fall, dann wird auf den Schritt 513 zurückverzweigt.

In der Frankiermaschine wird im Schritt 309 geprüft, ob von der Datenzentrale inzwischen ein Vorspann als Erwiderungsnachricht gesendet bzw. empfangen wurde. Ist das nicht der Fall, wird zur Anzeige auf den Schritt 310 zurückverzweigt und danach erneut ein Transaktionersuchen im Schritt 301 abgefragt. Wurde ein Vorspann empfangen und die Frankiermaschine hat eine OK-Meldung erhalten, erfolgt im Schritt 311 eine Überprüfung der Vorspannparameter hinsichtlich einer Telefonnummernänderung. Wenn ein verschlüsselter Parameter übermittelt wurde, liegt keine Telefonnummernänderung vor und es wird auf den Schritt 313 in der Figur 3b verzweigt.

In der Figur 3b erfolgt eine Darstellung der Sicherheitsabläufe der im Kommunikationsmodus befindlichen Frankiermaschine und parallel dazu derjenigen in der Datenzentrale.

Im Schritt 313 wird von der Frankiermaschine an die Datenzentrale eine Beginnmeldung verschlüsselt gesendet. Im Schritt 314 wird die Meldung auf Kommunikationsfehler überprüft. Liegt ein Kommunikationsfehler vor, wird zum Schritt 304 zurückverzweigt und es erfolgt erneut ein Versuch, die Verbindung zur Datenzentrale aufzubauen, um die Beginn-Meldung verschlüsselt zu senden.

Von der Datenzentrale wird diese verschlüsselte Beginn-Meldung empfangen, wenn im Schritt 506 die VorspannMeldung vollständig gesendet worden war und im Schritt 507 das Vorspann-Ende übermittelt worden ist. Im Schritt 508 wird in der Datenzentrale überprüft, ob diese die Beginn-Meldung erhalten hat und die Daten in Ordnung sind. Ist das nicht der Fall, wird im Schritt 509 überprüft, ob der Fehler behebbar ist. Ist der Fehler nicht behebbar, wird auf den Schritt 513 verzweigt. Anderenfalls wird im Schritt 510 eine Fehlerbehandlung durchgeführt und auf den Schritt 507 verzweigt. Wird im Schritt 508 der Empfang ordnungsgemäßer Daten festgestellt, beginnt die Datenzentrale im Schritt 511 eine Transaktion durchzuführen. Im vorgenannten Beispiel wird ein neues Codewort Y' verschlüsselt zur Frankiermaschine übertragen, welche im Schritt 315 die Transaktionsdaten empfängt.

Im nachfolgenden Schritt 316 werden die Daten geprüft. Liegt ein Fehler vor, wird auf den Schritt 310 zurückverzweigt. Anderenfalls wird auf die Ende-Meldung gewartet, die die Datenzentrale im Schritt 512 verschlüsselt an die Frankiermaschine sendet. Nach Empfang dieser Ende-Meldung im Schritt 317 wird im Schritt 318 ebenfalls in der Frankiermaschine die Transaktion durchgeführt. Ein neues Codewort Y' liegt nun in der Frankiermaschine gespeichert vor und es wird zum Schritt 305 zurückverzweigt. Soll keine weitere Transaktion erfolgen, wird zur Anzeige der Schritt 310 und danach Schritt 301 erreicht.

Wenn nun kein Transaktionersuchen gestellt wird, wird im Schritt 211 überprüft, ob Daten übermittelt worden sind. Wurden Daten übermittelt, wird der Schritt 213 erreicht. Entsprechend des Eingabewunsches plaziert die Frankiermaschine das neue Codewort Y' beispielsweise im Speicherbereich E des nichtflüchtigen Speichers 5.

Wird als Eingabeparameter im Schritt 302 aber eine andere Zahlenkombination als Null eingegeben und die Eingabe war in Ordnung (Schritt 303), erfolgt ein Verbindungsaufbau (Schritt 304). Und wenn ohne Fehler (Schritt 305) eine Verbindung aufgebaut vorliegt (Schritt 306), wird eine Identifizierungs- und Vorspann-Meldung an die Datenzentrale gesendet. In dieser Eröffnungsnachricht ist wieder u.a. auch die Portoabrufnummer PAN zur Identifizierung der Frankiermaschine bei der Datenzentrale enthalten. Die Datenzentrale erkennt aus der eingegebenen Zahlenkombination, falls die Daten fehlerfrei sind (Schritt 505), daß in der Frankiermaschine beispielsweise ein Guthaben aufgestockt aber kein neues Codewort Y' übermittelt werden soll.

Hat sich inzwischen die aktuelle Telefonnummer der Datenzentrale geändert, müssen Maßnahmen ergriffen werden, daß diese in der Frankiermaschine gespeichert wird. Im Schritt 506 wird dann von der Datenzentrale eine Erwiderungsnachricht mit den Elementen Änderung der Telefonnummer und aktuelle Telefonnummer unverschlüsselt gesendet. Die Frankiermaschine, die diese Meldung erhält, erkennt im Schritt 311, daß die Telefonnummer geändert werden soll. Nun wird zum Schritt 312 verzweigt, um die aktuelle Telefonnummer zu speichern. Anschließend wird auf den Schritt 304 zurückverzweigt. Ist die Verbindung noch aufgebaut und ein Kommunikationsfehler liegt nicht vor (305), wird im Schritt 306 anschließend geprüft, ob eine weitere Transaktion erfolgen soll. Wenn das nicht der Fall ist, wird über den Schritt 310 zum Schritt 301 verzweigt.

Nach erfolgter Abspeicherung der aktuellen Telefonnummer baut die Frankiermaschine automatisch eine neue Verbindung zur Datenzentrale unter Zuhilfenahme der neuen Telefonnummer auf. Die eigentliche, vom Benutzer beabsichtigte Transaktion, eine Fernwertvorgabe des neuen Codewortes Y' oder eines Nachladeguthabens wird somit automatisch, d.h. ohne einen weiteren Eingriff durch den Benutzer der Frankiermaschine, durchgeführt. In der Anzeige erscheint eine entsprechende Mitteilung, daß aufgrund der Telefonnummernänderung die Verbindung automatisch neu aufgebaut wird.

Es ist vorgesehen, daß nach einer Öffnung des Gehäuses, d.h. nach einem Eingriff, das Gehäuse der Frankiermaschine geschlossen wird und daß nach dem Schließen des Gehäuses die Frankiermaschine in den Kommunikationsmodus 300 gesteuert wird. Der Berechtigte kann auch der Datenzentrale die beendete Überprüfung noch mitteilen.

Eine Kommunikation kann eine Telefonnummernspeicherung, als auch eine Guthabennachladung umfassen. Ohne Unterbrechung der Kommunikation können so mehrere Transaktionen durchgeführt werden. Soll die Höhe des nachzuladenden Guthabens in der gleichen Höhe verbleiben, wie bei der letzten Guthabennachladung, ist nur eine Transaktion notwendig. Diese erfolgt in der gleichen Weise wie beim Nachladen eines neuen Codewortes Y'. Soll die Höhe des nachzuladenden Guthabens aber geändert werden, sind zwei Transaktionen erforderlich. Beide Transaktionen erfolgen auf die gleiche Weise wie beim Nachladen des neuen Codewortes Y'. Während einer Transaktion wird eine Nachricht übermittelt. Jede übermittelte Nachricht ist einzeln verschlüsselt. Eine gelungene Transaktion läuft dabei wie folgt ab: Die Frankiermaschine schickt ihre ID-Nummer und einen Vorgabewert für die Höhe des gewünschten Nachladeguthabens zusammen mit einem MAC an die Datenzentrale. Diese prüft eine derartige übermittelte Nachricht gegen den MAC, um dann eine ebenfalls MAC-gesicherte OK-Meldung an die Frankiermaschine zu senden. Die OK-Meldung enthält den Vorgabewert nicht mehr.

Es ist vorgesehen, daß die Übermittlung eines neuen Codewortes Y', eine Änderung der Guthabennachladehöhe und eines neuen Nachladeguthabens in verschlüsselter Form, aber die Übermittlung von Telefonnummer in unverschlüsselter Form erfolgt. Wird in der Datenzentrale festgestellt, daß die Verbindung zur Frankiermaschine gelöst wurde (Schritt 503) oder fehlerhafte Daten (505) bzw. nicht behebbare Fehler (509) vorliegen oder kein Vorspannende gesendet wurde (507), ist die Kommunikation beendet. Nach einer Fehlermeldung erfolgt das Lösen der Kommunikationsverbindung, das Speichern der übermittelten Daten und deren Auswertung im Schritt 513 seitens der Datenzentrale.

Ein Transaktionsersuchen führt in der Frankiermaschine zu einer speziell gesicherten Guthabennachladung. Vorzugsweise erfolgt ein Absichern der außerhalb des Prozessors im Kostenstellenspeicher 10 vorliegenden Postregister außerdem während der Guthabennachladung mittels einer Zeitsteuerung. Wird die Frankiermaschine beispielsweise mit einem Emulator/Debugger observiert, dann ist es wahrscheinlich, daß die Kommunikations- und Abrechnungsroutinen nicht innerhalb einer vorbestimmten Zeit ablaufen. Ist das der Fall, d.h. die Routinen benötigen erheblich mehr Zeit, wird ein Teil des DES-Schlüssels geändert. Das Datenzentrum, kann diesen modifizierten Schlüssel während einer Kommunkikationsroutine feststellen und daraufhin die Frankiermaschine als suspekt melden, sobald gemäß Schritt 313 eine Beginn-Meldung verschlüsselt gesendet wird.

In der Datenzentrale wird im Schritt 509 festgestellt, daß der Fehler nicht behebbar ist. Die Datenzentrale kann dann keine Transaktion (Schritt 511) durchführen, weil zum Schritt 513 zurückverzweigt wurde. Da in der Frankiermaschine im Schritt 315 keine Daten empfangen wurden, war die Transaktion nicht fehlerfrei erfolgt (Schritt 316). Dann wird also über den Schritt 310 auf den Schritt 301 zurückverzweigt, um nach einer Anzeige erneut zu prüfen, ob ein Transaktionsersuchen weiterhin gestellt wird.

Ist das nicht der Fall, wird der Kommunikationsmodus 300 verlassen und der Punkt f, d.h. der Betriebsmodus 290 erreicht. Somit konnten im oben erörterten Fall, mit modifizierten DES-Schlüssel, keine Daten übermittelt werden (Schritt 211). Ebenfalls wird davon ausgegangen, daß weder eine Testanforderung (Schritt 212) noch ein Registerabruf (Schritt 214) veranlaßt wurde, um das Restguthaben zu prüfen. Dann aber wird der Frankiermodus 400 erreicht.

In einer anderen Variante werden die für die Übermittlung der für eine Guthabennachladung erforderlichen Daten relevanten Schlüssel (Krypto-Keys), welche im Speicher in kryptifizierter Form abgelegt worden sind, ebenfalls völlständig gelöscht, wenn ein unautorisierter Eingriff in die Frankiermaschine erfolgt. Wie bereits in Zusammenhang mit der Figur 7 erläutert wurde, kann nach einem Öffnungsersuchen die Öffnungsbefugnis erlangt werden, indem ein neues Codewort Y' nachgeladen wird. In der Figur 7 wird ein entsprechender Ablaufplan zur Codeworteinbringung nach der erfindungsgemäßen Lösung dargestellt.

Eine weitere Möglichkeit zur Realisierung des Kill-Modus ist das teilweise Löschen der Postregisterstände, welche redundant gespeichert vorliegen. Dabei wird zielgerichtet in vorbestimmter Weise die Redundanz verringert. Dieses Verringern der Redundanz soll sich unterscheiden von anderen Datenfehlern, die von der Frankiermaschine selbsttätig behoben werden können, wie das in der anhängigen europäischen Anmeldung EP 615 211 näher ausgeführt wird. Dort wird ein Verfahren zur Speicherkorrektur sicherheitsrelevanter Daten in einer Frankiermaschine vorgeschlagen, wobei redundant abgespeicherte Daten untereinander verglichen werden, um einen Speicherbereich mit fehlerhaften Daten wieder mit fehlerfreien Daten zu laden. Das ist aber bei einem sechsten Fehlertyp nicht mehr möglich, weil alle redundant gespeicherten Daten nun unterschiedliche Fehler haben, welche nicht mehr automatisch korrigiert werden können. Nur ein Servicetechniker könnte die Daten nach einer vorbestimmten Weise rekonstruieren, was dann nach jedem autorisiertem Öffnen vor erneuter Inbetriebnahme der Frankiermaschine zu geschehen hat.

Die Frankiermaschinen-Hardware ist außerdem in bekannter Weise durch eine verschließbare Klappe zugängig, welche über einen Sicherheitsschlüssel geöffnet werden muß. Eine weitere Schwelle für eine Manipulation ist das zuvor zu erbrechende Siegel bzw. die zu überwindende Siegel-Nummer, welche außerhalb der Frankiermaschine in der Datenzentrale ebenfalls gespeichert vorliegt. Die Datenzentrale gibt eine Feedback-Information an das Postamt bzw. den Inspektor aus, der das Siegel vor Ort visuell kontrolliert und mit der angezeigten intern gespeicherten Siegel-Nummer vergleicht.

Die Sicherheit setzt bei der autorisierten Öffnung voraus, die Zuverlässigkeit der berechtigten Person (Service, Inspektor) und die Möglichkeit deren Anwesenheit zu überprüfen. Die Kontrolle des Siegels und die Kontrolle der Registerstände bei einer Inspektion der Frankiermaschine und unabhängig davon der Daten in der Datenzentrale ergibt dann die Überprüfungssicherheit. Die Kontrolle der frankierten Postgüter unter Einbeziehung eines Sicherheitsabdruckes liefert eine zusätzliche Überprüfungssicherheit.

Die Frankiermaschine führt regelmäßig und/oder beim Einschalten den Registercheck durch und kann somit die fehlende Information erkennen, falls die Maschine unautorisiert geöffnet worden war. Die Frankiermaschine wird dann blockiert. Ohne die Erfindung in Verbindung mit einem Codewort Y würde der Manipulator die Blockierung leicht überwinden. So geht aber das Codewort verloren und es würde dem Manipulator zuviel Zeit und Aufwand kosten, das gültige Codewort durch Versuche zu ermitteln. In der Zwischenzeit wäre die Frankiermaschine längst in der Datenzentrale als suspekt registriert.

Der potentielle Manipulator einer Frankiermaschine muß mehrere Schwellen überwinden, was natürlich einen gewissen Zeitaufwand bedarf. Erfolgt in gewissen Zeitabständen keine Verbindungsaufnahme von der Frankiermaschine zur Datenzentrale, wird die Frankiermaschine bereits suspekt. Es ist dabei davon auszugehen, daß derjenige, der eine Manipulation an der Frankiermaschine begeht, sich kaum wieder bei der Datenzentrale melden wird.

Ein potentieller Betrüger, der aus oben genannten Gründen nicht an die gespeicherten Daten gelangt, wird erfindungsgemäß zusätzlich auch an einer Manipulation des Drucksteuersignals zum Druckkopf gehindert. Er könnte versucht sein, beim spaltenweisen Druck manipulierte variable Pixelbilddaten in das Drucksteuersignal einzuschleusen. Die Frankiermaschine wird gewöhnlich mit hoher bis maximaler Druckgeschwindigkeit betrieben. Bei einer Manipulation des Drucksteuersignals für den Druckkopf ergibt sich ein geänderter Zeitablauf, der nur bei geringerer Druckgeschwindigkeit vergleichbar simuliert werden könnte.

Der Druckkopf ist in der Frankiermaschine derart angeordnet, daß er nicht ohne Transportvorrichtung benutzt werden kann,um einen unabgerechneten Frankierstempel zu erzeugen. Eine solche Anordnung ist beispielsweise aus der US 4.705.417 ersichtlich. Jedoch sind auch andere Anordnungen mit Druckköpfen, welche auf einem anderen Druckprinzip beruhen denkbar,welche ohne die Transportvorrrichtung nicht benutzt werden können.

Da der Druckkopf ohne Transportvorrichtung nicht benutzt werden kann, um einen unabgerechneten Frankierstempel zu erzeugen, wird die Transportgeschwindigkeit bzw. die Druckgeschwindigkeit überwacht. Wird ein Thermotransferdrucker eingesetzt, genügt es die Bandgeschwindigkeit des Farbbandes, welche bereits über einen Encoder gemessen wird, auszuwerten. Die Encoderimpulse werden innerhalb eines Zeitfensters gezählt, welches vom Uhren/Datums-Baustein 8 geliefert oder aus dem Systemtakt der Steuereinrichtung 6 abgeleitet wird. Der Systemtakt wird mittels eines - in den Figuren 1a und 1b nicht gezeigten - quarzgesteuerten Taktgebers erzeugt. Weicht die Anzahl an Encoder-Impulsen von einer Sollanzahl ab, wird der Motor 12 entsprechend nachgesteuert. Ist die Soll/Ist-Abweichung über ein zulässiges Maß hinaus angestiegen, liegt ein Fehler vor. Dieser Fehler wird protokolliert und führt gegebenenfalls zum Außerbetriebsetzen der Frankiermaschine.

Im Schritt 202 des - in der Figur 2a dargestellten - Ablaufplanes kann dann überprüft werden, ob die Druckgeschwindigkeit eingehalten wird bzw. ob diese vom zulässigen Wert abweicht. Ist dieses Kriterium erfüllt, erfolgt eine entsprechende Warnung in der Anzeige, welche bei Nichtbeachtung letztlich zur Blockierung der Frankiermaschine führt.

Eine andere Variante überprüft den Zeitablauf beim spaltenweisen Druck, durch Vergleich der Zeitdauer für den Druck der einzelnen Spalten, in welchen variable Daten vorkommen. Insbesondere kann die Anzahl von Taktimpulsen des quarzgesteuerten Taktgebers zwischen den einzelnen Encoderimpulsen gezählt werden. In einem Schritt 207 kann dann überprüft werden, ob der Zeitablauf eingehalten wurde bzw. ob er vom zulässigen Zeitablauf abweicht. Ist dieses Kriterium erfüllt, erfolgt in einem weiteren Schritt 208 eine Maßnahme zur Blockierung der Frankiermaschine. Die Druckgeschwindigkeit wird durch die erforderliche Systemroutine bzw. Zeitdauer zur Sicherung der Frankiermaschine im Betriebsmodus kaum herabgesetzt.

Durch Erschließung aller Zeitreserven während des Druckes, durch den Mikroprozessor der Steuereinrichtung, der die spaltenweise Einbettung von Fensterdaten durchführt, bleibt kaum noch Raum bzw. Zeit für eine Manipulation. Das erfindungsgemäße Verfahren ist jedoch nicht auf derartige schnelle Frankiermaschinen beschränkt. Entscheidend ist die Überwachung der Druckgeschwindigkeit auf eventuell durch Manipulationen hervorgerufene Abweichungen im Zeitablauf, um neben den anderen bereits getroffenen Sicherheitsmaßnahmen außerdem eine Manipulation des Drucksteuersignals zu verhindern.

Die Steuereinrichtung 6 weist einen Mikroprozessor oder einen OTP auf. Im OTP sind neben einem Mikroprozessor auch nichtflüchtige Speicher und weitere Schaltungen in einem gemeinsamen Gehäuse untergebracht. Der interne nichtflüchtige Speicher umfaßt beispielsweise Programmspeicher und andere Datenspeicher, insbesondere auch die Möglichkeit Sicherungsbits zu setzen, die das Auslesen des internen nichtflüchtigen Speichers von außen verhindern. Diese Sicherungsbits werden während der Herstellung der Frankiermaschine im OTP gesetzt. Das Observieren solcher sicherheitsrelevanter Routinen, wie beispielsweise Abrechnungsroutinen, mit einem Emulator/Debugger würde ebenfalls zu einem veränderten Zeitablauf führen, was durch den OTP feststellbar ist. Dieser umfaßt auch eine Taktgeber/Zähler-Schaltung für die Vorgabe von Zeitintervallen bzw. Taktzyklen beispielsweise für die Time-out-Generierung oder Druckersteuerung. Wenn eine bestimmte Zeit abgelaufen ist und das erwartete Ereignis nicht eingetreten ist, wird vom der Taktgeber/Zähler-Schaltung ein Interrupt generiert, der dem Mikroprozessor den ergebnislosen Ablauf der Zeitspanne meldet, woraufhin der Mikroprozessor weitere Maßnahmen veranlaßt. Erfindungsgemäß wird die Taktgeber/Zähler-Schaltung für eine Programmlaufzeitüberwachung eingesetzt. Dabei wird von einer bekannten Anzahl von Taktzyklen für den Programmablauf von vorbestimmten Programmteilen ausgegangen. Vor dem Start der Routine wird der Zähler der Taktgeber/Zähler-Schaltung in vorbestimmter Weise voreingestellt bzw. zurückgesetzt. Nach dem Start der Programmroutine wird entsprechend den Taktimpulsen des Taktgebers der Zählerstand laufend verändert. Nach Abarbeitung der kritischen vorbestimmten Programmteile wird der Zustand des Zählers vom Mikroprozessor abgefragt und mit dem erwarteten Wert verglichen.

Bei vorbestimmter Abweichung in der Laufzeit kritischer bzw. sicherheitsrelevanter Programmteile, wird ein Flag in einem Speicher gesetzt, welches im Schritt 207 abgefragt wird. Bei Vorliegen dieses Abfragekriteriums wird auf den Schritt 208 verzweigt. Die Frankiermaschine kann somit nicht weiter zum Frankieren betrieben werden (Kill Mode 1).

Bei einer vorteilhaften weiteren Variante der Zeitkontrolle wird das Codewort Y im SRAM 24 über die Steuerleitung C gelöscht. Das kann in Verbindung mit der Adressenleitung A und der Datenleitung D durch Überschreiben mit einem vorbestimmten anderen Wort, beispielsweise 0000 erfolgen. Der Vorteil liegt insbesondere darin, daß selbst ohne einen Sensor 21 bzw. wenn aus irgendwelchen Gründen der Sensor 21 wirkungslos war, die Detektoreinrichtung 20 noch auf eine Manipulation reagiert, welcher natürlich ein unbefugtes Öffnen vorausgegangen sein muß.

Andere Varianten bzw. eine Kombination mit anderen Varianten, wie beispielsweise das Löschen eines Teils des DES-Schlüssel oder der redundanten Registerstände bzw. Löschen anderer Daten oder Schlüssel, welche für die Datenzentrale bei einer Transaktion Bedeutung haben, sind durch den Erfindungsgedanken eingeschlossen. Dabei ist wesentlich, daß kritische Programmteile im OTP gespeichert vorliegen und die Programmlaufzeit-überwachungsmittel software- und/oder hardwaremäßige Bestandteile des OTP sind. Damit können mit diesen Programmteilen die extern vom OTP im Programmspeicher PSP 11 gespeicherten kritischen Programme überwacht werden. Der Vorteil besteht darin, daß das Überwachungsprogramm selbst nicht observiert oder manipuiert werden kann, da es ständig im OTP verbleibt und auch nicht ausgelesen werden kann. In Kombination mit dem Sensor 21 wird somit eine höhere Sicherheit erreicht.

In einer abgerüsteten Variante wird der Sensor 21 eingespart, weil das Gehäuse anderweitig ausreichend gesichert ist und die Überwachungsfunktion in vorgenannter Weise durch die in Verbindung mit einer entsprechenden Software wirksame Detektoreinrichtung 20 übernommen wird. Die Detektoreinrichtung 20 kann - in einer in der Figur 1b nicht dargestellten Variante - auch Bestandteil des Prozessors (OTP) sein. Diese Einrichtung 20 ist dabei vorzugsweise als ein von extern nicht auslesbarer nichtflüchtiger Speicher ausgebildet. Ein geeigneter Prozessortyp ist beispielsweise der TMS 370 C010 von Texas Instruments, welcher einen 256 Bytes $E^2$PROM aufweist. Nimmt ein Manipulator einen unautorisierten Eingriff vor, wird die Frankiermaschine durch das Überführen in den ersten Modus wirksam außer Betrieb gesetzt.

Bei einer Inspektion werden zunächst das Siegel der Frankiermaschine auf Unversehrtheit und dann die Registerstände überprüft. Bei Bedarf kann ein Probeabdruck mit dem Wert 0 gemacht werden. Bei einer Reparatur durch den Service vor Ort muß eventuell in die Frankiermaschine eingegriffen werden. Die Fehlerregister sind beispielsweise mit Hilfe eines speziellen Service-EPROM auslesbar, welches an die Stelle des Advert-EPROM gesteckt wird. Wenn auf diesen EPROM-Steckplatz vom Prozessor nicht zugegriffen wird, wird gewöhnlich ein Zugriff auf die Datenleitungen durch spezielle - in den Figuren 1a und 1b nicht dargestellte - Treiberschaltkreise verhindert. Die Datenleitungen, welche hier durch eine versiegelte Gehäusetür erreichbar sind, können somit nicht unbefugt kontaktiert werden. Eine andere Variante ist das Auslesen von Fehlerregisterdaten durch einen über eine Schnittstelle angeschlossenen Service-Computer. Zur Vorbereitung des Eingriffs werden die Register der Frankiermaschine abgefragt, um die Art des erforderlichen Eingriffs zu ermitteln. Bevor in die Frankiermaschine eingegriffen und das Gehäuse geöffnet wird, erfolgt ein separater Anruf bei der Datenzentrale. Wird dannach innerhalb einer vorbestimmten Zeitdauer der Vorgabewert auf Null geändert und zur Datenzentrale im Rahmen einer Transaktion übermittelt, d.h. die Art des Eingriffs und die Registerdaten wurden der Datenzentrale mitgeteilt, erfolgt ein Übermitteln von Daten von einer Datenzentrale zur Frankiermaschine entsprechend einem beantragten autorisierten Eingriff in die Frankiermaschine, welcher als erlaubter Eingriff protokolliert wird.

Wird innerhalb einer vorbestimmten Zeitdauer aber der Vorgabewert auf einen Wert verschieden von Null geändert und zur Datenzentrale im Rahmen einer Transaktion übermittelt, bleibt ein zuvor erfolgter separater Anruf zur Datenzentrale folgenlos, d.h. ein Öffnungsgesuch gilt als nicht gestellt und eine Befugnis zum autorisierten Eingriff (Öffnungsbefugnis) in die Frankiermaschine wird nicht erteilt und folglich kein neues Codewort Y'übermittelt.

Die Frankiermaschine ist fähig, zu unterscheiden zwischen beantragten autorisierten und unautorisierten Eingriff in die Frankiermaschine mittels der Steuereinheit der Frankiermaschine in Verbindung mit den von der Datenzentrale übermittelten Daten,wobei bei unautorisierten Eingriff in die Frankiermaschine dieser Eingriff als Fehlerfall protokolliert wird, aber nach erfolgten autorisierten Eingriff in die Frankiermaschine der ursprüngliche Betriebszustand mittels den vorgenannten übermittelten Daten wiederhergestellt wird.

Es ist außerdem auch in Zeiten in welchen nicht gedruckt wird (Standby Modus) vorgesehen, daß eine Abfrage hinsichtlich Manipulationsversuchen erfolgt und/oder die Checksumme der Registerstände und/oder über den Inhalt des Programmspeichers PSP 11 gebildet wird. Zur Verbesserung der Manipulationssicherheit wird dabei für einen Kill-Mode 2 die Checksumme im OTP über den Inhalt des externen Programmspeichers PSP 11 gebildet und das Ergebnis mit einem im OTP gespeicherten vorbestimmten Wert verglichen. Dies erfolgt vorzugsweise im Schritt 101, wenn die Frankiermaschine gestartet wird, oder im Schritt 213, wenn die Frankiermaschine im Standby-Modus betrieben wird. Der Standby-Modus wird erreicht, wenn eine vorbestimmte Zeit keine Eingabe- bzw. Druckanforderung erfolgt. Letzteres ist der Fall, wenn ein ansich bekannter - nicht näher dargestellter - Briefsensor keinen nächsten Briefumschlag ermittelt, welcher frankiert werden soll. Der - in der Figur 4b gezeigte - Schritt 405 im Frankiermodus 400 umfaßt daher noch eine weitere Abfrage nach einem Zeitablauf oder nach der Anzahl an Durchläufen durch die Programmschleife, welche letztendlich wieder auf die Eingaberoutine gemäß Schritt 401 führt. Wird das Abfragekriterium erfüllt, wird im Schritt 408 ein Standby-Flag gesetzt und direkt auf den Punkt s zur Systemroutine 200 zurückverzweigt, ohne daß die Abrechnungs- und Druckroutine im Schritt 406 durchlaufen wird. Das Standby-Flag wird später im Schritt 211 abgefragt und nach der Checksummenprüfung im Schritt 213 zurückgesetzt, falls kein Manipulationsversuch erkannt wird.

Das Abfragekriterium in Schritt 211 wird dazu um die Frage erweitert, ob das Standby-Flag gesetzt ist, d.h. ob der Standby Modus erreicht ist. In diesem Fall wird ebenfalls auf den Schritt 213 verzweigt. Eine bevorzugte Variante besteht darin, in der bereits beschriebenen Weise das Codewort Y zu löschen, wenn ein Manipulationsversuch im Standby Modus auf vorgenannte Weise im Schritt 213 festgestellt worden ist. Das Fehlen des Codewortes Y wird im Schritt 207 erkannt und dann auf den Schritt 208 verzweigt. Der Vorteil dieses Verfahrens in Verbindung mit dem ersten Modus besteht darin, daß der Manipulationsversuch statistisch im Schritt 213 erfaßt wird.

Um die Sicherheit gegenüber Manipulationen weiter zu erhöhen wird erfindungsgemäß eine Flußkontrolle (Flow Control) eingesetzt, welche nachfolgend erläutert wird. Eine solche Flow Control erfolgt durch Verändern eines Zählwertes in einem Speicher an mindestens einem Punkt während der Ausführung der Programmroutine. Nach Ausführung der Programmroutine wird der veränderte Zählwert mit einem dieser Programmroutine zugeordneten vorbestimmten Zählwert verglichen. Werden nun während der Programmausführung Verzweigungen durchlaufen, so können sich unterschiedliche Zählwerte ergeben. In einer nachfolgenden Auswertung wird ein Plausibilitätstest durchgeführt bzw. es kann festgestellt werden, welche Verzweigungen durchlaufen wurden. Das ist dadurch möglich, da die Veränderung des Zählwertes durch eine Multiplikation mit einer bestimmten dem jeweiligen Programmteil zugeordneten Primzahl erfolgt. Bei einer späteren Auswertung muß dann lediglich eine Primzahlzerlegung durchgeführt werden.

In einer anderen Variante, wo nur solche Programmteile ohne Verzweigungen berücksichtigt werden bzw. keine Rückverfolgung der durchlaufenen Programmzweige erforderlich wird, ist ein Inkrementieren des Zählwertes und abschließender Vergleich mit mindestens einem vorbestimmten Zahlwert ausreichend.

Die Erläuterung der Abläufe nach dem - in der Figur 4a gezeigten - Frankiermodus erfolgt in Verbindung mit dem - in der Figur 1a dargestellten - Blockschaltbild.

Die Erfindung geht davon aus, daß nach dem Einschalten automatisch der Postwert im Wertabdruck entsprechend der letzten Eingabe vor dem Ausschalten der Frankiermaschine und das Datum im Tagesstempel entsprechend dem aktuellem Datum vorgegeben werden, daß für den Abdruck die variablen Daten in die festen Daten für den Rahmen und für alle unverändert bleibenden zugehörigen Daten elektronisch eingebettet werden. Diese variablen Daten der Fensterinhalte werden nachfolgend kurz als Fensterdaten und alle festen Daten für den Wertstempel, den Tagesstempel und den Werbeklischeestempel als Rahmendaten bezeichnet. Die Rahmendaten sind einem ersten Speicherbereich eines Nurlesespeichers (ROM), welcher zugleich als Programmspeicher 11 dient, entnehmbar. Die Fensterdaten werden einem zweiten Speicherbereich entnommen und entsprechen der Eingabe in Speicherbereichen Bj des nichtflüchtigen Arbeitsspeichers 5 gespeichert. Sie sind diesem jederzeit zwecks eines Zusammensetzens zu einer Gesamtdarstellung eines Frankierbildes entnehmbar. Dabei ist vorgesehen, die hexadezimalen Fensterdaten in lauflängencodierter Form in die jeweils getrennten Speicherbereiche $B_1$ bis $B_4$ des nichtflüchtigen Arbeitsspeichers 5 zu übertragen und dort abzuspeichern. Außerdem läuft die Zeit im Uhren/Datums-Baustein ständig auch bei ausgeschalteter Frankiermaschine weiter. Wird also der Schritt 401 im Frankiermodus 400 erreicht, kann nach dem Einschalten der Frankiermaschine auch ohne Eingabe auf bereits gespeicherte Daten zurückgegriffen werden. Diese Einstellung betrifft insbesondere die letzte Einstellung der Frankiermaschine hinsichtlich des Portowertes, welche im Schritt 402 angezeigt wird, bevor im Schritt 403 die Druckdatenaufbereitung erfolgt. Hierbei werden die aktuellen variablen Pixelbilddaten (Datum und Portowert) in die festen Rahmenpixelbilddaten eingebettet. Anschließend erfolgt im Schritt 404 eine Abfrage der Eingabemittel auf eventuelle weitere Eingaben.

Erfindungsgemäß werden die Daten aus beiden Speicherbereichen entsprechend einer vorbestimmten Zuordnung vor dem Druck zu einem Pixeldruckbild zusammengesetzt. Die variable Information im dafür vorgesehenen Fenster können nachträglich ergänzt und modifiziert werden. Um Zeit einzusparen, werden nur die Teile einer graphischen Darstellung bei einer Änderung neu im nichtflüchtigen Arbeitsspeicher eingespeichert, die tatsächlich geändert werden. Im Programmspeicher 11 liegt ein erster Speicherbereich A (u.a. für die Daten der konstanten Teile des Frankierbildes u.a. den Werbeklischee-Rahmen) vor. Die Subspeicherbereiche $A_i$ sind für i = 1 bis m Rahmen- oder Fixdaten vorgesehen, wobei ein zugeordneter Index i den jeweiligen Rahmen kennzeichnet, welcher vorzugsweise einer bestimmten Kostenstelle zugeordnet ist. Die entsprechende Zuordnung der jeweiligen Kostenstelle zu den Rahmendaten wird nach dem Einschalten automatisch abgefragt. In einer anderen Variante muß nach jedem Einschalten während der Startroutine die Kostenstelle erneut in den Speicherbereich C eingegeben werden, während sie bei kurzzeitigen Betriebsspannungsunterbrechungen erhalten bleibt.

Im Charakterspeicher 9 sind alle alphanumerischen Zeichen bzw. Symbole pixelweise als binäre Daten abgelegt. Daten für alphanumerische Zeichen bzw. Symbole sind im nichtflüchtigen Arbeitsspeicher 5 komprimiert in Form einer Hexadezimalzahl abgespeichert. Sobald die Nummer der Kostenstelle eingegeben im Speicherbereich C gespeichert vorliegt, werden die komprimierten Daten aus dem Programmspeicher 11 mit Hilfe des Charakterspeichers 9 in ein binäre Pixeldaten aufweisendes Druckbild umgewandelt, welches in solcher dekomprimierten Form im flüchtigen Arbeitsspeicher 7 gespeichert wird (Schritt 403). Zur Erläuterung der Erfindung werden nachfolgend Arbeitsspeicher 7a, 7b und Pixelspeicher 7c verwendet, obwohl es sich hierbei physikalisch vorzugsweise um einen einzigen Speicherbaustein handelt.

Die Speicherbereiche im nichtflüchtigem Arbeitsspeicher 5 können eine Vielzahl von Subspeicherbereichen enthalten, unter welchen die jeweiligen Daten in Datensätze gespeichert vorliegen. Die Subspeicherbereiche Bj sind für j = 1 bis n Fensterdaten vorgesehen, wobei verschiedene Zuordnungen zwischen den Subspeicherbereichen der verschiedenen Speicherbereiche vorbestimmt gespeichert sind.

In einem jeden Datensatz eines Subspeicherbereiches $A_i$, $B_j$ sind abwechselnd nacheinander Steuercode und lauflängencodierte Rahmen- bzw. Fensterdaten enthalten. Vor dem Druck werden im Schritt 403 aus dem nichtflüchtigen Programmspeicher (PSP) 11 die jeweiligen ausgewählten festen Daten in die Register 100, 110, 120, ..., eines flüchtigen Arbeitsspeichers 7a übernommen, wobei während der Übernahme Steuercode dekodiert und in einem gesonderten Speicherbereich des Arbeitsspeichers 7b gespeichert werden. Ebenso werden die jeweiligen ausgewählten Fensterdaten für den Poststempel und den Portostempel in Register 200, 210, 220, ..., geladen. Vorzugsweise werden die Register von Subspeicherbereichen im Speicherbereich des Arbeitsspeichers 7a gebildet. In einer anderen Variante sind diese vorgenannten Register Bestandteil der Mikroprozessorsteuerung 6. Durch Dekomprimieren werden die lauflängencodierten hexadezimalen Daten in entsprechende binäre Pixeldaten überführt.

Die einmal aufgerufenen konstanten Teile des Frankierbildes stehen im Pixelspeicherbereich I im flüchtigen Pixelspeicher 7c ständig dekodiert zur Verfügung. Für eine schnelle Änderung der Fensterdaten, existiert ein zweiter Speicherbereich B im nichtflüchtigen Arbeitsspeicher 5.

Die Zahlenketten (sTrings), die für die Erzeugung der Eingabedaten mit einer Tastatur 2 oder aber über eine an die Ein/Ausgabeeinrichtung 4 angeschlossene, den Portowert errechnende, elektronische Waage 22 eingegeben werden, werden automatisch im Speicherbereich D des nichtflüchtigen Arbeitsspeichers 5 gespeichert. Außerdem bleiben auch Datensätze der Subspeicherbereiche, zum Beispiel $B_j$, C usw., erhalten. Damit ist gesichert, daß die letzten Eingabegrößen auch beim Ausschalten der Frankiermaschine erhalten bleiben, so daß nach dem Einschalten automatisch der Portowert im Wertabdruck entsprechend der letzten Eingabe vor dem Ausschalten der Frankiermaschine und das Datum im Tagesstempel entsprechend dem aktuellem Datum vorgegeben wird. Ist eine Waage 22 angeschlossen, wird der Portowert aus dem Speicherbereich D entnommen. Im Schritt 404 wird gewartet, bis ein solcher aktuell gespeichert vorliegt. Bei einer erneuten Eingabeanforderung im Schritt 404 wird wieder auf den Schritt 401 zurückverzweigt. Anderenfalls wird auf den Schritt 405 verzweigt, um die Druckausgabeanforderung abzuwarten. Durch einen Briefsensor wird der zu frankierende Brief detektiert und damit eine Druckanforderung ausgelöst. Somit kann auf die Abrechnungs- und Druckroutine im Schritt 406 verzweigt werden. Liegt keine Druckausgabeanforderung (Schritt 405) vor, wird zum Schritt 401 (Punkt d) oder - nach einer in der Figur 4b gezeigten Variante - zum Schritt 301 (Punkt e) zurückverzweigt.

Wenn nach der - in der Figur 4b dargestellten - anderen Variante statt zum Punkt d nunmehr zum Punkt e zurückverzweigt und der Schritt 301 erreicht wird, kann jederzeit ein Kommunikationersuchen gestellt oder eine andere Eingabe gemäß den Schritten Testanforderung 212, Registercheck 214, Eingaberoutine 401 getätigt werden. Es werden weitere Schritte 401 bis 404, wie bei der Variante nach Figur 4a, durchlaufen. Ein weiteres Abfragekriterium kann im anschließenden Schritt 405 abgefragt werden, um im Schritt 408 ein Standby-Flag zu setzen, wenn nach einer vorbestimmten Zeit noch keine Druckausgabeanforderung vorliegt. Wie bereits oben erläutert, kann das Standby-Flag im auf den Kommunikationsmodus 300 folgenden Schritt 211 abgefragt werden. Damit wird nicht auf den Frankiermodus 400 verzweigt, bevor nicht die Checksummenprüfung die Vollzähligkeit aller oder mindestens ausgewählter Programme ergeben hat.

Falls eine Druckausgabeanforderung im Schritt 405 erkannt wird, werden weitere Abfragen in den nachfolgenden optionalen Schritten 409 und 410 sowie im Schritt 406 getätigt. Beispielsweise werden im Schritt 409 das Vorhandensein eines im Schritt 208 (Fig.2b) gesetzten Kill-Mode-Flag's, im Schritt 410 das Erreichen eines weiteren Stückzahlkriterium und/oder im Schritt 406 die in bekannten Weise zur Abrechnung eingezogenen Registerdaten abgefragt. War die zum Frankieren vorbestimmte Stückzahl bei der vorhergehenden Frankierung verbraucht, d.h. Stückzahl gleich Null, wird automatisch zum Punkt e verzweigt, um in den Kommunikationsmodus 300 einzutreten, damit von der Datenzentrale eine neue vorbestimmte Stückzahl S wieder kreditiert wird. War jedoch die vorbestimmte Stückzahl noch nicht verbraucht, wird vom Schritt 410 auf die Abrechnungs- und Druckroutine im Schritt 406 verzweigt.

Die Anzahl von gedruckten Briefen, und die aktuellen Werte in den Postregistern werden entsprechend der eingegebenen Kostenstelle im nichtflüchtigen Speicher 10 der Frankiermaschine in einer Abrechnungsroutine 406 registriert und stehen für eine spätere Auswertung zur Verfügung. Ein spezieller Sleeping-Mode-Zähler wird während der unmittelbar vor dem Druck erfolgenden Abrechnungsroutine veranlaßt, einen Zählschritt weiterzuzählen.

Die Registerwerte können bei Bedarf im Anzeigemodus 215 abgefragt werden. Es ist ebenfalls vorgesehen, die Registerwerte mit dem Druckkopf der Frankiermaschine zu Abrechnungszwecken auszudrucken. Das kann beispielsweise ebenso erfolgen, wie das bereits in der deutschen Offenlegungsschrift P 42 24 955 A1 näher ausgeführt wird.

Es ist bei einer anderen Variante weiterhin vorgesehen, daß auch variable Pixelbilddaten während des Druckens in die übrigen Pixelbilddaten eingebettet werden. Entsprechend der vom Encoder 13 gelieferten Positionsmeldung über den Vorschub der Postgutes bzw. Papierstreifens in Relation zum Druckermodul 1 werden die komprimierten Daten aus dem Arbeitsspeicher 5 gelesen und mit Hilfe des Charakterspeichers 9 in ein binäre Pixeldaten aufweisendes Druckbild umgewandelt, welches ebenfalls in solcher dekomprimierten Form im flüchtigen Arbeitsspeicher 7 gespeichert wird. Nähere Ausführungen sind den europäischen Anmeldungen EP 576 113 A2 und EP 578 042 A2 entnehmbar.

Der Pixelspeicherbereich im Pixel-Speicher 7c ist also für die ausgewählten dekomprimierten Daten der festen Teile des Frankierbildes und für die ausgewählten dekomprimierten Daten der variablen Teile des Frankierbildes vorgesehen. Nach der Abrechnung erfolgt die eigentliche Druckroutine (im Schritt 406).

Wie aus den Figuren 1a und 1b hervorgeht, stehen der Arbeitsspeicher 7b und der Pixelspeicher 7c mit dem Druckermodul 1 über eine ein Druckregister (DR) 15 und eine Ausgabelogik aufweisende Druckersteuerung 14 in Verbindung. Der Pixelspeicher 7c ist ausgangsseitig an einen ersten Eingang der Druckersteuerung 14 geschaltet, an deren weiteren Steuereingängen Ausgangssignale der Mikroprozessorsteuereinrichtung 6 anliegen.

Sind alle Spalten eines Druckbildes gedruckt worden, wird wieder zur Systemroutine 200 zurückverzweigt.

Der in der Figur 2a dargestellte Ablaufplan für ein Sicherheitssystem weist Schritte 201 bis 206 für eine Überwachung weiterer Kriterien auf. Bei einer Verletzung eines der Sicherheitskriterien tritt die Frankiermaschine in einen Sleeping-Modus ein, beispielsweise, wenn nach Verbrauch einer vorbestimmten Stückzahl noch keine Verbindung zur Datenzentrale aufgenommen wurde. Anhand der Figur 5 wird ein Detail des Ablaufplanes für eine erste Sleeping-Mode-Variante erläutert. Von der Systemroutine 200 ausgehend tritt die Frankiermaschine in einen Schritt 201 ein, in welchem aktuelle Daten $S$ und $S_{ref}$ aufgerufen werden. Die Frankiermaschine enthält einen fest gespeicherten Stückzahlvergleichswert $S_{ref}$. In Übereinstimmung mit der Höhe des gerade während einer Kommunikation nachgeladenen Guthabens wurde u.a. intern eine Sleepingmodestückzahl $S$ errechnet, welche nachfolgend bei jeder Frankierung dekrementiert wird. Dies wird fortgesetzt, bis der Stückzahlvergleichswert $S_{ref}$ erreicht ist. Wird ein solches im Schritt 202 festgestellt, erfolgt im Schritt 203 eine Warnung, beispielsweise "TELESET", um den Benutzer der Frankiermaschine zu einer Kommunikation mit der Datenzentrale aufzufordern. Durch diese Anzeige ergibt sich eine Verzögerung $t_n$ im Betriebsablauf der Frankiermaschine. Im nachfolgenden Schritt 204 wird die Verzögerung für eine nächste Anzeige mit der Zeitdauer $t_k$ inkrementiert aber der Stückzahlvergleichswert um den Wert n dekrementiert, bevor auf den Schritt 207 verzweigt wird. Damit ist sichergestellt, daß die Aufforderung die Kommunikation mit der Datenzentrale herzustellen immer dringlicher wird, weil die Frankiermaschine immer länger im Schritt 203 verweilt. Wurde jedoch eine Kommunikation 300 durchgeführt, wurden Daten übermittelt (Schritt 211) und im Bereich G des nichtflüchtigen Speichers 5 der Frankiermaschine während des Statistik- und Fehlerauswertemodus gespeichert.

Die Frankiermaschine und die Datenzentrale verabreden jeweils eine vorbestimmte Stückzahl $S$, d.h. die Menge, die bis zur nächsten Verbindungsaufnahme frankiert werden kann. Falls eine Kommunikation nicht zustande kommt (Stückzahlkontrolle), verlangsamt die Frankiermaschine ihre Arbeitsweise (Sleeping Modus-Variante 1). Als aktuelle Daten werden im Schritt 201 somit die zurückgesetzten Größen $t_n$ bzw. Werte $S$ und $S_{ref}$ aufgerufen. Wird in der Datenzentrale ermittelt, welche Stückzahl bis zur nächsten Verbindungsaufnahme frankiert werden soll, müssen gespeicherte historische Daten über das Guthabennachlade- bzw. Frankierverhalten (Stückzahl von Postgütern mit Durchschnitts-Porto) herangezogen werden. Die Übermittlung einer neuen Stückzahl $S'$ kann dann auf die gleiche Art und Weise erfolgen, wie das im Zusammenhang mit der Übermittlung des neuen Codewortes $Y'$ bereits erläutert wurde. Bei einer Kommunikation gemäß Figuren 3a und 3b wird dann eine neue vorbestimmte Stückzahl $S'$ übermittelt und als Stückzahl $S$ bei laufender Frankierung dekrementiert. Aus der neuen vorbestimmten Stückzahl $S'$ wird intern die Vergleichsstückzahl $S_{ref}$ errechnet (Schritt 213).

In der Figur 6 ist der modifizierte Ablaufplan für eine zweite Sleeping-Modus-Variante gezeigt. Die Schritte 100 bis 105 sowie 210 sind nicht mit dargestellt worden. Nach dem Aufruf der übermittelten aktuellen Daten im Schritt 201, wird im Schritt 202 die zu dekrementierende Stückzahl $S$ mit einer Vergleichsstückzahl verglichen. Die Vergleichsstückzahl ermittelt sich aus der Division einer maximalen Stückzahl $S_{max}$ durch eine Zahl k. Ist das Kriterium erfüllt, wird wieder auf einen Schritt 203, welcher die Warnung, beispielsweise "CALL FP" kurzzeitig anzeigt. Anschließend wird im Schritt 204 die neue maximale Stückzahl $S_{max}$ über eine Division mit einer weiteren Zahl m gebildet, welche für den nächsten Vergleich im Schritt 202 erforderlich sein würde, falls keine Kommunikation mit der Datenzentrale bzw. keine Guthabennachladung erfolgt. Damit kann bis zur nächsten Stückzahlgrenze ohne Anzeige einer Warnung weiter gearbeitet werden. Jedoch ist es möglich in immer kürzeren Abständen, d.h. nach einer vorbestimmten Anzahl an Frankierungen, eine erneute Warnung auszugeben, welche so immer dringlicher auf das Erfordernis einer Kommunikation mit der Datenzentrale aufmerksam macht. Das Frankieren wird nicht beeinträchtigt. Solange die Überprüfung im Schritt 205 ergibt, daß die Stückzahl $S$ noch größer Null ist, wird der Schritt 207 erreicht. Lediglich die Warnung erscheint immer öfter in der Anzeige. Anderenfalls wird auf den Schritt 206 verzweigt, wobei beispielsweise ein FLAG gesetzt wird, welches später im Schritt 301 abgefragt und als Kommunikationsersuchen gewertet wird. Im Schritt 206 kann ebenfalls eine zusätzliche Anzeige erfolgen, daß nun automatisch die Kommunikation erfolgt und solange die Frankierfunktion ruht, bis die Kommunikation erfolgreich abgeschlossen ist. Natürlich kann jederzeit der Frankiermaschinenbenutzer schon vorher den Kommunikationsmodus aufrufen.

Eine andere Variante kommt ohne den in der Figur 6 gezeigten Schritt 204 aus. Es wird eine ständige Warnung für ein bevorstehendes Schlafenlegen der Frankierfunktion im Schritt 203 ausgegeben, weil dieser nun aufgrund des erfüllten Abfragekriteriums in Schritt 202 ständig durchlaufen werden muß, bevor Schritt 205 erreicht wird. Es ist weiterhin vorgesehen, daß der Schritt 203 einen Subschritt zur Fehlerstatistik entsprechend dem Statistik- und Fehlerauswertungsmodus 213 umfaßt.

Die Frankiermaschine verlangt in der aus US 3 255 439 bekannten Weise eine Verbindung zur Datenzentrale. Kommt die Verbindung zustande, prüft die Datenzentrale die Registerstände. Falls die Nachladung nicht vorgenommen werden kann, hindert die Datenzentrale durch ein zur Frankiermaschine übermitteltes Signal diese am weiteren Betrieb. Wenn die Verbindung kurz nach der von der Frankiermaschine vorgenommenen Signalisierung zustande kam und die Registerstände nicht bemängelt werden, kann die Frankiermaschine ohne eine weitere außerordentliche Inspektion in den Betriebsmodus zurückgeschaltet werden. Hierzu werden neue aktuelle Daten beispielsweise für ein Guthaben und für die erlaubte Stückzahl übermittelt, welche bis zur nächsten Verbindungsaufnahme frankiert werden kann.

Die Datenzentrale kann aufgrund des übermittelten Signalisierungscodes zwischen automatisch vorgenommener und normaler Kommunikation unterscheiden. Erstere wird immer dann erfolgen, wenn der Nutzer der Frankiermaschine die Aufforderungen zur Kommunikation übersehen bzw. ignoriert hat und entsprechende Eingabehandlungen unterläßt. Hierbei kann im Wiederholungsfall bei einem Verdacht einer Manipulation eine Sonderinspektion angeordnet werden.

Es ist vorgesehen, daß die im Schritt 201 aufgerufenen aktuellen Daten unmittelbar nach einer Kommunikation eine berechnete bzw. übermittelte spezifische Stückzahl S' als Stückzahl S und eine maximale Stückzahl $S_{max}$ umfassen. Die Vergleichsstückzahl $S_{ref}$ für ein erstes Stückzahlkriterium entspricht der durch die Zahl k dividierten berechneten bzw. übermittelten maximalen Stückzahl $S_{max}$. Bei Erfüllung des im Schritt 202 abgefragten ersten Stückzahlkriteriums für den zweiten Modus wird auf den folgenden Schritt 203 verzweigt, der eine ständige Warnung für ein bevorstehendes Schlafenlegen der Frankiermaschinenfunktion bzw. eine Aufforderung zur erneuten Kommunikation mit der Datenzentrale umfaßt, bevor Schritt 205 zur Überprüfung der Daten mittels eines weiteren Stückzahlkriteriums erreicht wird. Bei Nichterfüllung des weiteren Stückzahlkriteriums wird ein Schritt 206 zum automatischen Kommunikationsersuchen der Frankiermaschine ausgeführt. Während einer Kommunikation mit der Datenzentrale werden die Transaktionsdaten einzeln und seriell übertragen, die mindestens ein durch einen MAC abgesichertes Entscheidungskriterium umfassen, wodurch das automatische Kommunikationsersuchen aufgehoben wird, falls die Transaktion erfolgreich durchgeführt wurde. Zuvor wurde im Schritt 306 des - in Figur 3a gezeigten - Kommunikationsmodus 300 festgestellt, daß keine weitere Transaktion erforderlich ist und nach Anzeige (Schritt 310) auf den Punkt e zurückverweigt. Wenn also manuell kein weiteres Transaktionsersuchen eingegeben wird, wird vom Schritt 301 zum Betriebsmodus (Punkt f) weiterverzweigt. Somit kann im Schritt 301 zwischen manuell und automatisch gestellten Transaktionsersuchen unterschieden werden. Wenn die Kommunikation nach einer vorbestimmten Zeit noch nicht zustande gekommen oder beispielsweise die Datenzentrale belegt, d.h. keine Leitung frei ist, wird dies im Schritt 305 als Kommunikationsfehler gewertet. Dann wird zum Schritt 304 zurückverzweigt und eine Wahlwiederholung bis zu einer vorbestimmten Anzahl vorgenommen. Ist diese vorbestimmte Anzahl erreicht wird vom Schritt 305 über den Anzeigeschritt 310 wieder zum Punkt e zurückverzweigt. Außerdem können im Schritt 305 falls n Wahlwiederholungen erfolglos waren ein eventuell gesetztes Kommunikations-Flag zurückgesetzt werden, so daß im Schritt 301 diesbezüglich kein Transaktionsersuchen mehr erkannt wird. Zusätzlich kann gleichzeitig ein Standby-Flag gesetzt werden, was wieder im Schritt 211 erkannt wird. Somit werden in der vorgenannten Weise im Schritt 213 zur Statistik- und Fehlerauswertung anhand einer Checksumme der Inhalt des Programmspeichers (PSP) 11 überprüft oder andere Tests durchgeführt. Nach diesen Tests wird das Standby-Flag zurückgesetzt und zur Systemroutine 200 Punkt s zurückverzweigt.

Wenn gemäß Figur 4b nach der anderen Variante für den Frankiermodus 400 gearbeitet wird, welche einen Schritt 410 einschließt, dann braucht kein Standby-Flag gesetzt werden. Vom Frankiermodus kann dann direkt auf den Kommunikationsmodus 300 Punkt e zurückverzweigt werden. Damit können weiterhin auch andere Eingaben, beispielsweise gemäß den Schritten Testanforderung 212 oder Registercheck 214 getätigt werden. Nur falls auf den Frankiermodus 400 verzweigt wird, wird dann im Schritt 410 entsprechend dem Entscheidungskriterium erneut festgestellt, ob eine automatische Kommunikation erfoderlich ist. Das ist vorzugsweise der Fall, falls die vorbestimmte Stückzahl verbraucht ist.

War die Kommunikation erfolgreich und wurden Daten übermittelt (im Schritt 211 abgefragt), wird ebenfalls der Schritt 213 erreicht. Im Schritt 213 werden die aktuellen Daten ermittelt bzw. geladen, welche im Schritt 201 aufgerufen und anschließend wieder beim Vergleich im Schritt 202 benötigt werden. Das übermittelte Entscheidungskriterium ist vorzugsweise die neue Stückzahl S'.

Eine alternative Variante besteht darin, daß das Entscheidungskriterium das neue zum Frankieren übermittelte Guthaben ist und im Auswertemodus 213 die neue Stückzahl S' intern in der Frankiermaschine ermittelt wird. Die Kommunikation mit der Datenzentrale umfaßt in diesem Fall nicht mehr die neue Stückzahl S', sondern ist lediglich zur Auslösung der Berechnung im Auswertemodus 213 erforderlich. Die Berechnung erfolgt intern in der Frankiermaschine und gleichzeitig parallel dazu in der Datenzentrale nach den gleichen Methoden aufgrund der übermittelten Registerdaten.

Die Frankiermaschine kann der Datenzentrale Registerwerte vor einer Guthabennachladung übermitteln:

R1 (descending register) vorrätige Restbetrag in der Frankiermaschine,
R2 (ascending register) Verbrauchssummenbetrag in der Frankiermaschine,
R3 (total resetting) die bisherige Gesamtvorgabesumme aller Fernwertvorgaben,
R4 (piece count Eprinting with value ≠ O) Anzahl gültiger Drucke,
R8 (R4 + piece count Eprinting with value =O) Anzahl aller Drucke

daraus folgt:

$$R3 = R2 + R1 \qquad (1)$$

Bei jeder Fernwertvorgabe läßt sich R1 abfragen und statistisch auswerten. Wird R1 immer größer, dann kann der gleiche Nachladebetrag in immer größeren Nachladeperioden nachgeladen werden, bzw. die Stückzahl wird kleiner angesetzt, welche bis zur nächsten Kommunikation frankiert werden darf.

Die Stückzahl kann aus der Durchschnittsstückzahl $S_o$, der eine Dispositionsstückzahl $S_x$ hinzuaddiert wird, ermittelt werden. Es gilt:

$$S' = S_O + S_X \qquad (2)$$

mit

$$\text{mit} \quad S_O = R_{8alt} \left[ \frac{R_2 \text{ neu}}{R_2 \text{ alt}} - 1 \right] \qquad (3)$$

bzw.

$$\text{bzw.} \quad S_O = R_{4alt} \left[ \frac{R_2 \text{ neu}}{R_2 \text{ alt}} - 1 \right] \qquad (4)$$

Die abgefragten Registerwerte sind mit dem Index "alt" versehen. Ein dem Ascending-Register entnommener Wert $R_{2alt}$ entspricht dem aktuellen Abfragewert. Entsprechend eines Vorgabewunsches, der zum aktuellen Abfragewert hinzuaddiert werden muß, ergibt sich der künftige Wert $R_{2neu}$. Die Dispositionsstückzahl $S_x$ ist abhängig von der Einstufung des Frankiermaschinen-Nutzers als A-, B- oder C-Kunde.

In einer weiteren Variante wird die Dispositionsstückzahl $S_x$ in Abhängigkeit von der Einstufung $\alpha_x$ des Frankiermaschinen-Nutzers als A-, B- oder C-Kunde und zusätzlich in Abhängigkeit von seinem Frankierverhalten ermittelt:

$$S_X = \alpha_X * R_{8alt} * R_{1alt}/R_{2alt} \qquad (5)$$
$$\text{bzw.}$$

bzw.

$$S_x = \alpha_x * R_{4alt} * R_{1alt}/R_{2alt} \qquad (6)$$

Von der Datenzentrale wird das Verhalten des Frankiermaschinenbenutzers auf der Basis von während der Kommunikation übermittelten Daten überwacht, um verdächtige Frankiermaschinen festzustellen. Ein entsprechender Suspicious Mode kann nur von der Datenzentrale aktiviert werden, wobei keine direkten Auswirkungen auf die Frankiermaschine stattfinden.

Anhand der frankiermaschinenspezifischen Daten läßt sich ein Frankiermaschinen-Profil erstellen. Dieses Frankiermaschinen-Profil gibt darüber Auskunft, ob ein Kunde mit den durchgeführten Nachladevorgängen in der Lage war, die ermittelte Anzahl an Frankierungen durchzuführen. Es sind innerhalb des Suspicious Mode zwei Stufen zu unterscheiden:

1. Frankiermaschine ist verdächtig und
2. Frankiermaschine muß manipuliert worden sein.

In die Berechnung zur Ermittlung des Frankiermaschinen-Profils können verschiedene frankiermaschinenspezifische Daten einfließen. Im Bereich zwischen einem minimalen Frankierwert $F_{min}$ und einem maximalen Frankierwert $F_{max}$ gestattet die Frankiermaschine gültige Drucke, welche im Register für R4 registriert werden. Außerdem kann eine Nullwertfrankierung erfolgen. Folgende Formeln kommen nacheinander zum Einsatz:

$$V_{susp1} = \frac{R4}{(R3 - R1)} * F_{min} = \frac{R4}{R2} * F_{min} \qquad (7)$$

und außerdem, wenn Rlalt ≠ R1neu

$$V_{susp2} = \frac{R4neu - R4alt}{R1alt - R1neu} * F_{min} \qquad (8)$$

$R1_{alt}$:     R1 nach n-ter Fernwertvorgabe
$R1_{neu}$:     R1 vor n+1.-ter Fernwertvorgabe
$V_{susp}$:     heuristischer Wert, der Auskunft über den Zustand der Frankiermaschine gibt
$F_{min}$:     minimaler Frankierwert

Bei einem Mindestfrankierwert von z.B. $F_{min}$ = 20 Währungseinheiten ergibt sich folgende Fallunterscheidung:

$$V_{susp1} < 5 \qquad \text{in Ordnung (okay)}$$

$$V_{susp1} = 5..100 \qquad \text{verdächtig (suspicous)}$$

$$V_{susp1} > 100 \qquad \text{manipuliert (manipulated)}$$

In regelmäßigen Abständen wird in der Datenzentrale eine Plausibilitätskontrolle sämtlicher im Einsatz befindlicher Frankiermaschinen durchgeführt. Bei diesem Verfahren werden die Maschinen gekennzeichnet und der Postbehörde gemeldet, deren Frankierverhalten verdächtig erscheinen oder manipuliert worden sind.

In der Frankiermaschine ist ggf. noch eine andere Sicherheitsmaßnahme (Error Overflow Mode) vorgesehen. Diese kann im zweiten Modus neben oder anstatt der Sleeping-Mode-Variante 1 oder Sleeping-Mode-Variante 2 durchgeführt werden. Bei Erfüllung des Abfragekriteriums im Schritt 202, d.h. bei Überschreitung einer vorbestimmten Anzahl an Fehlern, verlangsamt sich die Reaktionszeitdauer der Frankiermaschine im Schritt 203, wobei über die Anzeige gleichzeitig dieser Zustand an den Bediener der Frankiermaschine gemeldet wird. In den weiteren Schritten kann ähnlich verfahren werden, wie in Zusammenhang mit den Figuren 2 und 5 bereits erläutert wurde. Die Frankiermaschine speichert sowohl interne als auch Bedienungsfehler und Manipulationsversuche in einem Fehlerregister zu protokollarischen Zwecken beispielsweise bis zu der Zahl 999. Wird der Zustand der Überschreitung der Fehleranzahl nicht beseitigt, beispielsweise im Rahmen einer Inspektion durch einen Servicedienst oder durch Rücksetzen während einer Kommunikation mit der Datenzentrale, kann die Reaktionszeitdauer weiter erhöht werden, um eventuelle Manipulationen zu erschweren. Die Fehlerzahl wird dann weiter d.h. wieder bis zu einer vorbestimmten Zahl, beispielsweise im Schritt 213 protokolliert.

In einer ersten Variante ist vorgesehen, die Reaktionszeitdauer, beispielsweise die Zeitdauer bis zum Beginn des Druckbetriebes, linear mit der Anzahl der Fehler zu erhöhen. Die Ausführung des Programmes wird dadurch weder modifiziert noch verhindert, sondern nur verzögert. Insbesondere werden solche unkritischen Programmteile, welche nicht durch Time supervision (Kill Mode 1) oder Flow control überwacht werden, mehrfach aufgerufen, wie beispielsweise die Fehleranzeige. Damit bleibt die Wirkung des Programmes im Wesentlichen unverändert.

In einer zweiten Variante wird die Reaktionszeitdauer jeweils um eine Stufe erhöht, wobei die Stufen Sekunden, Minuten, Stunden, Tage, ... usw. betreffen können.

In Abänderung bzw. in Kombination mit vorgenannten Varianten kann eine Erhöhung der Reaktionszeitdauer außerdem bei jeder Fehlbedienung vorgesehen werden. Hierzu wird in einer Ausführungsform ein elektronisches Zeitschloß betätigt. Vorzugsweise wird eine progressive Steigerung der Reaktionszeitdauer im Betriebsprogramm vorgesehen, um eine Manipulation zu erschweren.

Es ist vorgesehen, daß der Schritt 213 teilweise oder ganz in Verbindung mit anderen Schritten als Subschritt aufgerufen wird. Beispielsweise ist der Statistik und Fehlermodus Bestandteil des Schrittes 203 und der Abrechnungs- und Druckroutine gemäß des Schrittes 406 im Frankiermodus 400, welcher in den Figuren 4a und 4b näher dargestellt ist. Tritt ein schwerer Abrechnungsfehler auf wird die Maschine im Schritt 406 oder im Schritt 208 blockiert. Tritt ein Fehler aber während der Initialisierungsphase im Schritt 101 auf, bleibt die Maschine unter Anzeige eines bestimmten Fehlercodes stehen.

In der Figur 2b ist eine zweite Variante für den Ablaufplan nach der erfindungsgemäßen Lösung dargestellt. Im Schritt 207 wird nicht nur die Strukturprüfung der Registerdaten durchgeführt, sondern der Schritt 207 umfaßt außerdem eine Prüfung der Registerinhalte. Bei Nichtübereinstimmung mit dem Abfragekriterium für einen ordnungsgemäßen Zustand wird im Schritt 208 ein Kill-Mode-Flag zum Sperren der Frankiermaschine gesetzt und dann zum Punkt e verzweigt. Daher können auch bei gesperrter Frankiermaschine alle gewünschten Eingaben, Kommunikationen mit der Datenzentrale, Registeranzeigen bzw. Tests weiterhin durchgeführt werden.

Das Kill-Mode-Flag wird erst im Frankiermodus - in der nach Figur 4b dargestellten Weise - im Schritt 409 vor der eigentlichen Abrechnungs- und Druckroutine (Schritt 406) abgefragt. Ist das Kill-Mode-Flag gesetzt, wird der Statistik- und Fehlerauswertungsmodus (Schritt 213) und der Anzeigemodus (Schritt 215) durchlaufen und dann zur Systemroutine (Punkt s) zurückverzweigt.

Somit bleibt die Frankiermaschine gesperrt. Die Frankiermaschine wird einerseits ohne Freischalten wieder betriebsfähig, wenn der Fehler beseitigt worden ist, d.h. wenn beispielsweise ein Briefstau behoben oder ein Guthaben nachgeladen worden ist.

Andererseits gibt es schwere Fehler, welche erst anläßlich der nächsten Inspektion vor Ort von einer dazu berechtigten Person aufgehoben werden können. Ein solcher Fehler, beispielsweise wenn der Prozessor nicht auf den Arbeitsspeicher zugreifen kann, d.h. den Dateninhalt des RAM's weder lesen noch verändern kann, wird beispielsweise durch Stecken eines speziellen RESET-EPROM's beseitigt. Hierzu muß die Verplombung der Klappe und die Frankiermaschine geöffnet werden. Das RESET-EPROM enthält die erforderlichen Daten, beispielsweise den vorgenannten Y-Code, und spezielle Programme zur Wiederherstellung der Frankiermaschinenfunktion. Beispielsweise kann ein solches Programm eine erfolgte Redundanzverringerung wieder rückgängig machen. Die Protokollierung der Fehler, welche während des Betriebes der Frankiermaschine im Statistik- und Fehlerauswertungsmodus (Schritt 213) getrennt nach Fehlerarten erfolgt, wird dabei von der berechtigten Person daraufhin überprüft, ob ein Manipulationsversuch unternommen worden ist.

Die Erfindung ist nicht auf die vorliegenden Ausführungsformen beschränkt. Vielmehr ist eine Anzahl von Varianten im Rahmen der Ansprüche denkbar, welche von der dargestellten Lösung auch bei grundsätzlich anders gearteten Ausführungen Gebrauch machen.

## Patentansprüche

1. Verfahren zur Verbesserung der Sicherheit von Frankiermaschinen gegen Manipulation, mit einem Mikroprozessor in einer Steuereinheit der Frankiermaschine zur Ausführung von Schritten für eine Start- und Initialisierungsroutine und nachfolgender Systemroutine mit einer Möglichkeit in einen Kommunikationsmodus mit einer entfernten Datenzentrale einzutreten sowie weiteren Eingabeschritten, um in einen Frankiermodus einzutreten, von dem nach Ausführung einer Abrechnungs- und Druckroutine in die Systemroutine zurückverzweigt wird, **gekennzeichnet durch** ein Unterscheiden zwischen autorisiertem Öffnen und unautorisiertem Öffnen mittels der Steuereinheit der Frankiermaschine in Verbindung mit von der Datenzentrale übermittelten Daten und einem über den Sensor (21) detektierten Signal wobei ein altes Codewort (Y), in einem Löschschritt (210) gelöscht wird, falls **durch** einen Sensor (21) ein Öffnen der Frankiermaschine festgestellt wird, und wobei die Frankiermaschine in einen ersten Modus überführt wird der sie wirksam außer Betrieb setzt wenn das richtige Codewort (Y) fehlt, weil die Frankiermaschine unautorisiert geöffnet wurde und wobei im Falle einer autorisierten Öffnung folgende schritte durchgeführt werden:

a) Anmelden einer autorisierten Öffnung der Frankiermaschine zum Zwecke einer Inspektion, wobei nach Eintritt in den Kommunikationsmodus (300) bei einer entfernten Datenzentrale ein Öffnungsgesuch gestellt wird und
b) Übermitteln eines neuen Codewortes(Y') zur Frankiermaschine von der Datenzentrale, in Erwiderung auf das gestellte Öffnungsgesuch, wobei das neue Codexort (Y') das alte Codewort (Y) ersetzt, da die Fränkiermaschine autorisiert geöffnet wurde.

2. Verfahren, nach Anspruch 1, **dadurch gekennzeichnet,**

- **daß** in dem Lösch-Schritt (210) das Codewort (Y) gelöscht wird, um in einen ersten Modus einzutreten, wenn die Frankiermaschine geöffnet wird,
- **daß** nach der Initialisierung (101) der Frankiermaschine ein vorhandenes neues Codewort (Y') als Codewort (Y) weiterverwendet wird und nachfolgend, während des Betriebes der Frankiermaschine laufend in einem Überprüfungs-Schritt (207) zur Überprüfung das Vorhandenseins des gültigen Codewortes(Y)abgefragt wird,
- **daß** für den Fall, daß kein neues gültiges Codewort (Y') übermittelt wurde, im Überprüfungs-Schritt (207) das Fehlen eines gültigen Codewortes (Y) festgestellt wird, die Schritte zum Verhindern des Frankierens bzw. Sperrens der Frankiermaschine (208) und/oder Schritte im Statistik- und Fehlerauswertungsmodus (213) und Anzeigemodus (215) durchlaufen werden, um die Aufrechterhaltung, Auswertung und Anzeige des vorgenannten ersten Modus zu sichern und um anschließend wieder zum Beginnpunkt s der Systemroutine (200) zurückzuverzweigen.

3. Verfahren, nach den Ansprüchen 1 bis 2, **dadurch** gekenzeichnet, daß im Kommunikationsmodus transaktionen mit verschlüsselten Meldungen durchgeführt werden, um ein neues Codewort(Y') und/oder weitere aktuelle Daten in die Frankiermaschine zu laden.

4. Verfahren, nach Anspruch 3, **dadurch gekennzeichnet, daß** eine während der Kommunikation mit verschlüsselten Meldungen durchgeführte Transaktion einen Guthabennachladewert umfaßt.

5. Verfahren, nach den Ansprüchen 3 bis 4, **dadurch gekennzeichnet, daß** eine während der Kommunikation mit verschlüsselten Meldungen durchgeführte Transaktion einen Vorgabewert für einen Guthabennachladewert umfaßt, welcher der entfernten Datenzentrale übermittelt wird.

6. Verfahren, nach Anspruch 3, **dadurch gekennzeichnet, daß** während der Kommunikation mit einer unverschlüsselten Meldung eine Transaktion durchgeführt wird, um eine neue Telefonnummer zur Verbindungsaufnahme mit der Datenzentrale in die Frankiermaschine zu laden.

7. Verfahren, nach einem der vorgenannten Ansprüche 1 bis 6, **dadurch gekennzeichnet, daß** die Transaktionsdaten einzeln und seriell übertragen und durch einen MESSAGE AUTHENTIFICATION CODE MAC gesichert werden.

8. Verfahren, nach den Ansprüchen 1 bis 2, **dadurch gekennzeichnet, daß**, um in einen ersten Modus einzutreten, wenn die Frankiermaschine geöffnet wird, in dem Lösch-Schritt (210) das Codewort (Y) gelöscht wird, indem mittels des Sensors (21), der an die Detektoreinrichtung (20) gekoppelt ist, direkt oder indirekt eine Verbindung unterbrochen wird, welche direkt und/oder indirekt über den Verlust einer weiteren Information zum Verlust des Codewortes (Y) führt, ohne die die Frankiermaschine nicht zum Frankieren betrieben werden kann.

9. Verfahren, nach Anspruch 1, **dadurch gekennzeichnet, daß** das Überführen der Frankiermaschine in den ersten Modus erfolgt, um sie damit wirksam außer Betrieb setzen, wenn bei Ausführung eines Lösch-Schrittes (210) das richtige Codewort fehlt, weil die Frankiermaschine geöffnet wurde, und folgende Schritte umfaßt:

- Löschen des Codewortes (Y), wenn die Frankiermaschine geöffnet wird,

- Weiterverwenden eines vorhandenen neuen Codewortes (Y') als Codewort(Y)nach der Initialisierung (101) und
- laufende Abfrage eines Überprüfungs-Schrittes (207) zur Überprüfung des Vorhandenseins des gültigen Codewortes (Y), während des Betriebes der Frankiermaschine,
- Feststellen des Fehlens eines gültigen Codewortes(Y) im Überprüfungs-Schritt (207) für den Fall, daß kein neues gültiges Codewort (Y') übermittelt wurde, und Schritte zum Verhindern des Frankierens bzw. Sperrens der Frankiermaschine (208) und/oder Schritte im Statistik- und Fehlerauswertungsmodus (213) und Anzeigemodus (215), welche durchlaufen werden, um die Aufrechterhaltung, Auswertung und Anzeige des vorgenannten ersten Modus zu sichern und um anschließend wieder zum Beginnpunkt s der Systemroutine (200) zurückzuverzweigen, sowie

daß ein weiterer Schritt zur Überführung der Frankiermaschine in einen zweiten Modus vorgesehen ist, wenn ein spezifisches Kriterium erfüllt ist, wobei Schritte (201 bis 206) vorgesehen sind, die nach dem Beginnpunkt s der Systemroutine (200) und vor dem Punkt t vor dem Überprüfungs-Schritt (207) ablaufen, umfassend:

- einen Aufrüf-Schritt (201) zum Aufruf aktueller Daten
- einen Prüf-Schritt (202) zur Überprüfungder Daten mittels eines Entscheidungskriteriums und Eintritt bei Erfüllung des Kriteriums in den zweiten Modus (Schritte 203-206), um an den Benutzer der Frankiermaschine eine Warnung und Aufforderung zur Kommunikation mit der Datenzentrale abzugeben.

**10.** Verfahren nach den Ansprüchen 1 bis 2, **dadurch gekennzeichnet, daß** eine während der Kommunikation mit verschlüsselten Meldungen durchgeführte Transaktion eine spezifische stückzahl(S') für einen Sleeping-Modus als zweiten Modus umfaßt.

**11.** Verfahren, nach den Ansprüchen 9 bis 10, **dadurch gekennzeichnet, daß** eine Kommunikation mit unverschlüsselte oder verschlüsselten Meldungen vorgenommen wird, daß im Statistik-und Fehlerauswertungs modus (213) eine Berechnung der spezifischen Stückzahl (S') vorgenommen wird und nach Anzeige (215) und Rückkehr zum Beginnpunkt s der Systemroutine (200) die spezifische Stückzahl (S') als Stückzahl (S) in dem Aufruf-Schritt (201) zum Aufruf aktueller Daten der Steuereinheit der Frankiermaschine zugeführt wird.

**12.** Verfahren, nach Anspruch 10, **dadurch gekennzeichnet, daß** die Berechnung der erreichbaren spezifischen Stückzahl (S'), parallel in der Frankiermaschine und in der Datenzentrale nach der gleichen Methode vorgenommen wird.

**13.** Verfahren, nach einem der vorgenannten Ansprüche 9 bis 12, **dadurch** gekennzeichet, daß bei Erfüllung des Kriteriums, welches im Prüf-Schritt (202) abgefragt wird, auf den Anzeige-Schritt (203) verzweigt wird, der für den zweiten Modus eine Warnung umfaßt, welche für eine Zeitdauer ($t_n$) sichtbar ist und eine Frankier-Verzögerung bewirkt.

**14.** Verfahren nach Anspruch 13, **dadurch gekennzeichnet, daß** im zweiten Modus eine Frankier-Verzögerung um die Zeitdauer ($t_n$) schrittweise steigend wirksam wird, wobei zur Inkrementierung der Zeitdauer ($t_n$) und zur Dekre-mentierung einer Vergleichsstückzahl $S_{ref}$ um eine vorbestimmte stückzahl (n) ein nachfolgender Inkrementierungs/ Dekrementierungs Schritt (204) vorgesehen ist, daß beim folgenden Durchlauf durch die Systemroutine (200) die laufend bei jeder Frankierung dekrementierte Stückzahl (s) und die dekrementierten Vergleichsstückzahl ($S_{ref}$) im Aufruf-Schritt (201) als aktuelle Daten aufgerufen und anschließend im Prüf-Schritt (202) miteinander verglichen werden, daß bei Erfüllung des Kriteriums, indem die Stückzahl (S) die Vergleichsstückzahl ($S_{ref}$) unterschreitet, der Anzeige-Schritt (203) der Warnung erneut, aber mit einer um die Zeitdauer ($t_k$) verlängerten Zeitdauer durchlaufen wird und daß anschließend und bei Nichterfüllung des vorgenannten Kriteriums der Überprüfungs-Schritt (207) zur überprüfung des Vorhandenseins des gültigen Codewortes (Y) erreicht wird.

**15.** Verfahren, nach einem der vorgenannten Ansprüche 9 bis 12, **dadurch gekennzeichnet, daß** der bei Erfüllung des Kriteriums (202) für den zweiten Modus folgende Anzeige-Schritt (203) eine Warnung umfaßt, welche für die zeitdauer ($t_n$) sichtbar ist und im nachfolgenden Inkrementierungs/Dekrementierungs-Schritt (204) eine neue Vergleichsstückzahl gebildet wird, indem die maximale Stückzahl ($S_{max}$) durch eine vorbestimmte Zahl m dividiert wird.

**16.** Verfahren, nach den Ansprüchen 10 oder 12, daurch **gekennzeichnet**, daß die im Aufruf-Schritt (201) aufgerufenen aktuellen Daten unmittelbar nach einer Kommunikation die berechnete bzw. übermittelte spezifische Stückzahl (S') als Stückzahl (S) und die maximale Stückzahl ($S_{max}$) umfassen, daß die Vergleichsstückzahl ($S_{ref}$) der durch die Zahl k dividierten berechneten bzw. übermittelten maximalen Stückzahl ($S_{max}$) entspricht.

**17.** Verfahren, nach den Ansprüchen 9, 10, 13 und 14 oder 9, 10, 15 und 16, **dadurch gekennzeichnet, daß** ein auf den Inkrementierungs/Dekrementierungs Schritt (204) nach-folgender erster Abfrage-Schritt (205) vorgesehen ist, um festzustellen daß die Stückzahl (s) größer als Null ist, um zum Überprüfungs-Schritt (207) zur Überprüfung des Vorhandenseins des gültigen Codewortes (Y) zu verzweigen und daß anderenfalls ein Setz-Schritt (206) zum Setzen eines FLAG's für ein Kommunikationsersuchen der Frankiermaschine erreicht wird.

**18.** Verfahren, nach Anspruch 17, **dadurch gekennzeichnet, daß** der Anzeige-Schritt (203) für die Anzeige einer Warnung und/oder Setz-Schritt (206) für das Setzen eines FLAG's für ein Kommunikationsersuchen zusätzlich einen Subschritt zur Fehlerstatistik umfaßt sowie daß das FLAG zurückgesetzt wird, indem eine Kommunikation erfolgt.

**19.** Verfahren, nach einem der vorhergenannten Ansprüche 10 bis 18, **dadurch gekennzeichnet, daß** die Stückzahl (S') aus der Durchschnittstückzahl$(s_o)$, der eine spezifische Dispositionsstückzahl $(S_x)$ hinzuaddiert wird, ermittelt wird, wobei gilt:

$$S' = S_O + S_X \qquad (2)$$

mit

$$S_O = R_{8alt} \left[ \frac{R2neu}{R2alt} - 1 \right] \qquad (3)$$

bzw.

$$S_O = R_{4alt} \left[ \frac{R2neu}{R2alt} - 1 \right] \qquad (4)$$

wobei der abgefragte Registerwert $R_{2alt}$ einem Ascending-Register und $R_{2neu}$, gemäß einem Vorgabewunsch, einem zukünftigen Wert des Ascending-Registers sowie $R_{4alt}$ bzw. $R_{8alt}$ der Anzahl gültiger Drucke bzw. der Anzahl aller Drucke entsprechen.

**20.** Verfahren, nach dem vorhergenannten Anspruch 19, **dadurch gekennzeichnet, daß** die spezifische Dispositions-stückzahl $(S_x)$ ermittelt wird aus der Formel:

$$S_X = \alpha_X * R_{8alt} * R_{1alt}/R_{2alt} \qquad (5)$$

bzw.

$$S_X = \alpha_X * R_{4alt} * R_{1alt}/R_{2alt} \qquad (6)$$

wobei $\alpha_x$ die Einstufung des Frankiermaschinen-Nutzers als A-, B- oder C-Kunden kennzeichnet und die abgefragten Registerwerte $R_{1alt}$ einem Descending-Register und $R_{2alt}$ dem Ascending-Register sowie $R_{4alt}$ bzw. $R_{8alt}$ der Anzahl gültiger Drucke bzw. der Anzahl aller Drucke entsprechen.

**21.** Verfahren, nach einem der vorhergenannten Ansprüche 10 bis 20, **dadurch gekennzeichnet, daß** ein spezieller Sleepingmodezähler bei jeder Kommunikation mit der Datenzentrale auf eine errechnete spezifische Stückzahl gesetzt wird und bei jeder Frankierung, d.h. im Verlauf einer Abrechnungs- und Druckroutine (406), zur Weiterzählung veranlaßt wird, bis die Stückzahl Null erreicht wird.

22. Verfahren, nach Anspruch 9, **gekennzeichnet durch** den Schritt c) mit einer Überprüfung bezüglich, ob ein gültiger Code (Y) im vorbestimmten Speicherplatz vorliegt, wobei die Überprüfung auf gültigen Code (Y) mittels einem ausgewählten Prüfsummenverfahren innerhalb eines ONE TIME PROGRAMMABLE OTP-Prozessors durchgeführt wird, der intern die entsprechenden Programmteile und MAC gespeichert enthält.

23. Verfahren, nach Anspruch 22, **dadurch gekennzeichnet, daß** weitere sicherheitsrelevante Schlüsseldaten und Abläufe im Inneren des OTP-Prozessors gespeichert sind, um eine MAC-Absicherung über die Postregister zu legen.

24. Verfahren, nach Anspruch 9, **gekennzeichnet durch** daß die Überprüfung ob ein gültiger Code Y im vorbestimmten Speicherplatz vorliegt **dadurch** erfolgt, daß die Überprüfungaus auf den gültigen Code (Y) mittels einem ausgewählten Prüfsummenverfahren unter Verwendung eines kodierten Schlüssels durchgeführt wird, der in unterschiedlichen Speicherbereichen partiell abgelegt ist.

25. Verfahren, nach einem der vorhergenannten Ansprüche 22 bis 24, **dadurch gekennzeichnet, daß** das Sperren der Frankiermaschine erfolgt, indem die Verzweigung auf den Frankiermodus (400) nicht mehr ausgeführt wird.

26. Verfahren nach einem der vorhergenannten Ansprüche 22 bis-25 **dadurch gekennzeichnet, daß** im Spert-Schritt (208), wo der erste Modus erreicht und die Frankiermaschine gesperrt ist, Postregister in vorbestimmter Weise teilweise gelöscht werden, danach über den Schritt für einen Statistik- und FehlerAuswertungsmodus (213) der Anzeigemodus (215) erreicht und dann zur Systemroutine zurückverzweigt wird.

27. Verfahren, nach Anspruch 26, **dadurch gekennzeichnet, daß** wie an das gespeicherte Codewort (Y) auch an jede Information in den sicherheitsrelevanten Postregistern MAC angehängt werden, eine Manipulation der Registerdaten durch Kontrolle über den MAC erkannt wird, wobei diese Routine im Rahmen einer Abrechnungs- und Druckroutine (406) im Frankiermodus (400) erfolgt.

28. Verfahren, nach einem der vorhergenannten Ansprüche 26 bis 27, **dadurch gekennzeichnet, daß** Postregisterstände redundant gespeichert vorliegen und zur Realisierung des ersten Modus beim teilweisen Löschen der Postregisterstände zielgerichtet in vorbestimmter Weise die Redundanz verringert wird, wobei die dieses Verringern der Redundanz von anderen Datenfehlern, die von der Frankiermaschine selbsttätig behoben werden können, **dadurch** unterscheidet, daß dieser Fehlertyp von der Frankiermaschine nicht selbsttätig behoben werden kann, weil alle redundant gespeicherten Daten nun unterschiedliche Fehler haben, welche nicht mehr automatisch korrigiert werden können.

29. Verfahren, nach einem der vorhergenannten Ansprüche 26 bis 28, **dadurch gekennzeichnet, daß** beim vorgenannten Fehlertyp eine Rekonstruktion von Daten möglich ist, da durch MAC-Absicherung die Schwierigkeit der Manipulation an den Postregistern maximal erhöht ist und es die im ersten Modus verringerte Redundanz gerade noch erlaubt, die Registerstände zu rekonstruieren, wobei nur eine eingeweihte Person die Daten nach einer vorbestimmten Weise rekonstruieren kann, was ebenfalls nach jedem autorisiertem Öffnen vor erneuter Inbetriebnahme der Frankiermaschine zu geschehen hat.

30. Verfahren, nach Anspruch 9, gekennzeichneet durch weitere durchführbare Schritte zum Überwachen der Transportgeschwindigkeit der Poststücke bzw. der Druckgeschwindigkeit insbesondere Bandgeschwindigkeit bei einem Thermotransferdrucker, damit der Druckkopf nicht benutzt werden kann, um einen unabgerechneten Frankierstempel zu erzeugen.

31. Verfahren, nach Anspruch 30, **dadurch gekennzeichnet, daß** bei einem Thermotransferdrucker die Bandgeschwindigkeit des Farbbandes, welche bereits über einen Encoder gemessen wird, ausgewertet wird, wobei die Encoderimpulse innerhalb eines Zeitfensters gezählt werden, welches vom Uhren/Datums-Baustein (8) geliefert oder aus dem Systemtakt der Steuereinrichtung (6) abgeleitet wird, wobei der Systemtakt mittels eines quarzgesteuerten Taktgebers erzeugt und der Motor (12) entsprechend nachgesteuert wird, wenn die Anzahl an Encoder-Impulsen von einer Sollanzahl abweicht.

32. Verfahren, nach einem der vorhergenannten Ansprüche 30 und 31, **dadurch gekennzeichnet, daß** ein Fehler festgestellt wird, wenn die Soll/Ist-Abweichung über ein zulässiges Maß hinaus angestiegen ist, daß der Fehler protokolliert wird und gegebenenfalls zum Außerbetriebsetzen der Frankiermaschine führt.

33. Verfahren, nach einem der vorhergenannten Ansprüche 30 bis 32, **dadurch gekennzeichnet, daß** im Prüf-Schritt (202) zur Überprüfung des Kriteriums festgestellt wird, ob die Druckgeschwindigkeit eingehalten wird bzw. ob diese vom zulässigen Wert abweicht, daß im Falle, daß dieses Kriterium erfüllt ist, eine entsprechende Warnung in der Anzeige erscheint, welche bei Nichtbeachtung letztlich zur Blockierung der Frankiermaschine führt.

34. Verfahren, nach einem der vorhergenannten Ansprüche 9 und 30, **dadurch gekennzeichnet, daß** die Steuereinheit der Frankiermaschine den Zeitablauf beim spaltenweisen Druck, durch Vergleich der Zeitdauer für den Druck der einzelnen Spalten, in welchen variable Daten vorkommen, überprüft, wobei die Anzahl von Taktimpulsen des quarzgesteuerten Taktgebers zwischen den einzelnen Encoderimpulsen gezählt werden und daß nach dem Überprüfungs-Schritt (207) zur Überprüfung des Kriteriums, ob der Zeitablauf eingehalten wurde bzw. ob er vom zulässigen Zeitablauf abweicht ein weiterer Sperr-Schritt (208) für eine Maßnahme zur Blockierung der Frankiermaschine erfolgt, wenn das Kriterium erfüllt ist.

35. Verfahren, nach Anspruch 1, **gekennzeichnet durch**

- ein Feststellen der Nichterfüllung eines gültigen Kriteriums im Überprüfungs-Schritt (207) bezogen auf vorbestimmte interne Frankiermaschinenabläufe während des Betriebes der Frankiermaschine für einen ersten Modus, und Schritte zum Verhindern des Frankierens bzw. zum Sperren der Frankiermaschine (208) und/oder Schritte im Statistik- und Fehlerauswertungsmodus (213) und Anzeigemodus (215), welche durchlaufen werden, um die Aufrechterhaltung, Auswertung und Anzeige des vorgenannten ersten Modus zu sichern und um anschließend wieder zum Beginnpunkt s der Systemroutine (200) zurückzuverzweigen, und
- ein Überführen der Frankiermaschine in einen zweiten Modus, wenn ein spezifisches Kriterium erfüllt ist, **durch** Schritte (201 bis 206), die nach dem Beginnpunkt s der Systemroutine (200) und vor dem Punkt t vor dem Überprüfungs-Schritt (207) ablaufen, umfassend:
- eine Aufruf-Schritt (201) zum Aufruf aktueller Daten
- einen Prüf-Schritt (202) zur Überprüfung der Daten mittels eines Entscheidungskriteriums und Eintritt bei Erfüllung des Kriteriums in den zweiten Modus (Schritte 203-206), um an den Benutzer der Frankiermaschine mindestens eine Warnung und Aufforderung zur Kommunikation mit der Datenzentrale abzugeben.

36. Verfahren, nach Anspruch 35, **dadurch gekennzeichnet, daß** die im Aufruf-Schritt (201) aufgerufenen aktuellen Daten unmittelbar nach einer Kommunikation eine berechnete bzw. übermittelte spezifische Stückzahl (S') als Stückzahl (S) und eine maximale Stückzahl ($S_{max}$) umfassen, daß die Vergleichsstückzahl ($S_{ref}$) für ein erstes Stückzahlkriterium der durch die Zahl k dividierten berechneten bzw. übermittelten maximalen Stückzahl ($S_{max}$) entspricht, daß bei Erfüllung des im Prüf-Schritt (202) abgefragten ersten Stückzahlkriteriums für den zweiten Modus der folgende Anzeige-Schritt (203) eine ständige Warnung für ein bevorstehendes Schlafenlegen der Frankiermaschinenfunktion bzw. eine Aufforderung zur erneuten Kommunikation mit der Datenzentrale umfaßt, bevor ein Schritt (205) zur Überprüfung der Daten mittels eines weiteren Stückzahlkriteriums erreicht wird, daß bei Nichterfüllung des weiteren Stückzahlkriteriums ein Setz-Schritt (206) zum automatischen Kommunikationsersuchen der Frankiermaschine erreicht wird, daß während einer Kommunikation mit der Datenzentrale Transaktionsdaten einzeln und seriell übertragen werden und mindestens ein durch einen MAC abgesichertes Entscheidungskriterium umfassen, wodurch das automatische Kommunikationsersuchen aufgehoben wird, falls die Transaktion erfolgreich durchgeführt wurde.

37. Verfahren, nach Anspruch 35, **dadurch gekennzeichnet, daß** während einer Routine im Frankiermodus (400) ein zweiter Abfrage-Schritt (410) zur Abfrage des Erreichens eines weiteren Stückzahlkriteriums für die verbleibende Stückzahl (S) vorgesehen ist und bei Erreichen des weiteren Stückzahlkriteriums automatisch zum Kommunikationsmodus (300) verzweigt wird.

38. Verfahren, nach den Ansprüchen 35 bis 37, **dadurch gekennzeichnet, daß** der Anzeige-Schritt (203) einen Subschritt zur Fehlerstatistik entsprechend dem Statistik- und Fehlerauswertung modus (213) einschließt und der erste Abfrage-Schritt (205) zur Abfrage des Erreichens eines weiteren Stückzahlkriteriums durch die verbleibende Stückzahl (S) während der System-routine (200) oder der zweite Abfrage-Schritt (410) zur Abfrage des Erreichens eines weiteren Stückzahlkriteriums durch die verbleibende Stückzahl (S) während einer Routine im Frankiermodus (400) als Entscheidungskriterium die Stückzahl Null umfaßt.

**39.** Verfahren, nach Anspruch 35, **dadurch gekennzeichnet, daß** für eine Sicherheitsmaßnahme die im Aufruf-Schritt (201) aufgerufenen aktuellen Daten die Anzahl protokollierter interner Fehler, Bedienungsfehler und Manipulationsversuchen entsprechenden Fehler umfassen, daß bei Erfüllung des im Prüf-Scritt (202) abgefragten Kriteriums für einen Fehlerüberlaufmode der Eintritt in einen zweiten Modus mit dem folgenden Anzeige-Schritt (203) für eine ständige Signalisierung einer Überschreitung einer vorbestimmten Fehleranzahl erfolgt und die Fehleranzahl weiter protokolliert wird bis ein Rücksetzen der Fehlerregister im Rahmen einer Kommunikation mit der Datenzentrale oder einer Inspektion durch einen Servicedienst vorgenommen wird.

**40.** Verfahren, nach Anspruch 39, **dadurch gekennzeichnet, daß** in der Frankiermaschine die Sicherheitsmaßnahme im zweiten Modus neben oder anstatt einer Sleeping-Mode-Variante durchgeführt wird und daß sich bei Erfüllung des Abfragekriteriums im Prüf-Schritt (202), d.h. bei Überschreitung einer vorbestimmten Anzahl an Fehlern, die Reaktionszeitdauer der Frankiermaschine im Anzeige-Schritt (203), in welchem dieser Zustand an den Bediener der Frankiermaschine gemeldet wird, verlangsamt.

**41.** Verfahren, nach den Ansprüchen 39 bis 40, da- durch **gekennzeichnet**, daß im Anzeige-Schritt (203) die Reaktionszeitdauer, beispielsweise die Zeitdauer bis zum Beginn des Druckbetriebes, linear mit der Anzahl der Fehler erhöht wird, indem die Ausführung des Programmes verzögert wird oder unkritische Programmteile, wie beispielsweise die Fehleranzeige, mehrfach aufgerufen werden.

**42.** Verfahren, nach den Ansprüchen 39 bis 40, dadurch geknnzeichnet, daß im vorgenannten Anzeige-Schritt (203) die Reaktionszeitdauer jeweils um eine Stufe erhöht wird, wobei die Stufen Sekunden, Minuten, Stunden, Tage, ... usw. betreffen können, oder eine progressive Steigerung der Reaktionszeitdauer im Betriebsprogramm vorgesehen ist, um eine Manipulation zu erschweren.

**43.** Verfahren, nach den Ansprüchen 41 oder 42, **dadurch gekennzeichnet, daß** im Anzeige-Schritt (203) in Abänderung oder in Kombination mit vorgenannten Varianten ein elektronisches Zeitschloß bei einer Fehlbedienung betätigt wird und eine Erhöhung der Reaktionszeitdauer bei jeder Fehlbedienung vorgesehen ist.

**44.** Verfahren, nach Anspruch 35, **dadurch gekennzeichnet, daß** in der Frankiermaschine bei der Feststellung der Nichterfüllung eines gültigen Kriteriums im Überprüfungs-Schritt (207) während des Betriebes der Frankiermaschine für einen ersten Modus schwere Fehler festgestellt werden, um Schritte zum Verhindern des Frankierens bzw. Sperrens der Frankiermaschine (208) und Schritte im Statistik- und Fehlerauswertungsmodus (213) und Anzeigemodus (215) auszulösen, welche durchlaufen werden, um die Aufrechterhaltung, Auswertung und Anzeige des vorgenannten ersten Modus zu sichern.

**Claims**

**1.** A method for improving the protection of franking machines against manipulation with a microprocessor in a control unit of the franking machine for executing steps for a start and initialization routine and subsequent system routine, with a possibility to enter into a communication mode with a remote data central as well as further input steps for entering a franking mode which, after executing an accounting and printing routine, is branched back to the system routine, **characterized by** distinguishing between authorized opening and unauthorized opening by means of the control unit of the franking machine in connection with the data transmitted from the data central and a signal detected by the sensor (21), wherein an old codeword (Y) is deleted in a deletion step (210) if an opening of the franking machine is detected by a sensor (21), wherein the franking machine is switched to a first mode that puts it effectively out of operation when the correct codeword (Y) is missing because the franking machine was opened without authorization, and wherein the following steps are executed in case of an authorized opening:

a) application for authorized opening of the franking machine for the purpose of inspection, wherein, after entering the communication mode (300), an opening request is filed with a remote data central; and
b) transmission of a new codeword (Y') to the franking machine from the data central in reply to the opening request filed, wherein the new codeword (Y') replaces the old codeword (Y) because the franking machine was opened with authorization.

**2.** A method according to claim 1, **characterized in**

- **that** the codeword (Y) is deleted in the deletion step (210) in order to enter a first mode when the franking machine is opened;

- **that**, after the initialization (101) of the franking machine, an existing new codeword (Y') continues to be used as codeword (Y) and subsequently, during the operation of the franking machine, is continuously read out in a checking step (207) for verifying the existence of the valid codeword (Y);

- **that**, in case no new valid codeword (Y') has been transmitted, the absence of a valid codeword (Y) is detected in the checking step (207), the steps for avoiding the franking of for blocking the franking machine (208) and/or steps in the statistics and error-evaluation mode (213) and display mode (215) are executed in order to ensure that the above-mentioned first mode is maintained, analyzed and displayed and subsequently branch back to the starting point s of the system routine (200).

3. A method according to claims 1 to 2, **characterized in that**, in the communication mode, there are effected transactions with encoded messages in order to load a new codeword (Y') and/or further current data into the franking machine.

4. A method according to claim 3, **characterized in that** a transaction effected during communication with encoded messages comprises a credit-reloading value.

5. A method according to claims 3 to 4, **characterized in that** a transaction effected during communication with encoded messages comprises a default value for a credit-reloading value that is transmitted to the remote data central.

6. A method according to claim 3, **characterized in that**, a transaction is effected during communication with a non-encoded message in order to load a new phone number into the franking machine for entering into contact with the data central.

7. A method according to one of the preceding claims 1 to 6, **characterized in that** the transaction data are transmitted individually and serially and are protected by a MESSAGE AUTHENTICATION CODE MAC.

8. A method according to claims 1 to 2, **characterized in that**, for entering a first mode when the franking machine is opened, the codeword (Y) is deleted in the deletion step (210) in such a manner that, by means of the sensor (21) coupled with the detector device (20), there is directly or indirectly interrupted a connection, which directly and/or indirectly through the loss of another information leads to the loss of the codeword (Y) without which the franking machine cannot be used for franking.

9. A method according to claim 1, **characterized in that** the switching of the franking machine to the first mode is executed in order to put it effectively out of operation when, upon executing a deletion step (210), the right codeword is missing because the franking machine was opened and comprises the following steps:

- deletion of the codeword (Y) when the franking machine is opened;
- further use of an existing new codeword (Y') as codeword (Y) after initialization (101); and
- continuous interrogation by a checking step (207) for verifying the existence of the valid codeword (Y) during operation of the franking machine;
- detection of the absence of a valid codeword (Y) in the checking step (207) in case no new valid codeword (Y') was transmitted and steps for avoiding the franking or for blocking the franking machine (208) and/or steps in the statistics and error-evaluation mode (213) and display mode (215) that must be executed in order to ensure that the above-mentioned first mode is maintained, analyzed and displayed and subsequently branch back to the starting point s of the system routine (200), as well as

that there is provided a further step for switching the franking machine to a second mode when a specific criterion is met, wherein steps (201 to 206) are provided that run after the starting point s of the system routine (200) and before point t before the checking step (207), comprising:

- a calling step (201) for calling current data;
- a check step (202) for checking the data by means of a decision criterion and, if the criterion is met, entering the second mode (steps 203 - 206) in order to give the user of the franking machine a warning and a request for communication with the data central.

10. A method according to claims 1 to 2, **characterized in that** a transaction effected during communication with encoded messages comprises a specific piece number (S') for a sleeping mode as a second mode.

11. A method according to claims 9 to 10, **characterized in that** a communication with non-encoded or encoded messages is effected, that a calculation of the specific piece number (S') is performed in the statistics and error-evaluation mode (213), and that, after display (215) and return to starting point s of the system routine (200), the specific piece number (S') is supplied as piece number (S) to the control unit of the franking machine in the calling step (201) for calling current data.

12. A method according to claim 10, **characterized in that** the calculation of the achievable specific piece number (S') is carried out according to the same method in parallel in the franking machine and at the data central.

13. A method according to one of the preceding claims 9 to 12, **characterized in that**, when meeting the criterion inquired about in the check step (202), there is branched to the display step (203) that comprises a warning for the second mode visible for a period $(t_n)$ and causes a franking delay.

14. A method according to claim 13 , **characterized in that**, in the second mode, a franking delay by the period $(t_n)$ becomes effective in a gradually increasing manner, wherein a subsequent incrementing/decrementing step (204) is provided for incrementing the period $(t_n)$ and for decrementing a comparison piece number $S_{ref}$ by a pre-defined piece number (n); that, during the following execution of the system routine (200), the piece number (S) that is continually decremented with every franking and the decremented comparison piece number $(S_{ref})$ are called as current data in the calling step (201) and subsequently are compared with one another in the check step (202); that, when meeting the criterion that the piece number (S) falls below the comparison piece number $(S_{ref})$, the display step (203) of the warning is executed again, but for a period extended by the time $(t_k)$; and that subsequently and when the above criterion is not met, the checking step (207) for checking the presence of the valid codeword (Y) is reached.

15. A method according to one of the preceding claims 9 to 12, **characterized in that** the display step (203) following for the second mode when the criterion (202) is met comprises a warning that is visible for the time $(t_n)$; and that, in the subsequent incrementing/decrementing step (204), there is formed a new comparison piece number by dividing the maximum piece number $(S_{max})$ by a pre-defined number m.

16. A method according to claims 10 or 12, **characterized in that**, immediately after a communication, the current data called in the calling step (201) comprise the calculated or transmitted specific piece number (S') as piece number (S) and the maximum piece number $(S_{max})$; and that the comparison piece number $(S_{ref})$ corresponds to the calculated or transmitted maximum piece number $(S_{max})$ divided by the number k.

17. A method according to claims 9, 10, 13 and 14 or 9, 10, 15 and 16, **characterized in that** there is provided a first inquiry step (205) following the incrementing/decrementing step (204) in order to determine that the piece number (S) is higher than zero in order to branch to the checking step (207) for checking the presence of the valid codeword (Y) and that otherwise there is reached a setting step (206) for setting a FLAG for a communication request of the franking machine.

18. A method according to claim 17, **characterized in that** the display step (203) for displaying a warning and/or the setting step (206) for setting a flag for a communication request in addition comprises a sub-step for error statistics and that the FLAG is reset by effecting a communication.

19. A method according to one of the preceding claims 10 to 18, **characterized in that** the piece number (S') is determined from the average piece number $(S_o)$ to which a specific planning piece number $(S_x)$ is added, wherein the following applies:

$$S' = S_o + S_x \qquad\qquad (2)$$

with

$$S_o = R_{8old} \left( \frac{R_{2new}}{R_{2old}} - 1 \right) \qquad (3)$$

or

$$S_o = R_{4old} \left( \frac{R_{2new}}{R_{2old}} - 1 \right) \qquad (4)$$

wherein the read-out register value $R_{2old}$ corresponds to an ascending register and $R_{2new}$ corresponds, according to the desired preset, to a future value of the ascending register and $R_{4old}$ and $R_{8old}$ correspond to the number of valid prints and to the number of all prints, respectively.

20. A method according to the preceding claim 19, **characterized in that** the specific planning piece number ($S_x$) is determined by the formula:

$$S_x = \alpha_x \ * \ R_{8old} \ * \ R_{1old} \ / \ R_{2old}$$
$$(5)$$

or

$$S_x = \alpha_x \ * \ R_{4old} \ * \ R_{1old} \ / \ R_{2old}$$
$$(6)$$

wherein $\alpha_x$ marks the classification of the franking machine user as A-, B- or C-customer and the inquired register values $R_{1old}$ correspond to a descending register, $R_{2old}$ to the ascending register and $R_{4old}$ and $R_{8old}$ correspond to the number of valid prints and to the number of all prints, respectively.

21. A method according to one of the preceding claims 10 to 20, **characterized** i n that a specific sleeping mode counter is set to a calculated specific piece number during every communication with the data central and that it is caused to count on with every franking process, i.e. in the course of an accounting and printing routine (406), until it reaches the piece number zero.

22. A method according to claim 9, **characterized by** a first modus with a check whether a valid code (Y) is present in the pre-determined memory location, the check for the valid code (Y) being carried out by means of a selected checksum method within a ONE TIME PROGRAMMABLE OTP processor that internally contains the respective program parts and the MAC.

23. A method according to claim 22, **characterized in that** further security-relevant key data and processes are stored inside the OTP processor in order to put a MAC protection on the postal registers.

24. A method according to claim 9, **characterized in that** the check whether a valid code (Y) is available in the pre-defined memory area is done by checking for the valid code (Y) by means of a selected checksum method using a coded key that is partially stored in different memory areas.

**25.** A method according to one of the preceding claims 22 to 24, **characterized in that** the franking machine is blocked by means of not branching to the franking mode (400) any more.

**26.** A method according to one of the preceding claims 22 to 25, **characterized in that**, in the blocking step (208) where the first mode is reached and the franking machine is blocked, postal registers are partially deleted in a pre-defined manner, then, via the step for statistics and error-evaluation mode (213), the display mode (215) is reached and then it is branched back to the system routine.

**27.** A method according to claim 26, **characterized in that** MAC are attached to the stored codeword (Y) just like to every information in the security-relevant postal registers and that a manipulation of the register data is detected by checking via the MAC, this routine being executed within the framework of an accounting and printing routine (406) in the franking mode (400).

**28.** A method according to one of the preceding claims 26 to 27, **characterized in that** postal register contents are available stored in a redundant manner and that, for realizing the first mode, the redundancy is specifically reduced in a pre-defined manner upon partial deletion of the postal register contents, said reduction of redundancy differing from other data errors that can be automatically corrected by the franking machine **in that** this error type cannot be automatically corrected by the franking machine because all redundantly stored data now have different errors that cannot be automatically corrected.

**29.** A method according to one of the preceding claims 26 to 28, **characterized in that**, with the above-mentioned error type, a reconstruction of data is possible because the level of difficulty of manipulation of the postal registers is maximally increased by MAC protection and the redundancy reduced in the first mode only just permits to reconstruct the register contents, wherein only a respectively instructed person can reconstruct the data in a pre-defined manner, which also has to be done after every authorized opening before putting the franking machine into operation again.

**30.** A method according to claim 9, **characterized by** further executable steps for monitoring the transport speed of the postal items and the printing speed, in particular the ribbon speed in a thermal transfer printer so that the print head cannot be used for making a franking stamp not accounted for.

**31.** A method according to claim 30, **characterized in that**, in a thermal transfer printer, the speed of the colour ribbon already measured by means of an encoder is analyzed, wherein the encoder pulses are counted within a time window that is either delivered by the clock/date module (8) or derived from the system clock pulse of the control unit (6), wherein the system clock pulse is generated by means of a crystal-controlled clock generator and the motor (12) is adjusted accordingly when the number of encoder pulses deviates from a nominal number.

**32.** A method according to one of the preceding claims 30 and 31, **characterized in that** an error is detected when the nominal/actual deviation has increased beyond a permissible degree and that the error is recorded and leads to putting the franking machine out of operation, if necessary.

**33.** A method according to one of the preceding claims 30 to 32, **characterized in that** it is determined in the check step (202) for checking the criterion whether the printing speed is observed or whether it deviates from the permissible value and that, in case this criterion is met, a respective warning appears on the display which, if ignored, finally leads to a blocking of the franking machine.

**34.** A method according to one of the preceding claims 9 and 30, **characterized in that** the control unit of the franking machine checks the timing of printing in columns by comparing the time for printing the individual columns that contain variable data, wherein the number of clock pulses of the crystal-controlled clock generator between the individual encoder pulses are counted, and that, following the checking step (207) for checking the criterion whether the timing has been observed or whether it has deviated from the admissible timing, a further blocking step (208) for a measure blocking the franking machine is executed when the criterion is met.

**35.** A method according to claim 1, **characterized by**

- detecting the failure to meet a valid criterion in the checking step (207) referring to pre-determined internal franking machine processes during operation of the franking machine for a first mode and steps for preventing the franking or for blocking franking machine (208) and/or steps in the statistics and error-evaluation mode (213) and display mode (215) that are executed for guaranteeing the maintenance, analysis and display of the above-mentioned first mode and branching back to the starting point s of the system routine (200) afterwards; and
- switching the franking machine to a second mode when a specific criterion is met by means of steps (201 to 206) that are executed after the starting point s of the system routine (200) and before point t before the checking step (207), comprising:

- a calling step (201) for calling current data,
- a check step (202) for checking the data by means of a decision criterion and, when the criterion is met, switching to the second mode (steps 203-206) in order to give the user of the franking machine at least a warning and a request for communication with the data central.

36. A method according to claim 35, **characterized in that**, immediately after a communication, the current data called in the calling step (201) comprise a calculated or transmitted specific piece number (S') as piece number (S) and a maximum piece number ($s_{max}$); that the comparison piece number ($s_{ref}$) for a first piece-number criterion corresponds to the calculated or transmitted maximum piece number ($S_{max}$) divided by the number k; that, when the first piece-number criterion for the second mode inquired about in the check step (202) is met, the following display step (203) comprises a constant warning for an imminent sleep mode of the franking machine function or a request for another communication with the data central before a step (205) for checking the data by means of a further piece-number criterion is reached; that, if the further piece-number criterion is not met, a setting step (206) for an automatic communication request of the franking machine is reached; that, during a communication with the data central, transaction data are transmitted individually or serially and comprise at least one MAC-secured decision criterion, which cancels the automatic communication request if the transaction has been performed with success.

37. A method according to claim 35, **characterized in that**, during a routine in the franking mode (400), there is provided a second inquiry step (410) for inquiring whether a further piece-number criterion for the remaining piece number (S) and that, when the further piece-number criterion is met, there is automatically branched to the communication mode (300).

38. A method according to claims 35 to 37, **characterized in that** the display step (203) includes a sub-step for error statistics according to the statistics and error-evaluation mode (213) and that the first inquiry step (205) for inquiring whether a further piece-number criterion is met by the remaining piece number (S) during the system routine (200) or the second inquiry step (410) for inquiring whether a further piece-number criterion is met by the remaining piece number (S) during a routine n the franking mode (400) comprises the piece number zero as a decision criterion.

39. A method according to claim 35, **characterized in that**, for a security measure, the current data called in the calling step (201) comprise the number of logged internal errors, operating errors and errors corresponding to manipulation attempts; that, when the criterion for an error overflow mode inquired about in the check step (202) is met, there is switched to a second mode with the subsequent display step (203) for a constant signalling of an exceeding of a pre-defined error number and the error number continues to be registered until the error register is reset within the framework of a communication with the data central or an inspection by the service staff.

40. A method according to claim 39, **characterized in that** the security measure in the second mode is executed apart from or instead of a sleeping-mode variant in the franking machine and that, when the inquiry criterion in the check step (202) is met, i.e. when a pre-defined number of errors is exceeded, the response time of the franking machine in the display step (203), in which that state is signalled to the operator of the franking machine, becomes slower.

41. A method according to claims 39 to 40, **characterized in that**, in the display step (203), the response time, for example the time until starting the printing operation, is increased linearly with the number of errors by delaying the program execution or calling repeatedly non-critical program parts, such as the error display.

42. A method according to claims 39 to 40, **characterized in that**, in the aforementioned display step (203), the response time is only increased by one step each time, wherein said steps may refer to seconds, minutes, hours, days, ... etc., or a progressive increase in the response time is provided in the operating program in order to make a manipulation more difficult.

43. A method according to claims 41 or 42, **characterized in that**, in modification of or in combination with the aforementioned variants, an electronic time lock is operated in the display step (203) in case of an operating error and the response time is increased with every operating error.

**44.** A method according to claim 35, **characterized in that**, when it is detected by the checking step (207) during the operation of the franking machine that a valid criterion is not met, there are detected fatal errors for a first mode in order to trigger steps for preventing the franking or for blocking the franking machine (208) and steps in the statistics and error-evaluation mode (213) and display mode (215) that are executed for ensuring that said first mode is maintained, analyzed and displayed.

**Revendications**

**1.** Procédé pour améliorer la sécurité de machines à affranchir contre manipulation, avec un microprocesseur dans une unité de commande de la machine à affranchir en vue de l'exécution d'étapes pour une routine de démarrage et d'initialisation et routine système subséquente, avec une possibilité d'entrer dans un mode de communication avec une centrale de données distante ainsi que d'autres étapes de saisie afin d'entrer dans un mode d'affranchissement, à partir duquel il est procédé au réaiguillage après exécution d'une routine de comptabilisation et d'impression dans la routine système, **caractérisé par** une distinction entre une ouverture autorisée et une ouverture non autorisée au moyen de l'unité de commande de la machine à affranchir en liaison avec des données transmises par la centrale de données et un signal détecté par l'intermédiaire du capteur (21), un ancien mot de passe (Y) étant effacé dans une étape d'effacement (210), au cas où une ouverture de la machine à affranchir est constatée par un capteur (21), et la machine à affranchir étant changer dans un premier mode, qui la met efficacement hors service lorsque le mot de passe valide (Y) fait défaut car la machine à affranchir a été ouverte de manière non autorisée, et les étapes suivantes étant effectuées en cas d'ouverture autorisée :

a) Annonce d'une ouverture autorisée de la machine à affranchir en vue d'une inspection, une requête d'ouverture étant faite après entrée dans le mode de communication (300) auprès d'une centrale de données distante et
b) Transmission d'un nouveau mot de passe (Y') à la machine à affranchir par la centrale de données en réponse à la requête d'ouverture faite, le nouveau mot de passe (Y') remplaçant l'ancien mot de passe (Y), étant donné que la machine à affranchir a été ouverte de manière autorisée.

**2.** Procédé selon la revendication 1, **caractérisé**

- **en ce que** le mot de passe (Y) est effacé à l'étape d'effacement (210) afin d'entrer dans un premier mode lorsque la machine à affranchir est ouverte,
- **en ce qu'**un nouveau mot de passe disponible (Y') est réutilisé comme mot de passe (Y) après l'initialisation (101) de la machine à affranchir, puis la présence du mot de passe valide (Y) est interrogée au cours de l'exploitation de la machine à affranchir fonctionnant dans une étape de vérification (207) destinée au contrôle,
- **en ce qu'**au cas où aucun nouveau mot de passe valide (Y') n'a été transmis, l'absence d'un mot de passe valide (Y) est constatée à l'étape de vérification (207), les étapes destinés à empêcher l'affranchissement ou à bloquer la machine à affranchir (208) et/ou des étapes en mode d'exploitation des statistiques et des erreurs (213) et mode d'affichage (215) sont parcourues afin de protéger le maintien, l'exploitation et l'affichage du premier mode susmentionné et afin de procéder ensuite de nouveau au réaiguillage jusqu'au point de départ s de la routine système (200).

**3.** Procédé selon l'une quelconque des revendications 1 à 2, **caractérisé en ce qu'**en mode de communication, des transactions sont effectuées avec des messages codés afin de charger un nouveau mot de passe (Y') et/ou d'autres données actuelles dans la machine à affranchir.

**4.** Procédé selon la revendication 3, **caractérisé en ce qu'**une transaction effectuée au cours de la communication avec des messages codés comporte une valeur de recharge d'avoir.

**5.** Procédé selon l'une quelconque des revendications 3 à 4, **caractérisé en ce qu'**une transaction effectuée au cours de la communication avec des messages codés comporte une valeur par défaut pour une valeur de recharge d'avoir, laquelle est transmise à la centrale de données distante.

**6.** Procédé selon la revendication 3, **caractérisé en ce qu'**une transaction est effectuée au cours de la communication avec un message codé afin de charger un nouveau numéro de téléphone dans la machine à affranchir en vue de la prise de contact avec la centrale de données.

**7.** Procédé selon l'une quelconque des revendications précédentes 1 à 6, **caractérisé en ce que** les données de transaction sont transmises individuellement et séquentiellement et protégées par un CODE D'AUTHENTIFICATION DE MESSAGE (MAC).

8.   Procédé selon l'une quelconque des revendications 1 à 2, **caractérisé en ce qu'**afin d'entrer dans un premier mode, lorsque la machine à affranchir est ouverte, le mot de passe (Y) est effacé à l'étape d'effacement (210), en interrompant une connexion directement ou indirectement au moyen du capteur (21), qui est couplé au dispositif détecteur (20), ladite connexion entraînant la perte du mot de passe (Y) directement et/ou indirectement par l'intermédiaire de la perte d'une autre information, sans que la machine à affranchir ne puisse être activée en vue de l'affranchissement.

9.   Procédé selon la revendication 1, **caractérisé en ce que** le changer de la machine à affranchir dans le premier mode s'effectue afin de la mettre ainsi hors service efficacement si, en cas d'exécution d'une étape d'effacement (210), le mot de passe correct fait défaut car la machine à affranchir a été ouverte, et comprend les étapes suivantes:

- Effacement du mot de passe (Y) lorsque la machine à affranchir est ouverte,
- Réutilisation d'un nouveau mot de passe disponible (Y') en tant que mot de passe (Y) après l'initialisation (101) et
- Interrogation courante d'une étape de vérification (207) destinée à vérifier la présence du mot de passe valide (Y) au cours de l'exploitation de la machine à affranchir,
- Constatation de l'absence d'un mot de passe valide (Y) à l'étape de vérification (207) au cas où aucun nouveau mot de passe valide (Y') n'a été transmis, et des étapes destinées à empêcher l'affranchissement ou à bloquer la machine à affranchir (208) et/ou des étapes en mode d'exploitation des statistiques et des erreurs (213) et mode d'affichage (215), lesquelles sont parcourues afin de protéger le maintien, l'exploitation et l'affichage du premier mode susmentionné et afin de procéder ensuite de nouveau au réaiguillage jusqu'au point de départ s de la routine système (200), ainsi que en ce qu'une autre étape est prévue en vue de vérifier la machine à affranchir dans un second mode, si un critère spécifique est rempli, des étapes (201 à 206) étant prévues qui se déroulent après le point de départ s de la routine système (200) et avant le point t avant l'étape de vérification (207), comprenant :

- une étape d'appel (201) destinée à appeler des données actuelles
- une étape de contrôle (202) destinée à vérifier les données au moyen d'un critère de décision et entrée en cas d'accomplissement du critère dans le second mode (étapes 203 à 206) afin d'émettre un avertissement et une invitation à communiquer avec la centrale de données à l'utilisateur de la machine à affranchir.

10.   Procédé selon l'une quelconque des revendications 1 à 2, **caractérisé en ce qu'**une transaction effectuée au cours de la communication avec des messages codés comprend un nombre de pièces spécifique (S') pour un mode attente en tant que second mode.

11.   Procédé selon l'une quelconque des revendications 9 à 10, **caractérisé en ce qu'**une communication est effectuée avec des messages non codés ou codés, **en ce qu'**en mode d'exploitation des statistiques et des erreurs (213), un calcul du nombre de pièces spécifique (S') est réalisé et après affichage (215) et retour au point de départ s de la routine système (200), le nombre de pièces spécifique (S') est amené à l'unité de commande de la machine à affranchir en tant que nombre de pièces (S) à l'étape d'appel (201) en vue de l'appel des données actuelles.

12.   Procédé selon la revendication 10, **caractérisé en ce que** le calcul du nombre de pièces spécifique atteignable (S') est effectué parallèlement dans la machine à affranchir et dans la centrale de données selon la même méthode.

13.   Procédé selon l'une quelconque des revendications précédentes 9 à 12, **caractérisé en ce qu'**en cas d'accomplissement du critère, lequel est interrogé à l'étape de contrôle (202), il est procédé à l'aiguillage sur l'étape d'affichage (203) qui comprend un avertissement pour le second mode, ledit avertissement étant visible pour une durée ($t_n$) et provoquant un retardement d'affranchissement.

14.   Procédé selon la revendication 13, **caractérisé en ce que** dans le second mode, un retardement d'affranchissement agit avec accroissement incrémentiel de la durée ($t_n$), une étape d'incrémentation/décrémentation (204) subséquente étant prévue en vue de l'incrémentation de la durée ($t_n$) et en vue de la décrémentation d'un nombre de pièces de référence $S_{réf}$ d'un nombre de pièces prédéfini (n), **en ce que** lors du passage suivant par la routine système (200), le nombre de pièces (S) décrémenté de manière courante pour chaque affranchissement et le nombre de pièces de référence décrémenté ($S_{réf}$) sont appelés à l'étape d'appel (201) en tant que données actuelles et sont ensuite comparés l'un avec l'autre à l'étape de contrôle (202), **en ce qu'**en cas d'accomplissement du critère, tandis que le nombre de pièces (S) est inférieur au nombre de pièces de référence ($S_{réf}$), l'étape d'affichage (203) renouvelle l'avertissement, mais est parcourue avec une durée prolongée de la durée ($t_k$) et **en ce qu'**ensuite et en cas de non accomplissement du critère susmentionné, l'étape de vérification (207) destinée à vérifier la présence du mot de passe valide (Y) est atteinte.

15. Procédé selon l'une quelconque des revendications précédentes 9 à 12, **caractérisé en ce qu'**en cas d'accomplissement du critère (202) pour le second mode, l'étape d'affichage suivante (203) comprend un avertissement, lequel est visible pour une durée ($t_n$) et un nouveau nombre de pièces de référence est généré à l'étape d'incrémentation/décrémentation (204) subséquente, tandis que le nombre de pièces maximal ($s_{max}$) est divisé par un nombre prédéfini m.

16. Procédé selon l'une quelconque des revendications 10 ou 12, **caractérisé en ce que** les données actuelles appelées à l'étape d'appel (201) comprennent, immédiatement après une communication, le nombre de pièces spécifique (S') calculé ou transmis sous forme de nombre de pièces (S) et le nombre de pièces maximal ($S_{max}$) et **en ce que** le nombre de pièces de référence ($S_{réf}$) correspond au nombre de pièces maximal ($s_{max}$) calculé ou transmis divisé par le nombre k.

17. Procédé selon l'une quelconque des revendications 9, 10, 13 et 14 ou 9, 10, 15 et 16, **caractérisé en ce qu'**une première étape d'interrogation (205) subséquente à l'étape d'incrémentation/décrémentation (204) est prévue afin d'établir que le nombre de pièces (S) est supérieur à zéro afin de procéder à l'aiguillage jusqu'à l'étape de vérification (207) en vue de la vérification de la présence du mot de passe valide (Y) et **en ce que** sinon, une étape de pose (206) destinée à la pose d'un indicateur pour une demande de communication de la machine à affranchir est atteinte.

18. Procédé selon la revendication 17, **caractérisé en ce que** l'étape d'affichage (203) pour l'affichage d'un avertissement et/ou l'étape de pose (206) pour la pose d'un indicateur pour une demande de communication comprend, en outre, une sous-étape destinée aux statistiques des erreurs ainsi qu'en ce que l'indicateur est remis, tandis qu'une communication s'effectue.

19. Procédé selon l'une quelconque des revendications précédentes 10 à 18, **caractérisé en ce que** le nombre de pièces (S') est déterminé à partir du nombre de pièces moyen ($S_o$), auquel est additionné un nombre de pièces de disposition spécifique ($S_x$), où s'applique ce qui suit :

$$S' = S_O + S_X$$

avec

$$S_O = R_{8alt} \left[ \frac{R_{2neu}}{R_{2alt}} - 1 \right]$$

ou

$$S_O = R_{4alt} \left[ \frac{R_{2neu}}{R_{2alt}} - 1 \right]$$

où la valeur de registre interrogée $R_{2alt}$ correspond à un registre ascendant et $R_{2neu}$, selon une demande par défaut, correspond à une valeur à venir du registre ascendant, ainsi que $R_{4alt}$ ou $R_{8alt}$ correspond au nombre d'impressions valides ou au nombre de toutes les impressions.

20. Procédé selon la revendication précédente 19, **caractérisé en ce que** le nombre de pièces de disposition spécifique ($S_x$) est déterminé à partir de la formule suivante :

$$S_X = \alpha_X * R_{8alt} * R_{1alt}/R_{2alt} \qquad (5)$$

ou

$$S_X = \alpha_X * R_{4alt} * R_{1alt}/R_{2alt} \qquad (6)$$

où $\alpha_x$ caractérise le classement de l'utilisateur de la machine à affranchir en tant que clients A, B ou C et les valeurs de registre interrogées $R_{1alt}$ correspondent à un registre descendant et $R_{2alt}$ au registre ascendant, ainsi que $R_{4alt}$ ou $R_{8alt}$ au nombre d'impressions valides ou au nombre de toutes les impressions.

**21.** Procédé selon l'une quelconque des revendications précédentes 10 à 20, **caractérisé en ce qu'**un compteur de mode attente particulier est fixé à un nombre de pièces spécifique calculé pour chaque communication avec la centrale de données et pour chaque affranchissement, c'est-à-dire au cours d'une routine de comptabilisation et d'impression (406), est amené à un recomptage, jusqu'à ce que le nombre de pièces atteigne zéro.

**22.** Procédé selon la revendication précédente 9, **caractérisé par** un premier mode avec une vérification pour savoir si un code valide (Y) est présent dans l'emplacement de mémoire prédéfini, la vérification du code valide (Y) étant effectuée au moyen d'un contrôle par redondance cyclique choisi à l'intérieur d'un processeur OTP (One-Time Programmable), qui contient enregistrés en interne les parties de programme correspondantes et codes MAC.

**23.** Procédé selon la revendication 22, **caractérisé en ce que** de nouvelles données clé et déroulements relevant de la sécurité sont enregistrés à l'intérieur du processeur OTP afin d'installer une protection par code MAC sur le registre postal.

**24.** Procédé selon la revendication 9, **caractérisé en ce que** la vérification pour savoir si un code valide (Y) est présent dans l'emplacement de mémoire prédéfini a lieu en effectuant la vérification du code valide (Y) au moyen d'un contrôle par redondance cyclique choisi en utilisant une clé codée, qui est classée partiellement dans différentes zones de mémoire.

**25.** Procédé selon l'une quelconque des revendications précédentes 22 à 24, **caractérisé en ce que** le blocage de la machine à affranchir a lieu en ne réalisant plus l'aiguillage sur le mode d'affranchissement (400).

**26.** Procédé selon l'une quelconque des revendications précédentes 22 à 25, **caractérisé en ce qu'**à l'étape de blocage (208), où le premier mode est atteint et où la machine à affranchir est bloquée, des registres postaux sont en partie effacés de manière prédéfinie, et ensuite le mode d'affichage (215) est atteint via l'étape pour un mode d'exploitation des statistiques et des erreurs (213), puis il est procédé au réaiguillage jusqu'à la routine système.

**27.** Procédé selon la revendication 26, **caractérisé en ce que** comme des codes MAC sont ajoutés au mot de passe enregistré (Y) ainsi qu'à chaque information dans les registres postaux relevant de la sécurité, une manipulation des données de registre est reconnue via contrôle sur les codes MAC, cette routine ayant lieu dans le cadre d'une routine de comptabilisation et d'impression (406) dans le mode d'affranchissement (400).

**28.** Procédé selon l'une quelconque des revendications précédentes 26 à 27, **caractérisé en ce que** des états de registre postal sont présents enregistrés de manière redondante et la redondance est diminuée de manière prédéfinie dans un but précis en vue de la réalisation du premier mode lors de l'effacement des états de registre postal, ladite diminution de la redondance se distingue des autres erreurs de données qui peuvent être réparées automatiquement par la machine à affranchir du fait que ce type d'erreurs ne peut pas être réparé automatiquement par la machine à affranchir, car toutes les données enregistrées de manière redondante présentent maintenant différentes erreurs qui ne peuvent plus être corrigées automatiquement.

**29.** Procédé selon l'une quelconque des revendications précédentes 26 à 28, **caractérisé en ce que** dans le cas du type d'erreurs susmentionné, une reconstruction de données est possible, étant donné que la difficulté de la manipulation est augmentée au maximum via protection par code MAC au niveau des registres postaux et la redondance diminuée dans le premier mode permet juste encore de reconstruire les états de registre, seule une personne initiée pouvant reconstruire les données selon une méthode prédéfinie, ce qui doit également se passer après chaque ouverture autorisée avant nouvelle mise en service de la machine à affranchir.

30. Procédé selon la revendication 9, **caractérisé par** de nouvelles étapes réalisables en vue de la surveillance de la vitesse de transport des pièces postales ou de la vitesse d'impression, en particulier de la vitesse de la bande dans le cas d'une imprimante à transfert thermique, afin que la tête d'impression ne puisse pas être utilisée afin de générer un cachet d'affranchissement non comptabilisé.

31. Procédé selon la revendication 30, **caractérisé en ce que** dans le cas d'une imprimante à transfert thermique, la vitesse de bande du ruban encreur, laquelle est déjà mesurée via un encodeur, est exploitée, les impulsions d'encodeur étant comptées dans un intervalle de temps, lequel est fourni par le module d'horloge/de date (8) ou est déduit à partir de la cadence système du dispositif de commande (6), la cadence système étant générée au moyen d'un générateur d'horloge commandé par quartz et le moteur (12) étant rectifié au niveau des commandes en conséquence, lorsque le nombre d'impulsions d'encodeur s'écarte d'un nombre théorique.

32. Procédé selon l'une quelconque des revendications précédentes 30 et 31, **caractérisé en ce qu'**une erreur est constatée si la différence entre prévisions et résultats est montée au-delà d'une mesure admissible et **en ce que** l'erreur est consignée et entraîne le cas échéant la mise hors service de la machine à affranchir.

33. Procédé selon l'une quelconque des revendications précédentes 30 à 32, **caractérisé en ce qu'**à l'étape de contrôle (202) destinée à la vérification du critère, il est vérifié si la vitesse d'impression est respectée ou si cette dernière s'écarte de la valeur admissible et **en ce qu'**au cas où ce critère est rempli, un avertissement correspondant apparaît dans l'affichage, lequel entraîne en fin de compte le blocage de la machine à affranchir en cas de non-respect.

34. Procédé selon l'une quelconque des revendications précédentes 9 et 30, **caractérisé en ce que** l'unité de commande de la machine à affranchir vérifie le laps de temps en cas d'impression par colonnes, par comparaison de la durée pour l'impression de chacune des colonnes, dans lesquelles on rencontre des données variables, le nombre d'impulsions d'horloge du générateur d'horloge commandé par quartz étant compté entre chacune des impulsions d'encodeur et **en ce qu'**après l'étape de vérification (207) destinée à la vérification du critère établissant si le laps de temps a été respecté ou s'il s'écarte du laps de temps admissible, une nouvelle étape de blocage (208) a lieu pour une mesure en vue du blocage de la machine à affranchir lorsque le critère est rempli.

35. Procédé selon la revendication 1, **caractérisé par**

- une constatation du non accomplissement d'un critère valide à l'étape de vérification (207) par rapport à des déroulements de machine à affranchir internes prédéfinis au cours de l'exploitation de la machine à affranchir pour un premier mode, et des étapes destinées à empêcher l'affranchissement ou à bloquer la machine à affranchir (208) et/ou des étapes en mode d'exploitation des statistiques et des erreurs (213) et mode d'affichage (215), lesquelles sont parcourues afin de protéger le maintien, l'exploitation et l'affichage du premier mode susmentionné et afin de procédé ensuite de nouveau au réaiguillage jusqu'au point de départ s de la routine système (200), et
- un transfert de la machine à affranchir dans un second mode, lorsqu'un critère spécifique est rempli, à travers des étapes (201 à 206), qui se déroulent après le point de départ s de la routine système (200) et avant le point t avant l'étape de vérification (207), comprenant:

- une étape d'appel (201) destinée à appeler des données actuelles
- une étape de contrôle (202) destinée à vérifier les données au moyen d'un critère de décision et entrée en cas d'accomplissement du critère dans le second mode (étapes 203 à 206) afin d'émettre au moins un avertissement et une invitation à communiquer avec la centrale de données à l'utilisateur de la machine à affranchir.

36. Procédé selon la revendication 35, **caractérisé en ce que** les données actuelles appelées à l'étape d'appel (201) comprennent, immédiatement après une communication, un nombre de pièces spécifique (S') calculé ou transmis en tant que nombre de pièces (S) et un nombre de pièces maximal ($s_{max}$), **en ce que** le nombre de pièces de référence ($S_{réf}$) correspond pour un premier critère de nombre de pièces au nombre de pièces maximal ($S_{max}$) calculé ou transmis divisé par le nombre k, **en ce qu'**en cas d'accomplissement du premier critère de nombre de pièces ($S_{max}$) interrogé à l'étape de contrôle (202) pour le second mode, l'étape d'affichage suivante (203) comprend un avertissement fixe pour une mise au repos imminente de la fonction des machines à affranchir ou une invitation à renouveler la communication avec la centrale de données, avant qu'une étape (205) destinée à la vérification des données au moyen d'un nouveau critère de nombre de pièces ne soit atteinte, **en ce qu'**en cas de non accomplissement du nouveau critère de nombre de pièces, une étape de pose (206) destinée à la demande de communication automatique de la machine à affranchir est atteinte et **en ce que** des données de transaction sont transmises individuellement et séquentiellement au cours d'une communication avec la centrale de données et comprennent au moins un critère de décision protégé par un code MAC, moyennant quoi la demande de communication automatique est annulée si la transaction a été réalisée avec succès.

37. Procédé selon la revendication 35, **caractérisé en ce qu'**au cours d'une routine en mode d'affranchissement (400), une seconde étape d'interrogation (410) destinée à interroger l'atteinte d'un nouveau critère de nombre de pièces pour le nombre de pièces restant (S) est prévue et en cas d'atteinte du nouveau critère de nombre de pièces, il est procédé automatiquement à l'aiguillage jusqu'au mode de communication (300).

38. Procédé selon l'une quelconque des revendications 35 à 37, **caractérisé en ce que** l'étape d'affichage (203) inclut une sous-étape destinée aux statistiques des erreurs en fonction du mode d'exploitation des statistiques et des erreurs (213) et la première étape d'interrogation (205) destinée à interroger l'atteinte d'un nouveau critère de nombre de pièces grâce au nombre de pièces restant (S) au cours de la routine système (200) ou la seconde étape d'interrogation (410) destinée à interroger l'atteinte d'un nouveau critère de nombre de pièces grâce au nombre de pièces restant (S) au cours d'une routine en mode d'affranchissement (400) comprend le nombre de pièces zéro en tant que critère de décision.

39. Procédé selon la revendication 35, **caractérisé en ce que** par mesure de précaution, les données actuelles appelées à l'étape d'appel (201) comprennent le nombre d'erreurs internes, d'erreurs de commande et d'erreurs correspondant à des tentatives de manipulation consignées et **en ce qu'**en cas d'accomplissement du critère interrogé à l'étape de contrôle (202) pour un mode de dépassement des capacités d'erreurs, l'entrée a lieu dans un second mode avec l'étape d'affichage suivante (203) pour une signalisation fixe d'un dépassement d'un nombre d'erreurs prédéfini et le nombre d'erreurs est encore consigné jusqu'à ce qu'une réinitialisation des registres d'erreurs soit effectuée dans le cadre d'une communication avec la centrale de données ou d'une inspection via une messagerie transactionnelle.

40. Procédé selon la revendication 39, **caractérisé en ce que** dans la machine à affranchir, la mesure de précaution est appliquée dans le second mode en plus ou à la place d'une variante de mode attente et **en ce qu'**en cas d'accomplissement du critère d'interrogation à l'étape de contrôle (202), c'est-à-dire en cas de dépassement d'un nombre prédéfini d'erreurs, la durée de réaction de la machine à affranchir ralentit à l'étape d'affichage (203), dans laquelle cet état est notifié à l'opérateur de la machine à affranchir.

41. Procédé selon l'une quelconque des revendications 39 à 40, **caractérisé en ce qu'**à l'étape d'affichage (203), la durée de réaction, par exemple la durée jusqu'au début de l'opération d'impression, augmente de manière linéaire avec le nombre d'erreurs, tandis que l'exécution du programme est retardée ou des parties de programme non critiques, telles que par exemple l'affichage d'erreurs, sont appelées de façon répétée.

42. Procédé selon l'une quelconque des revendications 39 à 40, **caractérisé en ce qu'**à l'étape d'affichage susmentionné (203), la durée de réaction augmente à chaque fois d'un palier, les paliers pouvant concerner des secondes, des minutes, des jours,... etc., ou un accroissement progressif de la durée de réaction étant prévu dans le logiciel d'exploitation afin de rendre une manipulation plus difficile.

43. Procédé selon l'une quelconque des revendications 41 ou 42, **caractérisé en ce qu'**à l'étape d'affichage (203), une serrure à minuterie électronique est actionnée lors d'une erreur de manoeuvre en modification ou en combinaison avec des variantes susmentionnées et un accroissement de la durée de réaction est prévu pour chaque erreur de manoeuvre.

44. Procédé selon la revendication 35, **caractérisé en ce que** dans la machine à affranchir, lors de la constatation du non accomplissement d'un critère valide à l'étape de vérification (207) au cours de l'exploitation de la machine à affranchir pour un premier mode, des erreurs graves sont constatées afin de déclencher des étapes destinées à empêcher l'affranchissement ou à bloquer la machine à affranchir (208) et des étapes en mode d'exploitation des statistiques et des erreurs (213) et mode d'affichage (215), lesquelles sont parcourues afin de protéger le maintien, l'exploitation et l'affichage du premier mode susmentionné.

**Fig. 1a**

**Fig. 1c**

| 21 SENSOR | 20 | | 5 NVM | $B_1$ | C | G |
|---|---|---|---|---|---|---|

**Fig. 1b**

**Fig. 7**

Start /100

Sensor! /21

Startroutine, Initialisierung /101

Löschen des
alten Code Y /210

setze Y'auf die Adresse von Y /102-105

◆s (Systemroutine 200)

Aufruf aktueller
Daten /201

/203-206

n
202 ── Kriterium erfüllt ? ── j ── Anzeige/Warnung
Sleeping-Modus

◆t

207\
j ── Gültiger Code Y ?
Registercheck OK ? ── n ── Kill-Modus
Sperren der FM /208

◆e

Anzeige

301── Kommunikationsersuchen ?
n ── j
310 (Kommunikations-)
(modus 300 )

Kommunikations-bzw.Öffnungsersuchen Ja! Einleiten einer Kommunikation mit Datenzentrale.
Transaktionen durchführen. Guthaben-u.a.Daten
nachladen. Neuen Code Y'laden.

◆f

(Betriebsmodus 290) n ── Daten übermittelt ? ── j

212\
j ── Testanforderung ? ── n

\211

214\
n ── Registercheck ? ── j

/213
Statistik- und Fehlerauswertungsmodus

216\
Testmodus

◆d /400
Frankiermodus

Anzeigemodus /215

**Fig. 2a**

**Fig. 2b**

Ablauf in
d. Daten-
Zentrale

FM-Betriebsmodus
zum                vom                    /310
f◆ ↑                ↓ e◆                [ Anzeige ]

/501
j [ Anruf erhalten ? ] n        301\
                                n [ Transaktionsersuchen ? ] j

513- [ Fehlermeldung,
Verbindung lösen          302\
Registerdaten          [ ID-Nr. und Parameter-Eingabe ]
speichern,
Suspiciousmode ]       j [ Eingabe + MODEM  o.K.? ] n
                                              \303
/502
[ Verbindungsaufbau ]        [ Verbindungsaufbau ]
                                              -304
a◆                          305\        ◆b
n [ Verbindung gelöst ? ] j   j [ Komm.Fehler ? ] n
                              n [ n Wiederholungen ? ] j
                                              /306
                              j [ Verbindung aufgebaut ?
                                  weitere Transaktion ? ] n
/504
[ FM identifizieren und     [ Identifikations-,Vorspann-  307
Vorspann prüfen ]             Meldung, Reg.-Daten senden ] /

j [ Daten fehlerfrei ? ] n   j [ Komm.Fehler ? ] n
505-                                          /309
[ Tel.Nr. und/oder OK-       [ Vorspann gesendet   ?
Meldung senden ]               OK-Meldung erhalten ? ] n
506/                          j
                              312\          /311
                       [ Telefon-Nr.   [ Telefon-Nr.
                         speichern ] j   ändern ? ] n

↓ ↑ ↓  ↓ ↑
◆ ◆ ◆  ◆ ◆
h i k  l m

**Fig. 3a**

43

h  i  k  l  m

/510

Fehlerbehandlung
letzte Transaktion stornieren

507\

j    Vorspann-Ende ?    n

508\

j    Beginn-Meldung er-    ◄ — — —    Beginn-Meldung
halten, Daten OK ?    verschlüsselt senden    /313

509\

j    Fehler behebbar ?    n    j    Komm.Fehler ?    n    /314

/511    /315

Transaktion durchführen    - - ►    Transaktionsdaten empfangen

/512    j    Daten fehlerfrei ?    n
316-

Ende-Meldung    - - - ►    Ende-Meldung erhalten    -317
verschüsselt senden

Transaktion durchführen    -318

a ◆——◄    ►——◆ b

**Fig. 3b**

◆s                    d◆

401 - | Eingaberoutine |

402 - | Anzeigeroutine |

403 - | Druckdatenaufbereitung |

n                                    j
404 - | Eingabeanforderung ? |

j                                    n
405 - | Druckausgabeanforderung ? |

406 - | Abrechnungs- und Druckroutine |

$\searrow$ 400

**Fig. 4a**

◆s (Systemroutine 200)

| Aufruf aktueller Daten S, $S_{ref}$ | /201

n                                    j
202 - | S < $S_{ref}$ ? |

/203
| Anzeige/Warnung "TELESET" Verzögerung $t_n$ |

| $t_n := t_n + t_k$ <br> $S_{ref} := S_{ref} - n$ | 204

◆t

**Fig. 5**

**Fig. 4b**

◆s (Systemroutine 200)

Aufruf aktueller
Daten  S, S$_{max}$  /201

/203

S < S$_{max}$/k ?  →j  Anzeige/Warnung
"CALL FP"

n
202

205
S > 0 ?  →n

j

S$_{max}$ := $\dfrac{S_{max}}{m}$  /204

Flag setzen  /206

◆t

207
j  Gültiger Code Y ?
Registercheck OK ?  →n  Kill-Modus
Sperren der FM  /208

◆e

Anzeige  310

301  Kommunikationsersuchen ?  →  (Kommunikations-)
n    j  (modus 300    )

Kommunikations-bzw.Öffnungsersuchen Ja! Einleiten einer Kommunikation mit Datenzentrale.
Transaktionen durchführen. Guthaben-u.a.Daten
nachladen. Neuen Code Y'laden.

◆f

(Betriebsmodus 290) n  Daten übermittelt ?  →j

212  n
j  Testanforderung ?  →  211

214
n  Registercheck ?  j  /213
St.+F-Auswertungsmodus
reset Stückzähler

216  ◆d /400

Testmodus  Frankiermodus  Anzeigemodus  /215

**Fig. 6**